(19) 

Europäisches
Patentamt
European
Patent Office
Office européen
des brevets

(11) **EP 4 578 901 A1**

(12) **EUROPEAN PATENT APPLICATION**
published in accordance with Art. 153(4) EPC

(43) Date of publication:
**02.07.2025 Bulletin 2025/27**

(21) Application number: **23874869.3**

(22) Date of filing: **03.10.2023**

(51) International Patent Classification (IPC):
***C08J 9/16*** (2006.01)    ***C08J 9/18*** (2006.01)

(52) Cooperative Patent Classification (CPC):
**C08J 9/16; C08J 9/18**

(86) International application number:
**PCT/JP2023/036097**

(87) International publication number:
**WO 2024/075742 (11.04.2024 Gazette 2024/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 07.10.2022  JP 2022162720
          21.10.2022  JP 2022169026
          14.02.2023  JP 2023021114
          05.04.2023  JP 2023061453
          12.09.2023  JP 2023147626

(71) Applicant: **JSP Corporation
Tokyo 100-0005 (JP)**

(72) Inventors:
• **KITAHARA Taizo
Yokkaichi-shi, Mie 510-0881 (JP)**
• **CHIBA Takuya
Yokkaichi-shi, Mie 510-0881 (JP)**

(74) Representative: **Kramer Barske Schmidtchen
Patentanwälte PartG mbB
European Patent Attorneys
Landsberger Strasse 300
80687 München (DE)**

(54) **POLYPROPYLENE-BASED RESIN FOAMED PARTICLES AND METHOD FOR MANUFACTURING SAME**

(57)    A polypropylene-based resin expanded bead (1) includes a foamed layer constituted by a polypropylene-based resin composition. The polypropylene-based resin composition constituting the foamed layer contains a polypropylene-based resin and rubbery bodies (G) containing an ethylene propylene-based rubber. The rubbery bodies are dispersed in the polypropylene-based resin. A melting point Tm of the expanded bead (1) is 130°C or higher and 162°C or lower.

FIG. 4

EP 4 578 901 A1

**Description**

TECHNICAL FIELD

The present invention relates to a polypropylene-based resin expanded bead and a method for producing the same.

BACKGROUND ART

Polypropylene-based resin expanded beads molded articles are lightweight and excellent in rigidity, compression properties, and the like, and hence are used for various applications such as packaging materials, containers, and shock absorbers. The polypropylene-based resin expanded beads molded articles are produced, for example, by a method called an in-mold molding process in which polypropylene-based resin expanded beads are filled in a mold and heated with steam. In the in-mold molding process, upon supplying steam into the mold to heat the expanded beads, the expanded beads are softened and also the expanded beads are secondarily expanded. As a result, the expanded beads in the mold are mutually fusion bonded, and a molded article having a desired shape corresponding to the shape of the cavity in the mold can be obtained.

Incidentally, in recent years, recycled materials such as post-consumer materials have attracted attention from the viewpoint of reducing environmental impact. As a recycled material containing a polypropylene-based resin, for example, polypropylene-based resin members recovered from waste home electric appliances, end-of-life automobiles and the like; and automobile shredder residue (hereinafter referred to as "ASR") generated in the process of automobile scrapping as described in Patent Literature 1.

PRIOR ART LITERATURE

Patent Literature

Patent Literature 1: JP 2018-122299 A

SUMMARY OF INVENTION

PROBLEMS TO BE SOLVED BY INVENTION

The polypropylene-based resin composition derived from the above-mentioned recycled materials usually contains an ethylene propylene-based rubber. The expanded beads produced by using the polypropylene-based resin composition containing the ethylene propylene-based rubber had room for improvement in in-mold moldability during in-mold molding.

The present invention has been made in view of such a background, and an object of the present invention is to provide a polypropylene-based resin expanded bead having good in-mold moldability even when the ethylene propylene-based rubber is contained, and a method for producing the polypropylene-based resin expanded beads.

MEANS FOR SOLVING PROBLEM

One aspect of the present invention is a polypropylene-based resin expanded bead according to [1] to [6] set forth below.

[1] A polypropylene-based resin expanded bead including a foamed layer constituted by a polypropylene-based resin composition,

wherein the polypropylene-based resin composition contains a polypropylene-based resin and rubbery bodies containing an ethylene propylene-based rubber,
the rubbery bodies are dispersed in the polypropylene-based resin, and
a melting point Tm of the expanded bead is 130°C or higher and 162°C or lower.

[2] The polypropylene-based resin expanded bead according to [1], wherein an amount of an acetone-insoluble fraction contained in an n-decane extract of the expanded bead is 0.02 g or more and 0.10 g or less per 1 g of the expanded beads,

a melting point Tm of the expanded bead is 140°C or higher and 162°C or lower, and
a difference Tm-Tc between the melting point Tm of the expanded bead and a crystallization temperature Tc of the expanded bead is 38°C or less.

[3] The polypropylene-based resin expanded bead according to [1] or [2], wherein the rubbery bodies have an average diameter of 0.1 $\mu$m or more and 2 $\mu$m or less.

[4] The polypropylene-based resin expanded bead according to any one of [1] to [3], wherein the polypropylene-based resin composition constituting the foamed layer contains: a polypropylene-based resin derived from recycled polypropylene; and an ethylene propylene-based rubber.

[5] The polypropylene-based resin expanded bead according to any one of [1] to [4], wherein the polypropylene-based resin composition constituting the foamed layer has a flexural modulus of 800 MPa or more and 1300 MPa or less.

[6] The polypropylene-based resin expanded bead according to any one of [1] to [5], wherein the expanded bead has a crystal structure such that a first endothermic peak Pa having a largest peak area and a second endothermic peak Pb next to the first endothermic peak Pa on a higher temperature side of the first endothermic peak Pa appear on a DSC curve obtained when the expanded bead is heated from 23°C to 200°C at a heating rate of 10°C/min,

a closed cell content of the expanded beads is 85% or more,
a vertex temperature Tb of the second endothermic peak Pb is 158°C or higher,
a difference Tb-Ta between the vertex temperature Tb of the second endothermic peak Pb and a vertex temperature Ta of the first endothermic peak Pa is 15°C or more and 30°C or less, and
a ratio hb/ha of a peak height hb of the second endothermic peak Pb to a peak height ha of the first endothermic peak Pa is 1.2 or more and 2.8 or less.

Another aspect of the present invention is a method for producing polypropylene-based resin expanded beads according to [7] to [15] set forth below.

[7] A method for producing polypropylene-based resin expanded beads, in which polypropylene-based resin particles each having a core layer are expanded to obtain polypropylene-based resin expanded beads each having a foamed layer,

wherein the core layer is formed of a molten mixture of a polypropylene-based resin composition containing an ethylene propylene-based rubber and having a melting point of 160°C or higher and a polypropylene-based resin having a melting point of 125°C or higher and lower than 160°C, and
a mass ratio between the polypropylene-based resin composition and the polypropylene-based resin in the core layer is the polypropylene-based resin composition : the polypropylene-based resin = 2 : 98 to 70 : 30.

[8] The method for producing polypropylene-based resin expanded beads according to [7], wherein the polypropylene-based resin has a melting point of 130°C or higher and lower than 160°C.

[9] The method for producing polypropylene-based resin expanded beads according to [7] or [8], wherein the polypropylene-based resin composition is impact polypropylene.

[10] The method for producing polypropylene-based resin expanded beads according to any one of [7] to [9], wherein a difference $Tm_I$-$Tm_B$ between a melting point $Tm_I$ of the polypropylene-based resin composition and a melting point $Tm_B$ of the polypropylene-based resin is 5°C or more and 35°C or less.

[11] The method for producing polypropylene-based resin expanded beads according to any one of [7] to [10], wherein the polypropylene-based resin composition has a melt mass flow rate $MFR_I$ of 3 g/10 min or more and 40 g/10 min or less as measured under conditions of a temperature of 230°C and a load of 2.16 kg.

[12] The method for producing polypropylene-based resin expanded beads according to any one of [7] to [11], wherein the polypropylene-based resin composition has a flexural modulus of 800 MPa or more and 1200 MPa or less.

[13] The method for producing polypropylene-based resin expanded beads according to any one of [7] to [12], wherein the polypropylene-based resin composition contains: a polypropylene-based resin derived from recycled polypropylene; and an ethylene propylene-based rubber.

[14] The method for producing polypropylene-based resin expanded beads according to any one of [7] to [13], wherein the resin particles impregnated with a blowing agent, which are dispersed in an aqueous medium in a container, are released together with the aqueous medium from the container to a lower pressure atmosphere than a pressure in the container, thereby foaming the resin particles to obtain the expanded beads.

[15] The method for producing polypropylene-based resin expanded beads according to any one of [7] to [14], wherein a difference $Tm_I-Tm_B$ between a melting point $Tm_I$ of the polypropylene-based resin composition and a melting point $Tm_B$ of the polypropylene-based resin is 5°C or more and 35°C or less,

a melt mass flow rate $MFR_I$ of the polypropylene-based resin composition is 3 g/10 min or more as measured under conditions of a temperature of 230°C and a load of 2.16 kg,
a melt mass flow rate $MFR_B$ of the polypropylene-based resin is 3 g/10 min or more and 10 g/10 min or less as measured under conditions of a temperature of 230°C and a load of 2.16 kg, and
a ratio $MFR_I/MFR_B$ of the melt mass flow rate $MFR_I$ of the polypropylene-based resin composition to the melt mass flow rate $MFR_B$ of the polypropylene-based resin is 0.3 or more and 8 or less.

EFFECTS OF INVENTION

According to the aspects described above, there can be provided polypropylene-based resin expanded beads (hereinafter, referred to as "expanded beads") having good in-mold moldability even when an ethylene propylene-based rubber is contained; and a method for producing the polypropylene-based resin expanded beads.

BRIEF DESCRIPTION OF DRAWINGS

Fig. 1 is an explanatory diagram illustrating a method for calculating a heat of fusion of a high-temperature peak.
Fig. 2 is an explanatory diagram illustrating a method for calculating a peak height and a full width at half maximum of each endothermic peak on a DSC curve.
Fig. 3 is an electron micrograph showing the morphology of a polypropylene-based resin composition A1-1 in Examples.
Fig. 4 is an electron micrograph showing the morphology of an expanded bead of Example 1-4.
Fig. 5 is an electron micrograph showing the morphology of a resin particle of Example 1-4.

MODE FOR CARRYING OUT INVENTION

(Polypropylene-based resin expanded beads)

The polypropylene-based resin composition constituting a foamed layer in the expanded bead contains a polypropylene-based resin and rubbery bodies each containing the ethylene propylene-based rubber. The details of the polypropylene-based resin composition constituting the foamed layer will be described later.

[Melting point]

The expanded bead has a melting point Tm of 130°C or higher and 162°C or lower. By setting the melting point Tm of the expanded bead within the specific range mentioned above, the in-mold moldability of the expanded beads can be improved.
In the case where the melting point Tm of the expanded bead is excessively low, the compression properties of a polypropylene-based resin expanded beads molded article (hereinafter, referred to as "expanded beads molded article" or "molded article") that is made by in-mold molding of the expanded beads may be deteriorated. Moreover, in this case, the change in stress may be increased when the compressive strain applied to the molded article increases. From the viewpoint of more easily improving the compression properties of the molded article, the melting point Tm of the expanded bead is preferably 135°C or higher, more preferably 140°C or higher, still more preferably 143°C or higher, particularly preferably 146°C or higher, and most preferably 150°C or higher.
When the melting point Tm of the expanded bead is excessively high, the in-mold moldability may be deteriorated. From the viewpoint of more easily obtaining an expanded bead with good in-mold moldability, the melting point Tm of the expanded bead is preferably 160°C or lower, and more preferably 158°C or lower.
In configuring the preferable range of the melting point Tm of the expanded bead, the upper and lower limits of the melting point Tm of the expanded bead described above can be arbitrarily combined. For example, the preferable range of the melting point Tm of the expanded bead may be 135°C or higher and 160°C or lower, 140°C or higher and 158°C or lower, 143°C or higher and 158°C or lower, 146°C or higher and 158°C or lower, or 150°C or higher and 162°C or lower.
The melting point Tm of the expanded bead is determined in accordance with JIS K7121-1987. Specifically, first, a test piece made of the expanded bead is prepared, and the test piece is conditioned in accordance with "(2) The case of measurement of melting temperature after a definite heat treatment" of "3. Conditioning of test piece" in JIS K7121-1987.

The heating rate and the cooling rate during conditioning are both set to 10°C/min. The conditioned test piece is heated from 30°C to 230°C at a heating rate of 10°C/min to obtain a DSC curve, and the vertex temperature of the melting peak appearing on the DSC curve is taken as the melting point Tm of the expanded bead. Note that the flow rate of nitrogen gas in the measurement environment is 30 mL per minute. When a plurality of melting peaks appears on the DSC curve, the vertex temperature of the melting peak of which the height is the highest when setting the baseline as a reference, is taken as the melting point Tm of the expanded bead.

[Acetone-insoluble fraction in n-decane extract]

The amount of the acetone-insoluble fraction (hereinafter, the acetone-insoluble fraction is referred to as "$D_{sol}$-$A_{insol}$ in expanded beads") contained in the n-decane extract of the expanded bead is preferably 0.02 g or more and 0.10 g or less per 1 g of the expanded beads. The $D_{sol}$-$A_{insol}$ in the expanded beads is mainly composed of an ethylene propylene-based rubber. By setting the amount of $D_{sol}$-$A_{insol}$ in the expanded beads within the specific range mentioned above, the in-mold moldability of the expanded beads can be further improved. Also, by in-mold molding of such expanded beads, the shock absorption performance of the molded article can be further improved. This may be because the expanded beads containing $D_{sol}$-$A_{insol}$ in an amount within the specific range mentioned above can lessen stress variation associated with an increase in compressive strain, which may be due to the reason that the stress of the molded article is prevented from excessive increase when a high compressive strain is applied. Note that as described later, the n-decane extract is prepared by heating the expanded beads in n-decane at 145°C and then cooling them to 23°C.

From the viewpoint of further enhancing the shock absorption performance of the molded article, the amount of $D_{sol}$-$A_{insol}$ in the expanded beads is more preferably 0.03 g or more, still more preferably 0.04 g or more per 1 g of the expanded beads.

In contrast, in the case where the amount of $D_{sol}$-$A_{insol}$ in the expanded beads is too large, the in-mold moldability of the expanded beads may be deteriorated. From the viewpoint of more reliably avoiding the deterioration of the in-mold moldability of the expanded beads, the amount of $D_{sol}$-$A_{insol}$ in the expanded beads is more preferably 0.09 g or less, still more preferably 0.08 g or less, and particularly preferably 0.07 g or less per 1 g of the expanded beads. Note that examples of the methods for adjusting the amount of $D_{sol}$-$A_{insol}$ in the expanded beads within the specific range mentioned above include adjusting the amount of the ethylene propylene-based rubber contained in the resin raw material and/or the blending ratio of the resin raw material containing the ethylene propylene-based rubber in the course of producing the expanded beads.

In configuring a preferable range of the amount of $D_{sol}$-$A_{insol}$ in the expanded beads, the upper limit and the lower limit of the amount of $D_{sol}$-$A_{insol}$ described above can be arbitrarily combined. For example, a preferable range of the amount of $D_{sol}$-$A_{insol}$ in the expanded beads may be 0.03 g or more and 0.09 g or less, 0.04 g or more and 0.08 g or less, or 0.04 g or more and 0.07 g or less per 1 g of the expanded beads.

The method for measuring the amount of $D_{sol}$-$A_{insol}$ in the expanded beads is as follows. First, the expanded beads are heated in n-decane at 145°C and then cooled to 23°C to prepare an n-decane extract. More specifically, the expanded beads are added to n-decane and heated to a temperature of 145°C to dissolve the n-decane-soluble fraction in the expanded beads in n-decane. This n-decane solution is cooled to 23°C, and then components insoluble in n-decane at 23°C that precipitate in the n-decane solution are removed to obtain an n-decane extract containing the n-decane-soluble fraction. This n-decane extract is added to acetone to precipitate the acetone-insoluble fraction (i.e., $D_{sol}$-$A_{insol}$ in the expanded beads) in the n-decane extract. The amount of $D_{sol}$-$A_{insol}$ contained per 1 g of the expanded beads can be calculated based on the mass of the precipitate obtained and the mass of the expanded beads used in the measurement. A more detailed method of measuring the amount of $D_{sol}$-$A_{insol}$ in the expanded beads will be described in detail in Examples.

[Difference Tm-Tc between melting point Tm and crystallization temperature Tc]

The difference Tm-Tc between the melting point Tm of the expanded bead and the crystallization temperature Tc of the expanded bead is preferably 38°C or less. In the past, when expanded beads containing the ethylene propylene-based rubber are molded in a mold, a molded article immediately after completion of the in-mold molding is likely to locally shrink, and it has tended to be difficult to stably obtain a molded article having an intended shape. In contrast, by setting the difference Tm-Tc between the melting point Tm and the crystallization temperature Tc within the specific range mentioned above, even if the expanded beads contain the ethylene propylene-based rubber, the local shrinkage of the molded article after in-mold molding can be curtailed more effectively, thus a molded article with an intended shape can be more easily obtained. Note that the lower limit of the difference Tm-Tc in the expanded bead is usually 30°C. The lower limit of the difference Tm-Tc is preferably 32°C.

The crystallization temperature Tc of the expanded bead is measured using a heat flux differential scanning calorimeter in accordance with JIS K7121-1987. More specifically, first, the expanded beads are heated from 23°C to 230°C at a heating rate of 10°C/min. Subsequently, the temperature of 230°C is maintained for 10 minutes and is lowered to 30°C at a cooling rate of 10°C/min to obtain a DSC curve. The vertex temperature of the crystallization peak in this DSC curve is taken as the crystallization temperature Tc of the expanded bead. Note that the flow rate of nitrogen gas in the measurement environment is 30 mL per minute. When a plurality of crystallization peaks appears on the DSC curve, the vertex temperature of the crystallization peak with the highest peak height is taken as the crystallization temperature Tc of the expanded bead.

[Polypropylene-based resin composition]

The foamed layer of the expanded bead is constituted of a polypropylene-based resin composition (hereinafter, also referred to as a "resin composition") containing the rubbery bodies and a polypropylene-based resin. In the present specification, the polypropylene-based resin composition refers to a resin composition containing a polypropylene-based resin as a main component. More specifically, the mass ratio of the polypropylene-based resin in the resin composition is preferably 50 mass% or more, more preferably 60 mass% or more, still more preferably 70 mass% or more, and particularly preferably 80 mass% or more.

In the present specification, the polypropylene-based resin refers to a homopolymer of a propylene monomer (i.e., propylene homopolymer), a propylene-based copolymer containing 70 mass% or more of a structural unit derived from propylene, and a mixture of a propylene homopolymer and the propylene-based copolymer. Examples of the propylene-based copolymer include copolymers of propylene with ethylene and/or an $\alpha$-olefin having 4 or more carbon atoms. The propylene-based copolymer may be a random copolymer or a block copolymer. In the propylene-based copolymer, the sum of the amount of the structural unit derived from ethylene and the amount of the structural units derived from an $\alpha$-olefin having 4 or more carbon atoms is preferably 1 mass% or more and 15 mass% or less, and more preferably 2 mass% or more and 12 mass% or less. Note that the polypropylene-based resin and an elastomer such as ethylene propylene-based rubber are different substances from each other, and in this regard, the polypropylene-based resin is distinguished from the polypropylene-based resin composition such as impact polypropylene, because the composition contains the ethylene propylene-based rubber.

The rubbery bodies contain an ethylene propylene-based rubber. In the present specification, the ethylene propylene-based rubber means a rubbery substance composed of an ethylene propylene-based copolymer containing an ethylene component and a propylene component. That is, the ethylene propylene-based rubber may be a copolymer of ethylene and propylene (i.e., EPM). The ethylene propylene-based rubber may be an ethylene propylene-based copolymer (e.g., EPDM) containing a component such as diene, derived from a monomer other than ethylene and propylene to the extent that the above-described functions and effects are not impaired. In the ethylene propylene-based rubber, the mass ratio between the component derived from ethylene and the component derived from propylene (components derived from ethylene : components derived from propylene) is usually from 30 : 70 to 80 : 20.

The rubbery bodies are present as dispersions in the polypropylene-based resin. Specifically, the rubbery bodies exist as domains (i.e., a dispersed phase) dispersed in a matrix (i.e., a continuous phase) made of a polypropylene-based resin. That is, the foamed layer of the expanded bead has a morphology with a matrix of the polypropylene-based resin and domains of the rubbery bodies. Note that the rubbery bodies may contain a polyethylene-based resin in addition to the ethylene propylene-based rubber. The existence form of the rubbery bodies in the foamed layer can be confirmed by observing the morphology of the cross section of the expanded beads as described below.

The method for observing the morphology of the expanded bead is as follows. First, an observation sample is cut out from the vicinity of the central part of the expanded bead. Next, this observation sample is embedded in an epoxy resin and electron staining is carried out with ruthenium tetroxide, thereafter a section is prepared from the sample using an ultramicrotome or the like. This section is placed on a grid of a transmission electron microscope (e.g., "JEM-1040 Flash" manufactured by JEOL Ltd.), observed at a predetermined magnification (e.g., magnification of 5,000x), and a cross-sectional photograph (i.e., a TEM photograph) of the expanded bead is taken. From the cross-sectional photograph, the morphology of the polypropylene-based resin phase and the phase of rubbery body containing the ethylene propylene-based rubber in the foamed layer is visually observed.

From the viewpoint of ensuring stable enhancement of the in-mold moldability of the expanded beads, the average diameter of the rubbery bodies dispersed in the polypropylene-based resin and containing the ethylene propylene-based rubber is preferably 0.1 $\mu$m or more and 2 $\mu$m or less, more preferably 0.3 $\mu$m or more and 1.5 $\mu$m or less, and still more preferably 0.5 $\mu$m or more and 1 $\mu$m or less. The average diameter of the rubbery bodies is calculated based on the TEM photograph. Specifically, the longest diameter and the shortest diameter of each of 50 or more domains randomly selected from among the domains (i.e., the phase of the rubbery bodies) appearing in the TEM photograph are measured, and their arithmetic mean is calculated. The arithmetic mean value of the longest diameters and the shortest diameters thus obtained is taken as the average diameter of the rubbery bodies containing the ethylene propylene-based rubber.

The polypropylene-based resin composition constituting the foamed layer is preferably a molten mixture of impact polypropylene and a polypropylene-based resin, more preferably a molten mixture of impact polypropylene having a melting point of 160°C or higher and a polypropylene-based resin having a melting point of 125°C or higher and lower than 160°C, and still more preferably a molten mixture of impact polypropylene having a melting point of 160°C or higher and a polypropylene-based resin having a melting point of 130°C or higher and lower than 160°C. By forming a foamed layer with such a molten mixture, an expanded bead having good in-mold moldability can be stably obtained. Moreover, by in-mold molding of such expanded beads, a molded article exhibiting a small change in stress in association with increase in compressive strain can be more stably obtained.

Note that impact polypropylene is a polypropylene-based resin composition in which rubbery bodies containing the ethylene propylene-based rubber are dispersed in a polypropylene-based resin. Examples of the impact polypropylene include those that are commercially available and used as a polypropylene-based resin composition for forming vehicle members. Impact polypropylene includes a multistage polymer produced through multistage polymerization by copolymerizing ethylene and propylene in the presence of a propylene polymer, and a mixture produced by melt-mixing a polypropylene-based resin and the ethylene propylene-based rubber.

From the viewpoints of more easily obtaining the above-described functions and effects, effective use of resources, and material recycling, the polypropylene-based resin composition constituting the foamed layer preferably contains a polypropylene-based resin derived from recycled polypropylene, and more preferably contains a polypropylene-based resin derived from recycled polypropylene and the ethylene propylene-based rubber. Hereinafter, the polypropylene-based resin composition containing a polypropylene-based resin derived from recycled polypropylene and the ethylene propylene-based rubber is also referred to as "resin composition A".

Examples of the recycled polypropylene include a polypropylene-based resin composition derived from a pre-consumer material and a polypropylene-based resin composition derived from a post-consumer material. The recycled polypropylene preferably contains the ethylene propylene-based rubber derived from a post-consumer material.

In the present specification, the post-consumer material means "Material discharged from the household or material generated as a product which is no longer usable for its original purpose from commercial, industrial and other facilities as end users of the product." described in JIS Q14021:2000. Post-consumer materials also include materials returned from distribution channels.

More specifically, the post-consumer material includes, for example, a post-consumer material derived from an automobile member, a post-consumer material derived from a home appliance, and the like. Examples of the post-consumer material derived from an automobile member include exterior materials such as bumpers and interior materials such as instrument panels, detached from end-of-life automobiles, and ASR (i.e., automobile shredder residue) generated in the process of automobile scrapping. The resin composition A containing the ethylene propylene-based rubber is recovered from such post-consumer materials. The main component of the resin composition A is preferably impact polypropylene in which rubbery bodies containing the ethylene propylene-based rubber are dispersed in a polypropylene-based resin. The melting point of the polypropylene-based resin contained in the impact polypropylene is preferably 160°C or higher.

From the viewpoint of effective use of resources and material recycling, the main component of the resin composition A is preferably a polypropylene-based resin composition a (hereinafter, referred to as "resin composition a") derived from an automobile member. More specifically, the mass ratio of the resin composition a derived from an automobile member in the resin composition A is preferably 50 mass% or more, and more preferably 60 mass% or more. The main component of the resin composition A is more preferably a polypropylene-based resin composition a1 (hereinafter, referred to as "resin composition a1") recovered from ASR. More specifically, the mass ratio of resin composition a1 recovered from ASR in the resin composition A is preferably 50 mass% or more, and more preferably 60 mass% or more.

The resin composition a1 recovered from ASR contains, as a main component, a polypropylene-based resin that has undergone thermal history due to molding processing for molding an automobile member. The resin composition a1 recovered from ASR usually also contains polypropylene-based resins recovered from numerous automobile members and numerous end-of-life automobiles. For these reasons, it has been traditionally considered difficult to use the resin composition a1 recovered from ASR in the production of expanded beads. In contrast, the amount of $D_{sol}$-$A_{insol}$ in the expanded beads, the melting point Tm, and the difference Tm-Tc between the melting point Tm and the crystallization temperature Tc each fall within the specific ranges mentioned above, so that the in-mold moldability of the expanded beads can be improved even when the resin composition a1 recovered from ASR is used as a raw material of the expanded bead. In addition, by performing in-mold molding using such expanded beads, a molded article that is low in an increase rate of compressive stress in association with increase in compressive strain can be easily obtained.

Note that the main component of the polypropylene-based resin composition a is a polypropylene-based resin. The mass ratio of the polypropylene-based resin in the polypropylene-based resin composition a is preferably 50 mass% or more, more preferably 60 mass% or more, and still more preferably 70 mass% or more.

The term "ASR" as used herein refers to "automobile shredder residue" defined in Article 2 (5) of the "Act on Recycling, etc. of End-of-Life Vehicles", Act No. 87 of 2002. More specifically, ASR means residue that is obtained by shredding dismantled vehicles that remain after removing recyclable parts such as an engine, a battery, and so on from the end-of-life vehicles, and separating and recovering metals and other useful substances therefrom. ASR usually contains, in addition to polypropylene-based resins derived from automobile members, plastics other than polypropylene-based resins, such as polystyrene (PS) and acrylonitrile-butadiene-styrene resin (ABS), rubber, various metals, and the like. The method for recovering the resin composition a1 from ASR is not particularly limited, and known separation methods may be appropriately combined to recover the resin composition a1 from ASR.

An example of a method of obtaining ASR includes a dismantling step of removing reusable parts and non-reusable parts from end-of-life vehicles, an accessory separating step of removing automobile accessory parts from dismantled vehicles that have been subjected to the dismantling step, and a shredding and sorting step in which the dismantled vehicles and/or automobile accessory parts that have been subjected to the separating step are shredded, and separating metals from the resultant shredded material to recover ASR. More specifically, ASR can be obtained by the methods described in JP 6609877 B2, JP 6627142 B2, JP 6762071 B2, and the like.

For example, for the recovery of the resin composition a1, a method can be adopted in which one of the separation processes shown in ($\alpha$) to ($\delta$) described below is implemented singly, or two or more of them are implemented in combination.

($\alpha$) Magnetic separation process in which metals and nonmetals are separated by magnetic force
($\beta$) Pneumatic separation process in which lightweight materials and heavy materials are separated by the force of the airflow
($\gamma$) Wet specific gravity separation process in which light specific gravity materials and heavy specific gravity materials are separated with a solvent
($\delta$) Electrostatic separation process in which resins are separated based on ease of charging

For example, in the wet specific gravity separation process ($\gamma$), the resin composition a1 contained in ASR can be separated by a method using water flow classification and a sedimentation rate as described in JP 3711472 B2, a method using an apparatus including a floating material separation tank for separating a substance lighter than water and a substance heavier than water, which is equipped with a pulsating bubbling tank for intermittently discharging bubbles and a sedimentation tank, as described in JP 2004-58032 A, or the like. Also, these separation processes can be combined and performed as described in JP 2008-178846 A and JP 6762071 B2. For example, the pneumatic separation process and the wet specific gravity separation process are combined to separate lightweight materials and heavy materials contained in ASR using wind power, and then each of the lightweight materials and the heavy materials is separately immersed in a selection liquid to perform specific gravity separation, thereby enabling selection of the resin composition a1 contained in ASR.

[Fusion-bonding layer]

The expanded bead may have a single layer structure composed only of a foamed layer formed of the resin composition, or may have a multilayer structure including the foamed layer and a fusion-bonding layer which is provided to improve fusion bondability between the expanded beads during in-mold molding and that covers the foamed layer. The fusion-bonding layer may be present on the entire surface of the expanded bead, or may be present on part of the surface thereof. In addition, the fusion-bonding layer may be in a foamed state or a non-foamed state, but is preferably in a substantially non-foamed state. Note that the term "non-foamed state" described above includes a state where the fusion-bonding layer is not foamed and contains no cells and a state where cells disappear after foaming, and means that there is almost no cell structure in the fusion-bonding layer. In the case where the expanded bead has a foamed layer and a fusion-bonding layer, the foamed layer covered with the fusion-bonding layer may be called a "foamed core layer".

The method for producing the expanded beads having a fusion-bonding layer is not particularly limited, and examples thereof include a method of foaming(expanding) resin particles having a core layer in a non-foamed state and a fusion-bonding layer covering the core layer, and a method in which a core layer in a non-foamed state is expanded to form a foamed core layer, and thereafter a fusion-bonding layer is adhered to the surface of the foamed core layer. When resin particles having a fusion-bonding layer on the surface are expanded to obtain expanded beads, it is preferable to employ a method in which an extruder capable of co-extrusion is used in the production of the resin particles to co-extrude a molten mixture for forming the core layer and a resin melt for forming the fusion-bonding layer thereby laminating the fusion-bonding layer on the core layer.

The ratio of the fusion-bonding layer in the expanded bead is preferably approximately 0.5 mass% or more and 20 mass% or less, and more preferably 1 mass% or more and 10 mass% or less.

Examples of base resins constituting the fusion-bonding layer include a crystalline polyolefin-based resin having a melting point lower than the melting point of the resin composition constituting the foamed core layer, and an amorphous polyolefin-based resin having a softening point lower than the melting point of the resin composition constituting the foamed core layer. The base resin constituting the fusion-bonding layer is preferably a polypropylene-based resin and/or a polyethylene-based resin, and more preferably a polypropylene-based resin.

In the case where the base resin constituting the fusion-bonding layer is a crystalline polyolefin-based resin having a melting point, the melting point of the crystalline polyolefin-based resin is preferably 100°C or higher and lower than 160°C, more preferably 110°C or higher and 158°C or lower, and still more preferably 120°C or higher and 155°C or lower.

The difference between the melting point of the resin composition constituting the foamed core layer and the melting point of the base resin constituting the fusion-bonding layer is preferably approximately 1°C or more and 40°C or less, more preferably 2°C or more and 35°C or less, and still more preferably 5°C or more and 30°C or less. In this case, the in-mold moldability of the expanded beads can be improved even when the molding pressure is relatively low. By in-mold molding such expanded beads, a molded article having good compression properties can be more easily obtained.

The expanded bead may have a tubular shape with a through-hole penetrating its inside in the axial direction. For example, the expanded bead has a bottom face, a top face disposed above the bottom face and having mostly the same shape as the bottom face, and a side peripheral face connecting an end edge of the bottom face and an end edge of the top face, and may have a through-hole that passes through the inside of the expanded bead in the axial direction and is open at the bottom face and the top face. Note that the tubular shape includes circular tubes, square tubes, and the like. The number of the through-holes may be two or more.

The average pore diameter of the through-holes is preferably less than 1 mm, more preferably 0.95 mm or less, still more preferably 0.90 mm or less, and particularly preferably 0.85 mm or less. In this case, the cooling time during in-mold molding can be easily reduced while ensuring the compression properties of the molded article. In addition, by using such expanded beads, a molded article having good surface properties can be easily obtained even if an aging step of the expanded beads is shortened or omitted. Note that from the viewpoint of ease of production, the average pore diameter of the expanded beads is preferably approximately 0.2 mm or more, and more preferably 0.3 mm or more.

The ratio of the average pore diameter of the through-holes to the average outer diameter of the expanded beads is preferably 0.4 or less, more preferably 0.3 or less, and still more preferably 0.25 or less. In this case, the cooling time during in-mold molding can be easily reduced while ensuring the compression properties of the molded article. In addition, by using such expanded beads, a molded article having good surface properties can be easily obtained even if an aging step of the expanded beads is shortened or omitted. Note that from the viewpoint of ease of production, the ratio of the average pore diameter of the through-holes to the average outer diameter of the expanded beads is preferably 0.1 or more.

[Flexural modulus]

The flexural modulus of the resin composition constituting the foamed layer of the expanded bead is preferably 800 MPa or more and 1600 MPa or less, more preferably 800 MPa or more and 1400 MPa or less, still more preferably 800 MPa or more and 1300 MPa or less, particularly preferably 800 MPa or more and 1200 MPa or less, and most preferably 900 MPa or more and 1200 MPa or less. In this case, the in-mold moldability of the expanded beads can be more easily improved. In addition, by using such expanded beads to produce a molded article, a molded article in which compressive stress is less likely to increase when a compressive strain is applied can be easily obtained.

The flexural modulus of the resin composition constituting the foamed layer is obtained by performing measurement in accordance with JIS K7171:2008. The test piece used for measuring the flexural modulus may be collected from, for example, a sheet in non-foamed state prepared by heat-pressing expanded beads.

[Melt mass flow rate]

The melt mass flow rate of the resin composition constituting the foamed layer is preferably 5 g/10 min or more and 20 g/10 min or less, more preferably 8 g/10 min or more and 18 g/10 min or less, and still more preferably 10 g/10 min or more and 16 g/10 min or less, as measured at a temperature of 230°C under a load of 2.16 kg. In this case, the in-mold moldability of the expanded beads can be more easily improved. By performing in-mold molding using such expanded beads, expanded beads capable of producing a molded article of adequate compressive strength can be more easily obtained. The melt mass flow rate of the resin composition constituting the foamed layer is a value measured using expanded beads or resin particles as a sample under conditions of a test temperature of 230°C and a load of 2.16 kg in accordance with JIS K7210-1:2014. Note that the expanded beads used as a sample may be subjected to a defoaming treatment in advance.

[Bulk density of expanded beads]

The bulk density of the expanded beads is preferably 10 kg/m$^3$ or more and 200 kg/m$^3$ or less, more preferably 12 kg/m$^3$ or more and 100 kg/m$^3$ or less, still more preferably 15 kg/m$^3$ or more and 80 kg/m$^3$ or less, and particularly preferably 20 kg/m$^3$ or more and 70 kg/m$^3$ or less. In this case, a molded article that is lightweight and has adequate compressive strength can be more easily obtained.

The method of calculating the bulk density of the expanded beads is as follows. First, the expanded beads are left to stand for 24 hours or more in an environment of a relative humidity of 50%, a temperature of 23°C, and an atmospheric pressure of 1 atm to condition the expanded beads. The expanded beads obtained in this way are filled into a measuring cylinder, and the bottom face of the measuring cylinder is lightly tapped several times against the floor to stabilize the filling height of the expanded beads in the measuring cylinder. The bulk volume (unit: L) of the expanded beads is read from the scale of the measuring cylinder. Then, the bulk density (unit: $kg/m^3$) of the expanded beads can be obtained by dividing the mass (unit: g) of the expanded beads in the measuring cylinder by the above-described bulk volume and converting the units.

[Apparent density of expanded beads]

The apparent density of the expanded beads is preferably 10 $kg/m^3$ or more and 150 $kg/m^3$ or less. By setting the apparent density of the expanded beads to preferably 10 $kg/m^3$ or more, more preferably 20 $kg/m^3$ or more, and still more preferably 30 $kg/m^3$ or more, a molded article having sufficient rigidity can be more easily obtained. By setting the apparent density of the expanded beads to be preferably 100 $kg/m^3$ or less, more preferably 80 $kg/m^3$ or less, a lighter molded article can be obtained.

In configuring a preferable range of the apparent density of the expanded beads, the upper limit and the lower limit of the apparent density described above can be arbitrarily combined. For example, the apparent density may be 20 $kg/m^3$ or more and 100 $kg/m^3$ or less, or 30 $kg/m^3$ or more and 80 $kg/m^3$ or less.

The method of calculating the apparent density of the expanded beads is as follows. First, the expanded beads are left to stand for 1 day in an environment of a relative humidity of 50%, a temperature of 23°C, and an atmospheric pressure of 1 atm to condition the expanded beads. After measuring the mass (unit: g) of the expanded beads, the expanded beads are immersed in water at 23°C contained in a measuring cylinder using a wire mesh or the like, and the volume (unit: L) of the expanded beads is determined from the increase in the water level. Thereafter, the apparent density (unit: $kg/m^3$) of the expanded beads can be calculated by dividing the mass of the expanded beads by the volume of the expanded beads and converting the units.

[Average cell diameter of expanded beads]

The average cell diameter of the expanded beads is preferably 40 $\mu$m or more and 100 $\mu$m or less, more preferably 45 $\mu$m or more and 90 $\mu$m or less, and still more preferably 50 $\mu$m or more and 80 $\mu$m or less. In this case, the in-mold moldability of the expanded beads can be further improved, and a good molded article can be more easily obtained over a wide range of molding pressures.

The average cell diameter of the expanded beads is a value calculated by the following method. First, an expanded bead is cut into approximately two equal parts. Next, an enlarged photograph is acquired to make sure that all exposed cut surfaces are within the field of view. On the acquired enlarged photograph, four line segments from the outermost surface to the opposite outermost surface through the central region of the expanded bead are drawn so that angles formed by adjacent line segments are equal (i.e., an angle formed by adjacent line segments is 45°). The total length of the four line segments thus obtained is divided by the total number of cells intersecting the line segments, and this value is defined as the cell diameter of each expanded bead.

The operation mentioned above is performed on randomly selected 10 or more expanded beads, and an arithmetic mean value of the cell diameters of the expanded beads obtained for each expanded bead is taken as the average cell diameter of the expanded beads.

[Closed cell content of expanded beads]

The closed cell content of the expanded beads is preferably 80% or more, more preferably 85% or more, and still more preferably 90% or more. In this case, the in-mold moldability of the expanded beads can be further improved, and a good molded article can be more easily obtained over a wide range of molding pressures.

The closed cell content of the expanded beads is a value measured using an air comparison pycnometer in accordance with ASTM-D2856-70 Procedure C. The method of measuring the closed cell content of the expanded beads is specifically as follows. The expanded beads having a bulk volume of about 20 $cm^3$ after conditioning are used as a measurement sample. The measurement sample is immersed in ethanol contained in a measuring cylinder to measure an apparent volume Va of the measurement sample based on the increase in liquid level. After the apparent volume Va is measured, the measurement sample is sufficiently dried. Then, a true volume value Vx of the measurement sample measured by an air comparison pycnometer ("Beckman Model 1000 Air Comparison Pycnometer" available from Tokyo-Science, Co., Ltd.) is measured in accordance with Procedure C described in ASTM-D2856-70. The closed cell content (unit: %) of the measurement sample is calculated using these volume values Va and Vx, based on the following equation (1). The above operation is performed five times with different measurement samples, and the arithmetic mean value (N = 5) of the closed cell content in the five measurement samples is taken as the closed cell content (unit: %) of the expanded beads.

$$\text{Closed cell content} = (Vx - W/\rho) \times 100/(Va - W/\rho) \dots (1)$$

Note that the meanings of the symbols in the equation (1) described above are as follows.

Vx: The true volume of the measurement sample as measured by the above method, which is the sum of the volume of the resin forming the expanded beads and the total cell volume of the closed cell portion in the expanded beads (unit: $cm^3$)

Va: The apparent volume (unit: $cm^3$) of the measurement sample measured based on the increase in the liquid level when the measurement sample is immersed in ethanol contained in a measuring cylinder

W: The mass of the measurement sample (unit: g)

$\rho$: The density of the resin constituting the expanded beads (unit: $g/cm^3$)

[Ash content of expanded beads]

The ash content of the expanded beads is preferably 0.1 mass% or more and 4 mass% or less. In this case, the blending amount of the component derived from the post-consumer material can be increased while ensuring good in-mold moldability of the expanded beads, and the post-consumer material can be more easily utilized.

From the viewpoint of more effectively utilizing the polypropylene-based resin composition derived from the post-consumer material, the ash content of the expanded beads is more preferably 0.2 mass% or more, still more preferably 0.5 mass% or more. On the other hand, from the viewpoint of more stably achieving good in-mold moldability of the expanded beads, the ash content of the expanded beads is more preferably 3 mass% or less, still more preferably 2 mass% or less.

Note that In configuring a preferable range of the ash content of the expanded beads, the upper limit value and the lower limit value of the ash content of the expanded beads described above can be arbitrarily combined. For example, the preferable range of the ash content of the expanded beads may be 0.1 mass% or more and 3 mass% or less, may be 0.2 mass% or more and 3 mass% or less, or may be 0.5 mass% or more and 2 mass% or less.

The ash content of the expanded beads mentioned above can be measured in accordance with the direct ashing method (Method A) specified in JIS K7250-1:2006. More specifically, the ash content of the expanded beads can be calculated based on the mass of residues remaining after combustion of the expanded beads.

[High-temperature peak]

The expanded beads each preferably has a crystal structure such that a melting peak due to intrinsic melting of the resin component contained in the expanded beads and one or more melting peaks located on the higher temperature side of the melting peak appear in a DSC curve obtained when the expanded beads are heated from 23°C to 230°C at a heating rate of 10°C/min. The expanded beads having such a crystal structure have excellent in-mold moldability. By in-mold molding of such expanded beads, a molded article excellent in compression properties can be more easily obtained. Note that hereinafter, a melting peak appearing on the DSC curve due to melting which is inherent in the resin component is referred to as "resin intrinsic peak", and a melting peak appearing on a higher temperature side than the resin intrinsic peak is referred to as "high-temperature peak". The resin intrinsic peak appears due to melting of crystals which are ordinarily included in the resin component contained in the expanded beads. On the other hand, the high-temperature peak appears presumably due to melting of secondary crystals formed in the resin component in the production process of expanded beads. That is, when a high-temperature peak appears on the DSC curve, it can be inferred that secondary crystals are formed in the resin component.

A DSC curve, which has been obtained by performing differential scanning calorimetry (DSC) under the above-described conditions in accordance with JIS K7122-1987, is sufficient as a basis to determine whether the expanded beads have the above-described crystal structure. Note that the flow rate of the nitrogen gas under the measurement environment is preferably 30 mL per minute. In performing DSC, 1 to 3 mg of expanded beads can be used as a sample.

Specifically, on the DSC curve obtained when heating from 23°C to 230°C (i.e., first heating) is performed at a heating rate of 10°C/min as described above, both the resin intrinsic peak and the high-temperature peak of the resin component contained in the expanded beads appear. In contrast, only the resin intrinsic peak of the resin component contained in the expanded beads is observed on the DSC curve obtained when, after performing the first heating, cooling from 230°C to 23°C at a cooling rate of 10°C/min, and then heating from 23°C to 230°C at a heating rate of 10°C/min (i.e., second heating) is performed again. Therefore, by comparing the DSC curve obtained from the first heating with the DSC curve obtained from the second heating, the resin intrinsic peak and the high-temperature peak can be distinguished from each other.

From the viewpoint of further improving the in-mold moldability and compression properties of the expanded beads, a vertex temperature of the high-temperature peak of the expanded beads is preferably 155°C or higher and 170°C or lower, and more preferably 160°C or higher and 170°C or lower. From the same viewpoint, a heat of fusion of the high-temperature peak is preferably 10 J/g or higher and 45 J/g or lower, more preferably 12 J/g or higher and 35 J/g or lower, and still more preferably 15 J/g or higher and 32 J/g or lower.

In addition, a total heat of fusion of the expanded beads is preferably 60 J/g or higher and 100 J/g or lower, more preferably 65 J/g or higher and 90 J/g or lower, and still more preferably 70 J/g or higher and 85 J/g or lower. In this case, the in-mold moldability of the expanded beads can be more easily improved. By in-mold molding such expanded beads, a molded article excellent in compression properties can be more easily obtained.

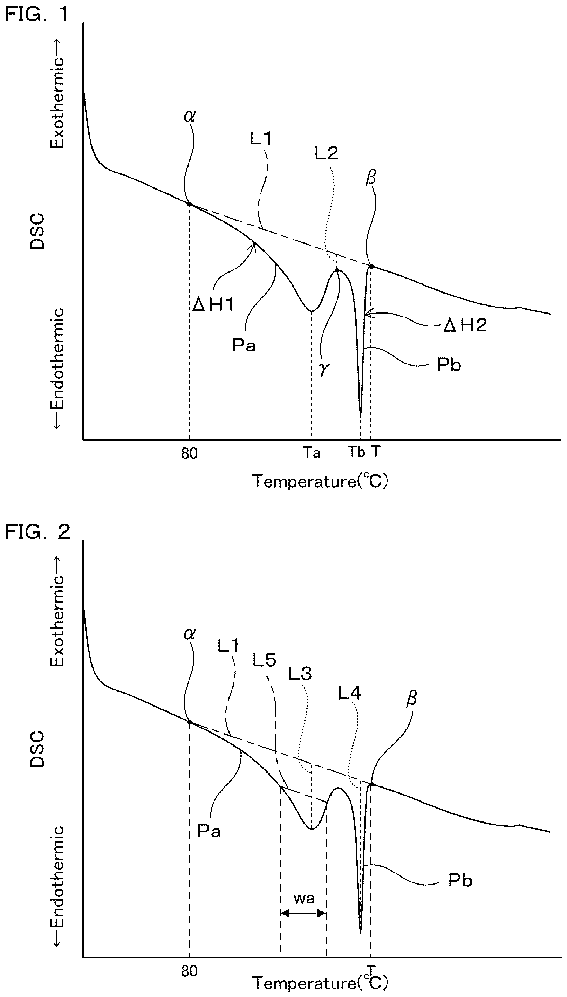

The vertex temperature of the high-temperature peak and the heat of fusion and the total heat of fusion of the high-temperature peak described above are values obtained as follows. First, 1 to 3 mg of expanded beads are used as a sample, and a DSC curve is obtained by performing differential scanning calorimetry under the condition of heating from 23°C to 230°C at a heating rate of 10°C/min. Fig. 1 shows an example of a DSC curve. When the expanded beads have a high-temperature peak, a resin intrinsic peak $\Delta H1$ and a high-temperature peak $\Delta H2$ having a vertex on a higher temperature side than the vertex of the resin intrinsic peak $\Delta H1$ appear on the DSC curve as shown in Fig. 1. The temperature corresponding to the vertex of this high-temperature peak $\Delta H2$ is taken as the vertex temperature of the high-temperature peak.

Next, a straight line L1 connecting a point $\alpha$ corresponding to 80°C on the DSC curve and a point $\beta$ corresponding to the melting end temperature T of the expanded beads is drawn. Note that the melting end temperature T is an end point on the higher temperature side of the high-temperature peak $\Delta H2$, that is, an intersection of the high-temperature peak $\Delta H2$ and the baseline on the higher temperature side than the high-temperature peak $\Delta H2$ on the DSC curve.

After the straight line L1 is drawn, a straight line L2 passing through the local maximum point $\gamma$ existing between the resin intrinsic peak $\Delta H1$ and the high-temperature peak $\Delta H2$ is drawn in parallel with the vertical axis of the graph. The resin intrinsic peak $\Delta H1$ and the high-temperature peak $\Delta H2$ are divided by this straight line L2. The heat of fusion of the high-temperature peak $\Delta H2$ can be calculated based on the area of a portion surrounded by the straight line L1, the straight line L2 and a portion forming the high-temperature peak $\Delta H2$ on the DSC curve. The total heat of fusion of the expanded beads can be calculated based on the area of the portion surrounded by the straight line L1, the portion forming the resin intrinsic peak $\Delta H1$, and the portion forming the high-temperature peak $\Delta H2$ on the DSC curve. That is, the total heat of fusion of the expanded beads is the sum of the heat of fusion of the resin intrinsic peak $\Delta H1$ and the heat of fusion of the high-temperature peak $\Delta H2$.

[Peak height ratio]

The expanded beads preferably have a crystal structure such that a first endothermic peak Pa with the largest peak area and a second endothermic peak Pb next to the first endothermic peak Pa on the higher temperature side of the first endothermic peak Pa appear on a DSC curve obtained when the expanded beads are heated from 23°C to 200°C at a heating rate of 10°C/min, wherein

a vertex temperature Tb of the second endothermic peak Pb is 158°C or higher,
a difference Tb-Ta between the vertex temperature Tb of the second endothermic peak Pb and a vertex temperature Ta of the first endothermic peak Pa is 15°C or more and 30°C or less, and
a ratio hb/ha of a peak height hb of the second endothermic peak Pb to a peak height ha of the first endothermic peak Pa is preferably 1.2 or more and 2.8 or less.

The expanded beads having such DSC characteristics have good in-mold moldability and are excellent in the balance between rigidity and molding pressure. The reason for this is, for example, as follows.

The expanded beads having a vertex temperature Tb of the second endothermic peak Pb within the specific range mentioned above have excellent heat resistance, thereby reducing damage to the cells of the expanded beads during molding heating. By in-mold molding such expanded beads, the heat resistance of the molded article can be further enhanced. From the viewpoint of further enhancing these effects, the vertex temperature Tb of the second endothermic peak Pb is preferably 160°C or higher, and more preferably 162°C or higher. From the viewpoint of further improving the in-mold moldability of the expanded beads, the vertex temperature Tb of the second endothermic peak Pb is preferably 175°C or lower.

As a method of controlling the vertex temperature Tb of the second endothermic peak Pb to fall within the specific range mentioned above, for example, a method in which a polypropylene-based resin having a relatively high melting point is used as a raw material can be employed. In particular, by blending the polypropylene-based resin composition containing the ethylene propylene-based rubber and having a relatively high melting point into the resin composition constituting the foamed layer, the vertex temperature Tb of the second endothermic peak Pb can be more easily controlled to fall within the specific range mentioned above.

Traditionally, expanded beads formed of a polypropylene-based resin composition containing the ethylene propylene-based rubber tend to have a high vertex temperature Tb of the second endothermic peak Pb and the difference Tb-Ta between the vertex temperatures tends to be small. Therefore, in-mold moldability of these expanded beads tends to be poor. In contrast, by setting the difference Tb-Ta between the vertex temperature Tb of the second endothermic peak Pb and the vertex temperature Ta of the first endothermic peak Pa to fall within the specific range mentioned above, the in-mold moldability of the expanded beads can be improved.

The reasons can be considered to be the following or others. That is, even when in-mold molding is performed at a relatively low molding pressure, the difference Tb-Ta between the vertex temperatures set within the abovementioned specific range makes it possible during in-mold molding to maintain a crystal that exists in the expanded beads and is relatively hard to melt (i.e., a crystal that generates the second endothermic peak Pb during melting), and at the same time to sufficiently melt a crystal that is relatively easy to melt (i.e., a crystal that generates the first endothermic peak Pa during melting), thus the expanded beads can be appropriately softened.

From the viewpoint of more reliably improving the in-mold moldability of the expanded beads, the difference Tb-Ta between the vertex temperatures is preferably 18°C or more, and more preferably 20°C or more. In contrast, when the difference Tb-Ta between the vertex temperatures is too large, the expanded beads may unfavorably shrink easily. From the viewpoint of further curtailing shrinkage of the expanded beads, the difference Tb-Ta between the vertex temperatures is preferably 28°C or less, and more preferably 26°C or less.

In configuring a preferable range of the difference Tb-Ta between the vertex temperatures, the upper limit and the lower limit of the difference Tb-Ta between the vertex temperatures described above can be arbitrarily combined. For example, the difference Tb-Ta between the vertex temperatures may be 18°C or more and 28°C or less, or may be 20°C or more and 26°C or less.

Examples of the method for controlling the difference Tb-Ta between the vertex temperatures to fall within the specific range mentioned above include a method of using, as the resin composition constituting the foamed layer, a molten mixture of a polypropylene-based resin composition containing the ethylene propylene-based rubber and having a relatively high melting point, and a propylene-based random copolymer having a relatively low melting point.

By setting the peak height ratio hb/ha of the expanded beads to fall within the specific range mentioned above, the in-mold moldability is improved, the balance of rigidity to molding pressure is improved, and a molded article with rigidity appropriate to the molding pressure can be easily obtained.

The expanded bead has the DSC characteristics in which the peak height ratio hb/ha falls within the specific range mentioned above, thereby achieving a favorable balance of rigidity to molding pressure even when the ethylene propylene-based rubber is contained. It is not entirely clear at the present time the reason why the balance of rigidity to molding pressure is improved when the peak height ratio hb/ha of the expanded beads is within the specific range mentioned above, but for example, the following reasons are conceivable.

The peak height ratio hb/ha is thought to be related to the state and the quantity of a highly rigid crystal (i.e., crystal that generates the second endothermic peak Pb during melting) with a well-ordered crystal structure. When the peak height ratio hb/ha is high, it is thought to indicate that the above-described highly rigid crystals exist with few structural defects. In addition, such highly rigid crystals are considered to influence the thermal processability of the expanded beads.

Hence, it is thought that by setting the peak height ratio hb/ha to fall within the specific range mentioned above, in the expanded beads, the balance between the amount of the highly rigid crystals that are hardly meltable and the amount of crystals that are easily meltable can be controlled within an appropriate range, and the distribution of the melting temperature of the crystals that are easily meltable becomes easy to be suitably broad. As a result, it is thought that the cells of the expanded beads become less likely to be damaged during in-mold molding.

From the viewpoint of more reliably improving the recoverability of the molded article, the peak height ratio hb/ha is preferably 1.3 or more, more preferably 1.4 or more, and still more preferably 1.5 or more. From the viewpoint of further improving the balance of rigidity to molding pressure, the peak height ratio hb/ha is preferably 2.6 or less, and more preferably 2.4 or less.

In configuring a preferable range of the peak height ratio hb/ha, the upper limit and the lower limit of the peak height ratio hb/ha described above can be arbitrarily combined. For example, the peak height ratio hb/ha may be 1.3 or more and 2.6 or less, 1.4 or more and 2.6 or less, or 1.5 or more and 2.4 or less.

Examples of the methods of controlling the peak height ratio hb/ha within the specific range mentioned above include: a method in which the molten mixture as the resin composition constituting the foamed layer and the ratio between the blending amount of the polypropylene-based resin composition containing the ethylene propylene-based rubber and having a relatively high melting point and the blending amount of the propylene-based random copolymer having a relatively low melting point in the molten mixture is set to fall within the range described later; a method in which the flexural modulus of the random copolymer is set to fall within the range described later; a method in which a retention time in the step of forming the second endothermic peak Pb in the production process of the expanded beads is adjusted; and a method in which a foaming temperature (an expanding temperature) in the production process of the expanded beads is adjusted.

The peak height of each endothermic peak described above refers to the distance perpendicular to the horizontal axis between the interpolated baseline and the peak vertex. Specifically, the peak height of the endothermic peak is a value determined as follows.

First, a DSC curve is obtained by the following method, and a first endothermic peak Pa and a second endothermic peak Pb are identified. Specifically, 1 to 3 mg of the expanded bead after performing the conditioning is used as a sample, a DSC curve is obtained by performing differential scanning calorimetry under the condition of heating from 23°C to 230°C at a heating rate of 10°C/min. At least two endothermic peaks appear on the DSC curve of the expanded bead.

Next, as shown in Fig. 2, a straight line L1 connecting a point $\alpha$ corresponding to 80°C on the DSC curve and a point $\beta$ corresponding to the melting end temperature T of the expanded bead is drawn. Note that the melting end temperature T is an end point of the endothermic peak with the highest vertex temperature on the higher temperature side, that is, an intersection between the endothermic peak with the highest vertex temperature and the baseline on the higher temperature side than the said endothermic peak on the DSC curve.

After the straight line L1 is drawn, a straight line L2 passing through a local maximum point $\gamma$ which exists between the adjacent endothermic peaks is drawn in parallel with the vertical axis of the graph. This straight line L2 separates adjacent endothermic peaks into individual endothermic peaks. An area of a portion surrounded by a portion forming each endothermic peak on the DSC curve, the straight line L1, and the straight line L2 is taken as a peak area of the endothermic peak. An endothermic peak having the largest peak area among the plurality of endothermic peaks is designated as a first endothermic peak Pa, and an endothermic peak next to the first endothermic peak Pa on the higher temperature side of the first endothermic peak Pa is designated as a second endothermic peak Pb.

Next, a line segment parallel to the vertical axis of the graph is drawn from the vertex of each endothermic peak on the DSC curve to the straight line L1, and the length of this line segment is taken as the peak height of each endothermic peak. That is, the peak height ha of the first endothermic peak Pa is the length of the line segment L3 drawn parallel to the vertical axis of the graph from the vertex of the first endothermic peak Pa to the straight line L1. The peak height hb of the second endothermic peak Pb is a length of a line segment L4 drawn parallel to the vertical axis of the graph from the vertex of the second endothermic peak Pb to the straight line L1.

Note that on the DSC curve, only two endothermic peaks of the first endothermic peak Pa and the second endothermic peak Pb may appear as endothermic peaks, and another endothermic peak may appear in addition to the first endothermic peak Pa and the second endothermic peak Pb. The first endothermic peak Pa may be, for example, the resin intrinsic peak described above, and the second endothermic peak Pb may be, for example, the high-temperature peak described above.

The full width at half maximum of the first endothermic peak Pa is preferably 15°C or more and less than 25°C. In this case, the balance of rigidity to molding pressure can be further improved, and a molded article having rigidity appropriate to the molding pressure can be more easily obtained. In particular, a molded article having rigidity expected from the minimum molding pressure can be more easily obtained. In addition, it is possible to further improve the in-mold moldability of the expanded beads when the in-mold molding is performed at a low molding pressure. From the viewpoint of more reliably obtaining these effects, the full width at half maximum of the first endothermic peak Pa is more preferably 18°C or more and less than 25°C.

The full width at half maximum wa of the first endothermic peak Pa described above is a value obtained as follows. First, by the method described above, a line segment L3 parallel to the vertical axis of the graph is drawn from the vertex of the first endothermic peak Pa to the straight line L1. Next, as illustrated in Fig. 2, a straight line L5 passing through the midpoint of the line segment L3 and parallel to the straight line L1 is drawn. Then, two intersections between the straight line L5 and the first endothermic peak Pa are identified. The difference between the temperature corresponding to the intersection on the higher temperature side and the temperature corresponding to the intersection on the lower temperature side at the two intersections thus obtained is defined as the full width at half maximum wa of the first endothermic peak Pa.

Note that depending on the shape of the DSC curve, the straight line L5 may not intersect the portion on the higher temperature side than the vertex of the first endothermic peak Pa. In this case, an intersection is identified between the straight line L5 and a straight line that passes through the melting end temperature of the first endothermic peak Pa and is parallel to the vertical axis. A difference between the temperature corresponding to this intersection and the temperature corresponding to the intersection on the lower temperature side is defined as the full width at half maximum wa of the first endothermic peak Pa. Note that the fusion end temperature of the first endothermic peak Pa in the case of determining the full width at half maximum wa of the first endothermic peak Pa means a temperature corresponding to an intersection between the straight line L1 and a tangent line drawn to the curve of the first endothermic peak Pa at the point where the gradient is maximized on the higher temperature side.

From the viewpoint of more reliably achieving the above-described effect, it is more preferable that the expanded bead has a crystal structure such that a first endothermic peak Pa with the largest peak area and a second endothermic peak Pb next to the first endothermic peak Pa on higher temperature side of the first endothermic peak Pa appear on a DSC curve obtained when the expanded bead is heated from 23°C to 200°C at a heating rate of 10°C/min,

a closed cell content of the expanded beads is 85% or more,
a vertex temperature Tb of the second endothermic peak Pb is 158°C or higher,
a difference Tb-Ta between a vertex temperature Tb of the second endothermic peak Pb and a vertex temperature Ta of the first endothermic peak Pa is 15°C or more and 30°C or less, and
a ratio hb/ha of a peak height hb of the second endothermic peak Pb to a peak height ha of the first endothermic peak Pa is 1.2 or more and 2.8 or less.

By performing the in-mold molding of such expanded beads, even when the ethylene propylene-based rubber is contained in the resin composition constituting the foamed layer of the expanded beads, a molded article having good in-mold moldability and a good balance of rigidity to in-mold molding pressure can be easily obtained.

[Melting end temperature of expanded bead]

The melting end temperature on the second DSC curve, which is obtained by heating the expanded bead from 23°C to 200°C at a heating rate of 10°C/min, then cooling to 23°C at a cooling rate of 10°C/min, and heating again from 23°C to 200°C at a heating rate of 10°C/min, is preferably 160°C or higher. The melting end temperature on the second DSC curve is related to the melting point of the resin component contained in the expanded bead, and the melting end temperature on the second DSC curve tends to increase when a resin component having a high melting point is contained. Therefore, the expanded bead having the melting end temperature of 160°C or higher on the second DSC curve can more reliably enhance the heat resistance. Note that the upper limit of the melting end temperature on the second DSC curve of the expanded bead is not particularly limited, but is approximately 175°C.

The method of measuring the melting end temperature of the expanded bead is as follows. First, the expanded bead is heated from 23°C to 200°C at a heating rate of 10°C/min with a heat flux differential scanning calorimeter. Thereafter, the expanded bead is cooled from 200°C to 23°C at a cooling rate of 10°C/min. After the cooling is completed, the expanded bead is heated again from 23°C to 200°C at a heating rate of 10°C/min (i.e., second heating) and a DSC curve is obtained. Then, the temperature at the end point on the higher temperature side of the melting peak appearing on the DSC curve in the second heating, that is, the temperature at the intersection between the melting peak and the baseline on the higher temperature side than the melting peak on the second DSC curve is taken as the melting end temperature.

(Method for producing polypropylene-based resin expanded beads)

The expanded beads can be produced by foaming(expanding) polypropylene-based resin particles having a core layer. Preferably, the expanded beads can be produced by the production method described below.

That is, in the production of the polypropylene-based resin expanded beads, the polypropylene-based resin particles each having a core layer are expanded to thereby obtain polypropylene-based resin expanded beads each having a foamed layer.

The core layer of the resin particles used in the production method is made of a molten mixture of a polypropylene-based resin composition I containing an ethylene propylene-based rubber and having a melting point of 160°C or higher, and a polypropylene-based resin B having a melting point of 125°C or higher and lower than 160°C, and the mass ratio of the polypropylene-based resin composition I and the polypropylene-based resin B in the core layer is polypropylene-based resin composition I : polypropylene-based resin B = 2 : 98 to 70 : 30. By expanding the resin particle having such core layer, the expanded bead can be obtained more easily.

[Preparation of resin particles]

In the production method, first, resin particles each including the core layer are prepared. In forming the core layer, impact polypropylene containing the ethylene propylene-based rubber and having a melting point of 160°C or higher is preferably used as the polypropylene-based resin composition I. As described later, the core layer can be formed by melt-mixing of the polypropylene-based resin composition I and the polypropylene-based resin B. The core layer becomes a foamed layer of expanded bead after foaming (expansion). Therefore, regarding the configuration of the molten mixture for constituting the core layer, reference can be appropriately made to the configuration of the resin composition for constituting the foamed layer of the expanded bead described above.

•Polypropylene-based resin composition I

As the polypropylene-based resin composition I (hereinafter, also referred to as resin composition I) used for preparation of the resin particle, for example, the impact polypropylene resin or the resin composition A constituting the foamed layer of the expanded bead described above can be used. Therefore, regarding the configurations of the resin composition A or the impact polypropylene used as the resin composition I, reference can be appropriately made to the configurations of the impact polypropylene and the resin composition A used for the foamed layer described above.

When polypropylene-based resin expanded beads are produced using the resin composition A as the resin composition I, the preferable ranges of physical property values of the resin composition I shown below, such as the melting point $Tm_I$, the melt mass flow rate $MFR_I$, the flexural modulus $M_I$, and the heat of fusion $H_I$, are the same as the preferable ranges of corresponding physical property values of the resin composition A, such as the melting point $Tm_A$, the melt mass flow rate $MFR_A$, the flexural modulus $M_A$, and the heat of fusion $H_A$, respectively. Therefore, when polypropylene-based resin expanded beads are produced using the resin composition A as the resin composition I, the preferable ranges of the physical property values in the resin composition A contained in the expanded beads can be set to the preferable ranges of the corresponding physical property values of the resin composition I.

Similarly, when polypropylene-based resin expanded beads are produced using impact polypropylene as the resin composition I, the preferable ranges of the physical property values in the resin composition I shown below, such as the melting point $Tm_I$, the melt mass flow rate $MFR_I$, the flexural modulus $M_I$, and the heat of fusion $H_I$, are respectively the same as the preferable ranges of the corresponding physical property values of the impact polypropylene. Therefore, when the polypropylene-based resin expanded beads are produced using impact polypropylene as the resin composition I, the preferable ranges of the physical property values of the impact polypropylene contained in the expanded beads can be set to the preferable ranges of the corresponding physical property values of the resin composition I.

The melting point $Tm_I$ of the resin composition I is preferably 150°C or higher, more preferably 160°C or higher, still more preferably 161°C or higher, and particularly preferably 162°C or higher. In this case, compressive stress at a relatively small amount of compressive strain tends to increase when compressive strain is applied to the molded article. In addition, change in stress due to increase in compressive strain can be more easily reduced. From the viewpoints of further improving the in-mold moldability of the expanded beads and further extending the range of molding pressure at which a good molded article can be obtained, the melting point $Tm_I$ of the resin composition I is preferably 170°C or lower, more preferably 168°C or lower, and still more preferably 165°C or lower.

In configuring a preferable range of the melting point $Tm_I$, the upper limit and the lower limit of the melting point $Tm_I$ described above can be arbitrarily combined. For example, a preferable range of the melting point $Tm_I$ may be 150°C or higher and 170°C or lower. In this case, in addition to the effects described above, the expandability of the expanded bead can be further improved. A preferable range of the melting point $Tm_I$ may be 160°C or higher and 170°C or lower, 161°C or higher and 168°C or lower, or 162°C or higher and 165°C or lower.

The method for measuring the melting point $Tm_I$ of the resin composition I is the same as the method for measuring the melting point Tm of the expanded bead described above, except that a test piece made of the resin composition I is used instead of the expanded bead.

The flexural modulus $M_I$ of the resin composition I is preferably 800 MPa or more and 1600 MPa or less, more preferably 800 MPa or more and 1400 MPa or less, still more preferably 800 MPa or more and 1300 MPa or less, particularly preferably 800 MPa or more and 1200 MPa or less, and most preferably 900 MPa or more and 1200 MPa or less. In this case, the in-mold moldability of expanded bead can be more easily improved. The flexural modulus $M_I$ can be determined in accordance with JIS K7171:2008.

The $MFR_I$ of the resin composition I as measured under the conditions of a temperature of 230°C and a load of 2.16 kg is preferably 3 g/10 min or more, more preferably 10 g/10 min or more, still more preferably 14 g/10 min or more, and particularly preferably 20 g/10 min or more. In addition, the melt mass flow rate $MFR_I$ as measured under the conditions of a temperature of 230°C and a load of 2.16 kg is preferably 40 g/10 min or less, more preferably 35 g/10 min or less, and still more preferably 30 g/10 min or less. In this case, the in-mold moldability of the expanded beads can be further improved, and the range of the molding pressure at which a good molded article can be obtained can be further extended.

In configuring a preferable range of the melt mass flow rate $MFR_I$, the upper limit and the lower limit of the melt mass flow rate $MFR_I$ described above can be arbitrarily combined. For example, a preferable range of $MFR_I$ may be 3 g/10 min or more and 40 g/10 min or less, 10 g/10 min or more and 40 g/10 min or less, 14 g/10 min or more and 35 g/10 min or less, or 20 g/10 min or more and 30 g/10 min or less.

The $MFR_I$ of the resin composition I described above is a value measured under the conditions of a test temperature of 230°C and a load of 2.16 kg in accordance with JIS K7210-1:2014.

The ash content of the resin composition I is preferably 1 mass% or more and 25 mass% or less. In this case, even when the melt mass flow rate of the resin composition I is relatively high, the in-mold moldability of the expanded beads can be further improved, and the range of the molding pressure to obtain a good molded article can be further extended.

By using the resin composition I having an ash content within the specific range mentioned above, the cell diameters of the expanded bead can be made relatively small, and the cell walls can be made thinner. In addition, while such expanded beads are likely to soften due to heating, the resin is considered to be less likely to excessively stretch. Therefore, by using the resin composition I having an ash content within the specific range mentioned above, shrinkage of the molded article is more likely curtailed even when in-mold molding is performed at a high molding pressure.

The ash content of the resin composition I is more preferably 2 mass% or more, still more preferably 3 mass% or more. In this case, a polypropylene-based resin composition having a relatively high ash content, such as resin composition a1 derived from ASR, for example, can be more easily blended, and the resin component derived from a post-consumer material can be more effectively utilized.

From the viewpoint of further enhancing the in-mold moldability of the expanded beads, the ash content of the resin composition I is more preferably 20 mass% or less, still more preferably 15 mass% or less, even more preferably 10 mass% or less, particularly preferably 8 mass% or less, and most preferably 6 mass% or less.

In configuring a preferable range of the ash content of the resin composition I, the upper limit value and the lower limit value of the ash content described above can be arbitrarily combined. For example, the preferable range of the ash content of the resin composition I may be 1 mass% or more and 20 mass% or less, 2 mass% or more and 15 mass% or less, 2 mass% or more and 10 mass% or less, 3 mass% or more and 8 mass% or less, or 3 mass% or more and 6 mass% or less.

The ash content of the resin composition I described above can be measured in accordance with the direct ashing method (Method A) of JIS K7250-1:2006. More specifically, the ash content can be calculated from the mass of residues remaining after combustion of the resin composition I. Note that the ash content contained in the combustion residue of the resin composition I is mainly a component derived from inorganic substances contained in the resin composition I such as an inorganic filler.

The resin composition I preferably exhibits a morphology with a matrix (i.e., a continuous phase) of a polypropylene-based resin, and domains (i.e., dispersed phases) of rubbery bodies containing the ethylene propylene-based rubber. In addition, the resin composition I more preferably exhibits a morphology with a matrix of homopolypropylene as a polypropylene-based resin and domains of rubbery bodies containing the ethylene propylene-based rubber.

Since the resin composition I is contained in the foamed layer, the expanded beads having good in-mold moldability can be more stably obtained. In addition, by using the expanded beads to perform in-mold molding, a molded article having adequate mechanical properties such as compressive strength can be more easily obtained. From the same viewpoint, the melting point of the polypropylene-based resin constituting the matrix in the resin composition I is more preferably 160°C or higher. Note that the domains of the rubbery bodies in the resin composition I may contain a polyethylene-based resin in addition to the ethylene propylene-based rubber.

The method of observing the morphology of the resin composition I is as follows. First, an observation sample is cut out from the resin composition I. The method of cutting out the observation sample is not particularly limited. For example, when the shape of the resin composition I is a columnar pellet, the pellet has only to be cut through the central part of the pellet and perpendicularly to the height direction of the pellet. In this way, an observation sample can be obtained in which a cross section of the central part of the pellet formed by the resin composition I is exposed. Next, this observation sample is embedded in an epoxy resin and is subjected to electron staining with ruthenium tetroxide, and then a section is prepared from the sample using an ultramicrotome or the like. This section is placed on a grid of a transmission electron microscope (e.g., "JEM-1040 Flash" manufactured by JEOL Ltd.) and is observed at a predetermined magnification (e.g., magnification of 5,000x), and meanwhile a cross-sectional photograph (i.e., a TEM photograph) of the resin composition A is taken. From the cross-sectional photograph, the morphology of the phase of the polypropylene-based resin and the phase of the rubbery bodies containing the ethylene propylene-based rubber in the resin composition A is visually observed.

From the viewpoint of ensuring stable improvement of the in-mold moldability of the expanded beads, the average diameter of the rubbery bodies containing the ethylene propylene-based rubber in the resin composition I is preferably 0.5 $\mu$m or more and 5 $\mu$m or less, more preferably 0.8 $\mu$m or more and 3 $\mu$m or less, and still more preferably 1 $\mu$m or more and 2 $\mu$m or less. The average diameter of the rubbery bodies in the resin composition I is calculated based on the TEM photograph. Specifically, the longest diameter and the shortest diameter of each of 50 or more domains randomly selected from among the domains (i.e., the phase of the rubbery bodies) appearing in the TEM photograph are measured, and their arithmetic mean is calculated. The arithmetic mean value of the longest diameters and the shortest diameters thus obtained is taken as the average diameter of the rubbery bodies containing the ethylene propylene-based rubber.

The amount of the acetone-insoluble fraction (i.e., $D_{sol}$-$A_{insol}$ in resin composition I) contained in an n-decane extract of the resin composition I is preferably 0.05 g or more and 0.30 g or less, more preferably 0.06 g or more and 0.25 g or less, and still more preferably 0.08 g or more and 0.20 g or less, per 1 g of the resin composition I. In this case, the expanded bead can be more easily obtained. Note that $D_{sol}$-$A_{insol}$ in the resin composition I is a component mainly derived from the ethylene propylene-based rubber. The method of measuring the amount of $D_{sol}$-$A_{insol}$ in the resin composition I is the same as the method of measuring the amount of $D_{sol}$-$A_{insol}$ in the expanded bead described above, except that the resin composition I is used instead of the expanded bead and the amount of $D_{sol}$-$A_{insol}$ per 1 g of the resin composition I is calculated.

The resin composition I may contain resins other than the polypropylene-based resin, elastomers other than the ethylene propylene-based rubber, or the like to the extent that the above-described functions and effects are not impaired. Examples of the resins that can be contained in the resin composition I include polystyrene-based resins, polyethylene-based resins, and acrylonitrile-butadiene-styrene resins, and examples of the elastomers include ethylene-butene rubber and ethylene-octene rubber. Note that these resins and elastomers may also be derived from post-consumer materials.

The resin composition I may contain any inorganic substances such as talc, silica, or glass fiber to the extent that the above-mentioned functions and effects are not impaired. The main component of the inorganic substances contained in the resin composition I is preferably talc. In this case, the fusion bondability of the expanded beads can be further improved even when using the resin composition I with a relatively high melting point. As a result, the in-mold moldability of the expanded beads can be further improved. For this reason, it is considered that the average cell diameter of the expanded beads tends to be small, or the like.

The resin composition I may contain any additives such as a cell controlling agent, a crystal nucleating agent, a flame retardant, a flame retardant aid, a plasticizer, an antistatic agent, an antioxidant, an ultraviolet absorber, a light stabilizer, an antibacterial agent, and a colorant to the extent that the above-described functions and effects are not impaired. The resin composition I preferably contains carbon black as a colorant. In this case, for example, the amount of carbon black contained in the resin composition A may be 0.1 mass% or more and 2 mass% or less, or 0.2 mass% or more and 1 mass% or less. By setting the amount of carbon black contained in the resin composition I to fall within the specific range mentioned above, a molded article provided with a mottled pattern of relatively pale black (gray) and white and having excellent designability can be obtained.

•Polypropylene-based resin B

The polypropylene-based resin B (hereinafter, also referred to as resin B) used in the preparation of the resin particles may be a polypropylene-based resin (i.e., a non-recycled polypropylene-based resin) having no thermal history applied due to molding processing for molding a molded article or the like, or a polypropylene-based resin (more specifically, a recycled polypropylene-based resin obtained by material recycling) having thermal history applied. From the viewpoint of more stably improving the in-mold moldability of the expanded beads, the resin B is preferably a non-recycled polypropylene-based resin.

The melting point $Tm_B$ of the resin B is preferably 125°C or higher and lower than 160°C, more preferably 130°C or higher and lower than 160°C, still more preferably 135°C or higher and 158°C or lower, particularly preferably 140°C or higher and 156°C or lower, and most particularly preferably 142°C or higher and 155°C or lower. In this case, the expandability in the production process of the expanded beads can be further enhanced, and the in-mold moldability of the expanded beads can be further enhanced.

The method for measuring the melting point $Tm_B$ of the resin B is the same as the method for measuring the melting point Tm of the expanded bead described above, except that a test piece made of the resin B is used instead of the expanded bead. Note that when two or more types of polypropylene-based resins are used as the resin B in the production of the expanded beads, it is sufficient to melt-mix a plurality of types of polypropylene-based resins in the same mixing ratio as the ratio in the production process of the expanded beads, and to use a test piece made of a molten mixture of these polypropylene-based resins.

The flexural modulus $M_B$ of the resin B is preferably 800 MPa or more, more preferably 850 MPa or more, and still more preferably 900 MPa or more. In this case, the in-mold moldability of the expanded beads can be more easily improved, and the balance of rigidity to molding pressure can be more easily improved. From the viewpoints of more easily improving the in-mold moldability of the expanded beads and further extending the moldable range, the flexural modulus $M_B$ of the resin B is preferably 1500 MPa or less, more preferably 1400 MPa or less, still more preferably 1350 MPa or less, and particularly preferably 1300 MPa or less.

In configuring a preferable range of the flexural modulus $M_B$ of the resin B, the upper limit and the lower limit of the flexural modulus $M_B$ of the resin B described above can be arbitrarily combined. For example, the preferable range of the flexural modulus $M_B$ of the resin B may be 800 MPa or more and 1500 MPa or less, may be 800 MPa or more and 1400 MPa or less, may be 850 MPa or more and 1350 MPa or less, may be 900 MPa or more and 1500 MPa or less, may be 900 MPa or more and 1400 MPa or less, or may be 900 MPa or more and 1300 MPa or less.

Note that the flexural modulus $M_B$ of the resin B can be determined in accordance with JIS K7171:2008. When two or more types of polypropylene-based resins are used as the resin B in the production of the expanded beads, a plurality of types of polypropylene-based resins may be melt-mixed in the same mixing ratio as the ratio in the production process of the expanded beads, and the flexural modulus of a test piece formed of a molten mixture of these polypropylene-based resins is taken as the flexural modulus $M_B$ of the resin B.

The ash content of the resin B is preferably less than 1 mass%, and more preferably 0.5 mass% or less. In this case, the in-mold moldability of the expanded beads can be further improved while maintaining good expandability in the production process of the expanded beads, and the range of the molding pressure to obtain a good molded article can be further extended.

The ash content of B described above can be measured in accordance with the direct ashing method (method A) of JIS K7250-1:2006. More specifically, the ash content of the resin B can be calculated from the mass of residues remaining after combustion of the resin B.

The melt mass flow rate $MFR_B$ of the resin B as measured under the conditions of a temperature of 230°C and a load of 2.16 kg is preferably 3 g/10 min or more and 10 g/10 min or less, and more preferably 6 g/10 min or more and 9 g/10 min or less. In this case, the in-mold moldability of the expanded beads can be more stably improved. Note that when two or more types of polypropylene-based resins are used as the resin B, the melt mass flow rate of a sample obtained by melt-mixing these polypropylene-based resins at the ratio same as the blending ratio in the production process of the expanded beads is taken as the melt mass flow rate $MFR_B$ of the resin B.

A heat of fusion $H_B$ of the resin B is preferably 50 J/g or more and 100 J/g or less. In this case, the in-mold moldability of the expanded beads can be more stably improved. From the same viewpoint, the heat of fusion $H_B$ of the polypropylene-based resin B is more preferably 60 J/g or more and 98 J/g or less, still more preferably 65 J/g or more and 96 J/g or less. Note that when two or more types of polypropylene-based resins are used as the resin B, the heat of fusion of a sample obtained by melt-mixing these polypropylene-based resins at the mass ratio same as the mass ratio during the preparation of the resin particles is taken as the heat of fusion $H_B$ of the resin B.

The heat of fusion $H_B$ of the resin B can be determined on the basis of a DSC curve acquired by performing differential scanning calorimetry (DSC) in accordance with JIS K 7122-1987. Specifically, first, the resin B is used as a test piece, and the test piece is conditioned based on "(2) The case of measurement of heat of fusion after a definite heat treatment" of "3. Conditioning of test piece" in JIS K7122-1987. The heating rate and the cooling rate in the conditioning are both 10°C/min, and the temperature range is from 23°C to 230°C. Thereafter, the conditioned test piece is heated again from 23°C to 230°C at a rate of 10°C/min to obtain a DSC curve (DSC curve during second heating). Note that the flow rate of nitrogen gas under the measurement environment is 30 mL per minute. On this DSC curve, a straight line connecting a point corresponding to 80°C and an end point on the higher temperature side of the melting peak with the highest vertex temperature is drawn. The heat of fusion $H_B$ of the resin B can be calculated based on the area of the region surrounded by the straight line determined in this manner and the melting peak of the DSC curve.

The resin B is preferably a propylene-based copolymer containing 70 mass% or more of a propylene-derived structural unit, and more preferably a propylene-based copolymer containing 80 mass% or more of a propylene-derived structural unit. By using such resin B, expanded beads having excellent in-mold moldability can be more easily obtained. Note that the resin B may contain two or more types of propylene-based copolymers.

From the same viewpoint, the resin B is preferably a copolymer of propylene with ethylene and/or an $\alpha$-olefin having 4 or more carbon atoms. The copolymer is more preferably a random copolymer (i.e., a propylene-based random copolymer).

Examples of the $\alpha$-olefins used in the propylene-based copolymer include 1-butene, 1-pentene, 1-hexene, 1-octene, and 4-methyl-1-butene. The total content (i.e., the content of the comonomer components) of the content of the structural unit derived from ethylene and the content of the structural units derived from the $\alpha$-olefins having 4 or more carbon atoms in the propylene-based copolymer is preferably 1 mass% or more and 15 mass% or less, and more preferably 2 mass% or more and 12 mass% or less.

Note that when two or more types of polypropylene-based resins are used as the resin B, the ratio of the mass of the comonomer components to the total mass of these polypropylene-based resins (i.e., the total mass of the resin B) is taken as the content of the comonomer components described above. That is, when two or more types of polypropylene-based resins are used as the resin B, the content of the comonomer components is the sum of the content of the structural unit derived from ethylene and the contents of the structural units derived from the $\alpha$-olefins having 4 or more carbon atoms in a sample obtained by melt-mixing the multiple types of polypropylene-based resins at the ratio same as the blending ratio in the production process of the expanded beads.

The main component of the resin B is preferably a copolymer of propylene with ethylene and/or butene, and more preferably a propylene-based copolymer b1 containing a structural unit derived from ethylene (i.e., an ethylene component) as a copolymerization component and/or a propylene-based copolymer b2 containing a structural unit derived from ethylene and 1-butene (i.e., an ethylene component and a butene component) as a copolymerization component. In this case, the in-mold moldability of the expanded beads can be more reliably improved.

Examples of the propylene-based copolymer b1 (hereinafter, referred to as "copolymer b1") include a propylene-ethylene random copolymer, and so on. Examples of the propylene-based copolymer b2 (hereinafter, referred to as "copolymer b2") includes a propylene-ethylene-butene random copolymer, and so on. The sum of the ratio of the copolymer b1 and the ratio of the copolymer b2 with respect to the total mass of the resin B contained in the expanded beads is preferably 60 mass% or more, more preferably 80 mass% or more, and still more preferably 90 mass% or more.

When the resin B contains the copolymer b1 as a main component, the content of the ethylene component in the copolymer b1 is preferably 1 mass% or more, and more preferably 2 mass% or more. In this case, the in-mold moldability of the expanded beads when in-mold molding is performed at a low molding pressure can be further improved.

In addition, the content of the ethylene component in the copolymer b1 is preferably 6 mass% or less, more preferably 5 mass% or less, still more preferably 4 mass% or less, and particularly preferably 3 mass% or less. In this case, a molded article with adequate compressive strength and the like can be more easily obtained.

When the resin B contains the copolymer b2 as a main component, the sum of the content of the ethylene component and the content of the butene component in the copolymer b2 is preferably 2 mass% or more, more preferably 4 mass% or more, and still more preferably 6 mass% or more. In this case, the in-mold moldability of the expanded beads when in-mold molding is performed at a low molding pressure can be further improved.

In addition, the sum of the content of the ethylene component and the content of the butene component in the copolymer b2 is preferably 15 mass% or less, and more preferably 12 mass% or less. In this case, a molded article with adequate compressive strength and the like can be more easily obtained.

From the viewpoints of enabling molding at a relatively low molding pressure and more easily obtaining a molded article with adequate compressive strength and the like, the ratio of the content of the butene component to the content of the ethylene component in the copolymer b2 is preferably 7 or more and 25 or less, more preferably 8 or more and 20 or less, and still more preferably 10 or more and 18 or less.

The contents of the component derived from ethylene and the component derived from butene in the resin B can be determined, for example, based on an IR spectrum. A method for measuring the contents of the component derived from ethylene and the component derived from butene in the resin B will be described in detail in Examples.

In configuring a preferable range of the contents of the comonomer components in the resin B or the like, the upper limit value and the lower limit value described above can be arbitrarily combined.

The resin B may contain an additive such as a cell controlling agent, a crystal nucleating agent, a flame retardant, a flame retardant aid, a plasticizer, an antistatic agent, an antioxidant, an ultraviolet absorber, a light stabilizer, an antibacterial agent, and a colorant to the extent that the above-described functions and effects are not impaired.

•Mixing ratio

The mixing ratio of the resin composition I and the resin B in the core layer (provided that the sum of the mass of the resin composition I and the mass of the resin B is 100 mass%) is preferably resin composition I : resin B = 2 : 98 to 70 : 30. That is, the mass ratio of the resin composition I to the sum of the resin composition I and the resin B blended in the core layer is preferably 2 mass% or more and 70 mass% or less.

When the resin composition A is used as the resin composition I to be contained in the core layer, setting the mass ratio of the resin composition A to 2 mass% or more makes it possible to increase the amount of the resin composition A, which is derived from a recycled material such as a post-consumer material blendable in the resin particles and to utilize the resin component derived from the recycled material more effectively.

From the viewpoint of further improving the shock absorption performance of the molded article, the mass ratio of the resin composition I to the sum of the resin composition I and the resin B is preferably 3 mass% or more, more preferably 5 mass% or more, still more preferably 8 mass% or more, and particularly preferably 10 mass% or more. In this case, it becomes easier to increase compressive stress at a relatively small amount of compressive strain when compressive strain is applied to the molded article. Also, in this case, the increase rate in compressive stress with increasing strain can be further reduced, and the shock absorption performance of the molded article can be further improved.

By setting the mass ratio of the resin composition I to 70 mass% or less, the in-mold moldability of the expanded beads can be more easily improved. From the viewpoint of more stably improving the in-mold moldability of the expanded beads, the mass ratio of the resin composition I to the sum of the resin composition I and the resin B is preferably 65 mass% or less, more preferably 60 mass% or less, still more preferably 50 mass% or less, particularly preferably 45 mass% or less, and most preferably 40 mass% or less.

In configuring the preferable range of the mass ratio of the resin composition I, the upper limit value and the lower limit value of the mass ratio of the resin composition I described above can be arbitrarily combined. For example, a preferable range of the mass ratio between the resin composition I and the resin B may be resin composition I : resin B = 3 : 97 to 65 : 35, 3 : 97 to 60 : 40, 8 : 92 to 60 : 40, 10 : 90 to 70 : 30, 10 : 90 to 50 : 50, 3 : 97 to 40 : 60, or 2 : 98 to 45 : 55.

•Melting point difference

The difference $Tm_I$-$Tm_B$ between the melting point $Tm_I$ of the resin composition I and the melting point $Tm_B$ of the resin B is preferably 5°C or more. In this case, the in-mold moldability of the expanded beads can be further improved, and the range of the molding pressure at which a good molded article can be obtained can be further extended. From the viewpoint of more reliably obtaining such functions and effects, the melting point difference $Tm_I$-$Tm_B$ is more preferably 8°C or more, and still more preferably 10°C or more. From the same viewpoint, the melting point difference $Tm_I$-$Tm_B$ is preferably 35°C or less, more preferably 30°C or less, still more preferably 28°C or less, particularly preferably 25°C or less, and most preferably 20°C or less.

In configuring a preferable range of the melting point difference $Tm_I$-$Tm_B$, the upper limit and the lower limit of the melting point difference $Tm_I$-$Tm_B$ described above can be arbitrarily combined. For example, a preferable range of the melting point difference $Tm_I$-$Tm_B$ may be 5°C or more and 35°C or less, 8°C or more and 28°C or less, 10°C or more and 30°C or less, 10°C or more and 25°C or less, or 5°C or more and 20°C or less.

•Melt mass flow rate difference

The difference $MFR_I$-$MFR_B$ between the melt mass flow rate $MFR_I$ of the resin composition I and the melt mass flow rate $MFR_B$ of the resin B is preferably 5 g/10 min or more, more preferably 8 g/10 min or more, and still more preferably 12 g/10 min or more. The difference $MFR_I$-$MFR_B$ between the melt mass flow rates is preferably 40 g/10 min or less, more preferably 35 g/10 min or less, still more preferably 30 g/10 min or more, and particularly preferably 25 g/10 min or less. In this case, variations in the in-mold moldability of the expanded beads can be further reduced.

In configuring a preferable range of the difference $MFR_I$-$MFR_B$ between the melt mass flow rates, the upper limit and the lower limit of the difference $MFR_I$-$MFR_B$ between the melt mass flow rates described above can be arbitrarily combined. For example, the difference $MFR_I$-$MFR_B$ between the melt mass flow rates may be 5 g/10 min or more and 40 g/10 min or less, 5 g/10 min or more and 35 g/10 min or less, 8 g/10 min or more and 30 g/10 min or less, 12 g/10 min or more and 25 g/10 min or less, or 10 g/10 min or more and 40 g/10 min or less.

•Ratio of melt mass flow rate

The ratio $MFR_I$/$MFR_B$ of the melt mass flow rate $MFR_I$ of the resin composition I to the melt mass flow rate $MFR_B$ of the resin B is preferably 0.3 or more and 8 or less, more preferably 0.5 or more and 7.5 or less, and still more preferably 1 or more and 7 or less. In this case, the balance between the expandability and the in-mold moldability becomes good, and the in-mold moldability can be more easily improved even when the apparent density is low.

•Ratio of flexural modulus

The ratio $M_B$/$M_I$ of the flexural modulus $M_B$ of the resin B to the flexural modulus $M_I$ of the resin composition I is preferably 0.8 or more, more preferably 0.9 or more, still more preferably 1 or more, and particularly preferably more than 1. The ratio $M_B$/$M_I$ of the flexural modulus $M_B$ of the resin B to the flexural modulus $M_I$ of the resin composition I is preferably 2 or less, more preferably 1.6 or less, and still more preferably 1.5 or less. By setting the flexural modulus $M_B$ of the resin B to be combined with the resin composition I within the specific range mentioned above, the in-mold moldability of the expanded beads can be further improved. Furthermore, by performing in-mold molding using such expanded beads, the compressive strength of the molded article can be more easily increased.

In configuring a preferable range of the ratio $M_B$/$M_I$ of the flexural modulus, the upper limit and the lower limit of the ratio $M_B$/$M_I$ described above can be arbitrarily combined. For example, a preferable range of the ratio $M_B$/$M_I$ may be 0.8 or more and 2 or less, 0.9 or more and 1.6 or less, more than 1 and 2 or less, or 1 or more and 1.5 or less.

Note that by using the resin composition I having a melting point higher than or equal to a specific temperature, it becomes easier to increase compressive stress of a resulting molded article at a relatively small amount of compressive strain. On the other hand, when the resin composition A is used as the resin composition I, the ratio of the flexural modulus $M_A$ to the melting point $Tm_A$ of the resin composition A tends to be relatively low, and the in-mold moldability of the expanded beads tends to be deteriorated. When the polypropylene-based resin composition which constitutes the foamed layer contains such resin composition A and the resin B having a relatively high flexural modulus while having a melting point $Tm_B$ lower than the melting point $Tm_A$ of the resin composition A, it becomes easy to stably obtain expanded beads that makes it possible to mold a molded article excellent in in-mold moldability and excellent in compressive strength. This may be because the balance between the melting point and the flexural modulus in the foamed layer becomes well-balanced.

From the viewpoint of more reliably obtaining the above-mentioned effect, the core layer of the resin particles in the production method of expanded beads is preferably formed of a molten mixture of a polypropylene-based resin composition A having a melting point $Tm_A$ of 160°C or higher and a flexural modulus $M_A$ of 800 MPa or more and 1200 MPa or less and a polypropylene-based resin B having a melting point $Tm_B$ lower than 160°C and a flexural modulus $M_B$ of 900 MPa or more and 1400 MPa or less,

wherein the polypropylene-based resin composition A preferably contains a polypropylene-based resin derived from a post-consumer material as recycled polypropylene and an ethylene propylene-based rubber, a ratio $M_B$/$M_A$ of the flexural modulus $M_B$ to the flexural modulus $M_A$ is preferably 1 or more, and the mass ratio between the polypropylene-based resin composition A and the polypropylene-based resin B in the core layer is preferably polypropylene-based resin composition A : polypropylene-based resin B = 10 : 90 to 70 : 30. In this case, the resin component derived from a post-consumer material can be effectively used, and an expanded beads molded article having good in-mold moldability and excellent compressive strength can be stably obtained.

It is preferable that a heat of fusion $H_I$ of the resin composition I is 60 J/g or more and 100 J/g or less, a heat of fusion $H_B$ of the resin B is 60 J/g or more and 100 J/g or less, and the sum $H_I + H_B$ of the heat of fusion $H_I$ and the heat of fusion $H_B$ is 140 J/g or more and 175 J/g or less. When the resin composition A is used as the resin composition I, the resin composition A, which is derived from a recycled material such as a post-consumer material, tends to have large variations in physical properties in comparison between different lots. In contrast, by setting the heat of fusion $H_I$ of the resin composition I and the heat of fusion $H_B$ of the resin B within the specific ranges mentioned above, and further by setting the sum $H_I + H_B$ of the heats of fusion within the specific range mentioned above, the in-mold moldability of the expanded beads can be more stably improved even when using the resin composition A, which exhibits large variation of physical properties. From the same viewpoint, the ratio $H_B/H_I$ of the heat of fusion $H_B$ of the resin B to the heat of fusion $H_I$ of the resin composition I is preferably 0.7 or more and 1.2 or less, and more preferably 0.8 or more and 1.1 or less.

Note that the method for measuring the heat of fusion $H_I$ of the resin composition I is the same as the method for measuring the heat of fusion $H_B$ of the resin B described above, except that the resin composition I is used as a test piece instead of the resin B.

The method for preparing the resin particles is not particularly limited. For example, in the case of preparing resin particles having a single layer structure by a strand cut method, the resin composition I, the resin B, an additive and the like to be used as necessary are supplied into an extruder, and the resin composition I and the resin B are kneaded while being heated in the extruder to obtain a molten mixture. This molten mixture is extruded in a strand shape from a small hole of a die attached downstream of the extruder. By drawing the strand extruded product and cutting the strand extruded product into a desired length, resin particles made of a molten mixture (more specifically, a melt-kneaded product) of the resin composition I and the resin B can be obtained.

The operation of preparing a molten mixture of the resin composition I and the resin B and the operation of preparing resin particles from the molten mixture may be carried out in the same extruder as described above. For example, the two operations described above may be carried out by using different extruders or the like.

The amount of the acetone-insoluble fraction (i.e., $D_{sol}$-$A_{insol}$ in the resin particles) contained in an n-decane extract of the resin particle is preferably 0.02 g or more and 0.10 g or less per 1 g of the resin particles. $D_{sol}$-$A_{insol}$ in the resin particles is mainly composed of an ethylene propylene-based rubber. By setting the amount of $D_{sol}$-$A_{insol}$ in the resin particles within the specific range mentioned above, the expanded beads can be more easily obtained. From the viewpoint of further enhancing the shock absorption performance of the molded article, the amount of $D_{sol}$-$A_{insol}$ in the resin particles is more preferably 0.03 g or more, still more preferably 0.04 g or more per 1 g of the resin particles. In addition, from the viewpoint of more reliably avoiding a deterioration of the in-mold moldability of the expanded beads, the amount of $D_{sol}$-$A_{insol}$ in the resin particles is more preferably 0.09 g or less, still more preferably 0.08 g or less, and particularly preferably 0.07 g or less per 1 g of the resin particles.

In configuring a preferable range of the amount of $D_{sol}$-$A_{insol}$ in the resin particles, the upper limit and the lower limit of the amount of $D_{sol}$-$A_{insol}$ in the resin particles described above can be arbitrarily combined. For example, a preferable range of the amount of $D_{sol}$-$A_{insol}$ in the resin particles may be 0.03 g or more and 0.09 g or less, 0.04 g or more and 0.08 g or less, or 0.04 g or more and 0.07 g or less per 1 g of the resin particles. The method for measuring the amount of $D_{sol}$-$A_{insol}$ in the resin particles is the same as the method for measuring the amount of $D_{sol}$-$A_{insol}$ in the expanded beads described above, except that resin particles are used instead of the expanded beads and the amount per 1 g of the resin particles is calculated.

The melting point Tmr of the resin particle is preferably 130°C or higher and 162°C or lower. By setting the melting point Tmr of the resin particle within the specific range mentioned above, the expanded bead can be more easily obtained. From the viewpoint of more easily improving the compression properties of the molded article, the melting point Tmr of the resin particle is preferably 135°C or higher, more preferably 140°C or higher, still more preferably 143°C or higher, particularly preferably 146°C or higher, and most preferably 150°C or higher. From the viewpoint of more easily obtaining expanded beads having good in-mold moldability, the melting point Tmr of the resin particle is preferably 160°C or lower, and more preferably 158°C or lower.

In configuring a preferable range of the melting point Tmr of the resin particle, the upper limit and the lower limit of the melting point Tmr of the resin particle described above can be arbitrarily combined. For example, a preferable range of the melting point Tmr of the resin particle may be 135°C or higher and 160°C or lower, 140°C or higher and 158°C or lower, 143°C or higher and 158°C or lower, 146°C or higher and 158°C or lower, or 150°C or higher and 162°C or lower. The method for measuring the melting point Tmr of the resin particles is the same as the method for measuring the melting point Tm of the expanded beads described above, except that a test piece made of the resin particles is used instead of the test piece made of the expanded beads.

The flexural modulus of the polypropylene-based resin composition (more specifically, a molten mixture of resin composition I and resin B) constituting the core layer of the resin particle is preferably 800 MPa or more and 1600 MPa or less, more preferably 800 MPa or more and 1400 MPa or less, still more preferably 800 MPa or more and 1300 MPa or less, particularly preferably 900 MPa or more and 1300 MPa or less, and most preferably 900 MPa or more and 1200 MPa or less. In this case, the in-mold moldability of the expanded beads can be further improved.

The difference $Tm_r$-$Tc_r$ between the melting point $Tm_r$ of the resin particle and the crystallization temperature $Tc_r$ of the resin particle is preferably 38°C or less. In this case, the expanded bead can be more easily obtained. Note that the lower limit of the difference $Tm_r$-$Tc_r$ in the resin particle is typically 30°C. The lower limit of the difference $Tm_r$-$Tc_r$ is preferably 32°C. The method for measuring the crystallization temperature $Tc_r$ of the resin particle is the same as the method for measuring the crystallization temperature $Tc_r$ of the expanded bead described above except that a test piece made of the resin particle is used instead of the test piece made of the expanded bead.

In the polypropylene-based resin composition constituting the core layer, the rubbery bodies preferably exist as domains dispersed in a matrix made of a polypropylene-based resin. In this case, from the viewpoint of stably improving the in-mold moldability of the expanded beads, the average diameter of the rubbery bodies dispersed in the polypropylene-based resin in the resin particle is preferably 0.1 $\mu$m or more and 2 $\mu$m or less, more preferably 0.3 $\mu$m or more and 1.5 $\mu$m or less, and still more preferably 0.5 $\mu$m or more and 1 $\mu$m or less. The method for observing the morphology of the resin particle and the method for measuring the average diameter of the rubbery bodies in the resin particle are the same as the method for observing the morphology of the expanded bead and the method for measuring the average diameter of the rubbery bodies in the expanded bead described above, except that the resin particle is used instead of the expanded bead.

In the direct foaming(expanding) method described later, expanded beads excellent in terms of enhancing expandability during the production of expanded beads from resin particles and excellent in in-mold moldability can be stably obtained. From the same viewpoint, it is preferable that the core layer of the resin particle is formed of a molten mixture of impact polypropylene as the polypropylene-based resin composition I and a propylene-based random copolymer as the polypropylene-based resin B, wherein

a difference $Tm_I$-$Tm_B$ between the melting point $Tm_I$ of impact polypropylene as the resin composition I and the melting point $Tm_B$ of a propylene-based random copolymer as the resin B is 5°C or more and 35°C or less,
a melt mass flow rate $MFR_I$ of the resin composition I is 3 g/10 min or more as measured under conditions of a temperature of 230°C and a load of 2.16 kg,
a melt mass flow rate $MFR_B$ of the resin B is from 3 g/10 min to 10 g/10 min as measured under conditions of a temperature of 230°C and a load of 2.16 kg, and
a ratio $MFR_I/MFR_B$ of the melt mass flow rate $MFR_I$ of the resin composition I to the melt mass flow rate $MFR_B$ of the resin B is preferably 0.3 or more and 8 or less.

[Foaming (Expansion)]

Next, the resin particles are foamed (expanded). The method for foaming(expanding) the resin particles is not particularly limited, but the resin particles are preferably expanded by a method called "direct foaming(expanding) method" in which resin particles impregnated with a blowing agent, which are dispersed in an aqueous medium in a container, are released together with the aqueous medium from the container to an atmosphere of a lower pressure than the pressure in the container. Preferred aspects of the foaming method will be described below.

In foaming the resin particles by the direct foaming method, first, the resin particles are put into a container such as a pressure container and dispersed in an aqueous medium. At this time, a dispersant, a dispersion aid, a surfactant, and the like for dispersing the resin particles in the aqueous medium in the container may be added as necessary.

As the dispersant, for example, inorganic fine particles such as aluminum oxide, tricalcium phosphate, magnesium pyrophosphate, zinc oxide, kaolin, and mica can be used. These inorganic fine particles may be used alone, or two or more types of the inorganic fine particles may be used in combination. As the dispersion aid, for example, aluminum sulfate or the like can be used. As the surfactant, for example, an anionic surfactant such as sodium alkylbenzene sulfonate, sodium dodecylbenzene sulfonate, or sodium alkanesulfonate can be used. These surfactants may be used alone, or two or more types of the surfactants may be used in combination.

Next, a blowing agent is supplied into the container, and the pressure in the container is increased to impregnate the resin particles with the blowing agent. In this way, resin particles containing the blowing agent can be obtained. At this time, by heating the resin particles in the container together with the aqueous medium, impregnation of the blowing agent into the resin particles can be promoted.

As the blowing agent used in the foaming step, examples that can be used include: an inorganic physical blowing agent such as carbon dioxide, air, nitrogen, helium, or argon; an organic physical blowing agent such as a hydrocarbon including propane, n-butane, isobutane, n-pentane, isopentane, or hexane; and a halogenated hydrocarbon including ethyl chloride, 2,3,3,3-tetrafluoropropene, trans-1,3,3,3-tetrafluoropropene, or trans-1-chloro-3,3,3-trifluoropropene. From the viewpoint of environmental load and handleability, carbon dioxide is preferably used as the blowing agent.

The addition amount of the blowing agent is preferably 0.1 parts by mass or more and 30 parts by mass or less, and preferably 0.5 parts by mass or more and 15 parts by mass or less per 100 parts by mass of the resin particles.

The pressure in the container immediately before foaming(expansion) is preferably 0.5 MPa(G) or more in terms of gauge pressure. On the other hand, the pressure in the container is preferably 4.0 MPa(G) or less in terms of gauge pressure. When the pressure is within the above-mentioned range, expanded beads can be safely produced without the risk of container damage, explosion, or the like.

After impregnating the resin particles with the blowing agent, the contents of the container are released to an atmosphere of a lower pressure than the pressure in the container. As a result, the resin particles expand to form a cell structure, and the cell structure is cooled and stabilized by the outside air (i.e., the atmosphere) to obtain the expanded beads.

In the production method, a step of controlling the crystal structure of the resin component contained in the resin particles may be performed in between the time when the resin particles are dispersed in the aqueous medium and the time when the resin particles are expanded. By foaming the resin particles after controlling the crystal structure of the resin component, the expanded beads with excellent in-mold moldability and adequate compressive strength can be easily obtained.

A method for controlling the crystal structure of the resin component is, for example, as follows. First, a holding step is performed in which the temperature of the resin particles is maintained within a temperature range of (the melting point of the resin composition constituting the core layer of the resin particles minus 15°C) or higher and (the melting point of the resin composition plus 15°C) or lower for a sufficient time, preferably about 10 to 60 minutes. By foaming the resin particles that have undergone this holding step, the expanded beads with a crystal structure exhibiting the above described high-temperature peak on the DSC curve can be obtained. Note that the temperature in the container during foaming (expansion) is preferably (the melting point of the resin composition minus 5°C) or higher and (the melting point of the resin composition plus 10°C) or lower.

In the production method, resin particles that have undergone the holding step may be prepared in advance, and then these resin particles may be foamed (expanded) to obtain expanded beads. From the viewpoint of enhancing the productivity of the expanded beads, it is preferable to obtain the expanded beads having a crystal structure exhibiting the above-described high-temperature peak by heating the resin particles dispersed in the dispersion medium in the container in the presence of the blowing agent to perform the holding step, and then releasing the content of the sealed container from the inside of the container to an atmosphere at a pressure lower than the pressure in the container to expand the resin particles.

As for the reason why the mechanical strength and the in-mold moldability of the expanded beads can be improved by heating and foaming under the conditions described above, it is conceivable that secondary crystals of the polypropylene-based resin are formed in the resin composition forming the expanded beads. Whether secondary crystals of the polypropylene-based resin are formed can be determined by the presence or absence of the high-temperature peak on the DSC curve.

In the production method, when the resin particles are expanded, the resin particles may be expanded in one step as described above, or the resin particles may be expanded in multiple steps of two or more steps. In the case of expanding the resin particles in two steps, first, in the first expanding step, the resin particles are expanded by a direct foaming method or the like to obtain first-step expanded beads. In the second expanding step, for example, the first-step expanded beads are subjected to a pressurization treatment with air or the like to increase the pressure (internal pressure) in the cells of the first-step expanded beads, and then the first-step expanded beads have only to be heated with steam or the like to be further expanded. By expanding the resin particles in multiple steps in this manner, expanded beads with a higher expansion ratio (i.e., low bulk density) can be easily obtained.

(Polypropylene-based resin expanded beads molded article)

After the expanded beads are filled in a mold, a heating medium such as steam is supplied into the mold to perform in-mold molding, whereby a molded article can be obtained. The density of the molded article is preferably 10 kg/m$^3$ or more and 200 kg/m$^3$ or less. In this case, the balance between the lightweight property and the compressive strength of the molded article is further improved.

From the viewpoint of further increasing the compressive strength of the molded article, the density of the molded article is more preferably 12 kg/m$^3$ or more, still more preferably 15 kg/m$^3$ or more, and particularly preferably 20 kg/m$^3$ or more. From the viewpoint of further enhancing the lightweight property of the molded article, the density of the molded article is more preferably 100 kg/m$^3$ or less, still more preferably 80 kg/m$^3$ or less, particularly preferably 70 kg/m$^3$ or less, and most preferably 60 kg/m$^3$ or less. The density of the molded article is calculated by dividing the mass (unit: g) of the molded article by the volume (unit: L) obtained from the outer dimension of the molded article and then converting units.

From the viewpoint of further improving the mechanical properties of the molded article, the closed cell content of the molded article is preferably 70% or more, more preferably 75% or more, and still more preferably 80% or more.

The closed cell content of the molded article is measured in accordance with ASTM 2865-70 Procedure C. Specifically, first, a test specimen of 25 mm in length × 25 mm in width × 30 mm in height is cut out from the central part of the molded article, and the geometric volume Va (unit: cm$^3$) of the test specimen, that is, the product of the longitudinal dimension (unit: cm), the lateral dimension (unit: cm), and the height dimension (unit: cm) is calculated. Next, according to Procedure C described in ASTM-D2856-70, the true volume value Vx of the test specimen is measured with an air comparison pycnometer (specifically, "Beckman Model 1000 Air Comparison Pycnometer" manufactured by Tokyo-Science. Co., Ltd.). Note that the true volume value Vx obtained by the air comparison pycnometer is the sum (unit: cm$^3$) of the volume of the resin constituting the measurement sample and the total cell volume of the closed cell portion in the measurement sample.

The closed cell content (unit: %) of the test specimen is expressed by the following equation (2) using the mass W (unit: g) of the test specimen, the density $\rho$ (unit: g/cm$^3$) of the resin constituting the expanded beads, and the geometric volume Va of the test specimen and the true volume Vx of the test specimen obtained by the above-described method.

$$\text{Closed cell content} = (Vx - W/\rho) \times 100/(Va - W/\rho) \ ... \ (2)$$

The operation described above is performed on five test specimens, and the closed cell content of each test specimen is calculated. Then, the arithmetic mean value of the closed cell contents of these five test specimens is taken as the closed cell content of the molded article.

[Compression properties of molded article]

The ratio of the compressive strength at 5% to the compressive strength at 50% of the molded article is preferably 0.45 or more, more preferably 0.50 or more, still more preferably 0.52 or more, and particularly preferably 0.55 or more. The energy absorption properties of the molded article can be evaluated based on the magnitude of compressive stress at various amounts of strain. More specifically, in a stress-strain curve with the amount of strain applied to the molded article on the horizontal axis and the compressive stress corresponding to the amount of strain on the vertical axis, the closer the shape of the stress-strain curve from the start of compression until the amount of strain of $\varepsilon_a$ is to a rectangle, the more desirable the energy absorption characteristics of the molded article has. In other words, the smaller the difference between the compressive stress $\sigma_a$ at the amount of strain of $\varepsilon_a$ and the compressive stress $\sigma_b$ at the amount of strain of $\varepsilon_b$, which is smaller than the amount of strain of $\varepsilon_a$, the closer the shape of the stress-strain curve is to a rectangle, and it can be said that the energy absorption characteristics of the molded article in the region until the amount of strain of $\varepsilon_a$ are favorable. Note that the upper limit of the ratio of the compressive strength at 5% to the compressive strength at 50% of the molded article is not particularly limited as long as the intended purpose of the present invention can be achieved, but is usually 1.0, may be 0.8, or may be 0.7.

The molded article the compressive strength ratio of which falls within the range specified above has a stress-strain curve that is closer to a rectangular shape, and thus exhibits good compression properties and energy absorption characteristics of the molded article can be improved over a wide range of the amounts of strain. Such a molded article can be suitably used as a vehicle member. Examples of the vehicle members include shock absorbing materials such as a bumper core, a tibia pad, a floor spacer, and a seat core material.

The compressive strength at 5% and the compressive strength at 50% of the molded article are values obtained based on a method defined in JIS K7220:2006. Note that the method of measuring the compressive strength at 5% and the compressive strength at 50% of the molded article will be described in more detail in Examples.

(Resin raw material)

The resin raw material for expanded beads used in the method for producing expanded beads is preferably a polypropylene-based resin composition containing a polypropylene-based resin composition a derived from an automobile member and having a melting point of 160°C or higher.

By using such a resin raw material for expanded beads as the polypropylene-based resin composition A in the production method, expanded beads with excellent in-mold moldability can be produced, and furthermore, a resin component derived from an automobile member can be effectively utilized as a resource.

The resin raw material includes, at least, a polypropylene-based resin composition a derived from automobile members, that is, automobile members made of a polypropylene-based resin composition such as bumpers or instrument panels; a recycled polypropylene-based resin composition derived from defective products, offcuts, or the like generated in the production process of automobile members; and a recycled polypropylene-based resin composition mainly composed of a polypropylene-based resin composition recovered from ASR. The resin raw material may also contain, in addition to the polypropylene-based resin composition a derived from automobile members, a recycled polypropylene-based resin composition derived from consumer goods other than automobiles, such as home appliances, and a non-recycled polypropylene-based resin.

From the viewpoint of material recycling of resin components derived from automobile members, the content of the polypropylene-based resin composition a which is derived from automobile members and is contained in the resin raw material is preferably 50 mass% or more, and more preferably 60 mass% or more.

Similarly, from the viewpoint of material recycling of resin components derived from ASR, the content of the polypropylene-based resin composition a1 which is recovered from ASR and contained in the resin raw material is preferably 50 mass% or more, and more preferably 60 mass% or more.

As described above, the resin raw material is configured to be used as the polypropylene-based resin composition A in the production method. Therefore, for a more detailed configuration of the resin raw material, reference can be made to the description regarding the polypropylene-based resin composition A as appropriate.

The resin raw material preferably has a melt mass flow rate of 10 g/10 min or more and 40 g/10 min or less as measured at a temperature of 230°C under a load of 2.16 kg. The resin raw material having the melt mass flow rate within the specific range mentioned above can be suitably used in the production of the expanded beads.

From the same viewpoint, the ash content of the resin raw material is preferably 1 mass% or more and 25 mass% or less. It is also preferable that the resin raw material exhibits a morphology with a matrix of a polypropylene-based resin and domains of rubbery bodies containing the ethylene propylene-based rubber, and that the resin raw material has a flexural modulus of 800 MPa or more and 1200 MPa or less.

The method for producing the resin raw material is, for example, as follows. First, a polypropylene-based resin composition a derived from an automobile member is supplied into an extruder and melt-kneaded. At this time, a pretreatment such as crushing the polypropylene-based resin composition a derived from an automobile member may be performed as necessary. Furthermore, in addition to the polypropylene-based resin composition a derived from an automobile member, a recycled polypropylene-based resin composition derived from a consumer good other than an automobile, a non-recycled polypropylene-based resin, an additive, and the like can be added to the extruder as necessary.

After the polypropylene-based resin and the like are melt-kneaded in the extruder, the mixture in molten state is extruded from the extruder. The extrudate thus obtained is cooled, and then cut into an appropriate length and pelletized to obtain a resin raw material.

Examples

Examples of the expanded beads will be described.

<Embodiment 1>

(Polypropylene-based resin composition A)

Table 1 shows the properties and the like of the polypropylene-based resin composition A used in the production of expanded beads in the present embodiment. Note that the resin composition A1-1 used in this example is "PLC-A02" produced by Planic Co., Ltd., and the resin composition A1-2 is "ELVBP-10" produced by Isono Co., Ltd. Each of the resin compositions A1-1 and A1-2 is an impact polypropylene containing the ethylene propylene-based rubber derived from a post-consumer material. More specifically, the main component of the resin composition A1-1 is a polypropylene-based resin composition a1 recovered from ASR, and the resin composition A1-2 is a polypropylene-based resin composition a recovered from parts (more specifically, bumpers) of end-of-life automobiles.

The resin composition A1-1 and the resin composition A1-2 are cylindrical pellets, with an average length in the pellet height direction (average length in the extrusion direction during pellet preparation) of 3 mm, a pellet diameter of 3 mm, and an average pellet mass of 16 mg. In addition, the resin composition A1-1 and the resin composition A1-2 contain an inorganic substance whose main component is talc. When the morphologies of the resin composition A1-1 and of the resin composition A1-2 used in this example were observed by the method described later, and the resin composition A1-1 and the resin composition A1-2 both exhibited a morphology with a matrix of a polypropylene-based resin and domains of rubbery bodies containing the ethylene propylene-based rubber.

[Table 1]

| (Table 1) Polypropylene-based resin composition A | | | |
|---|---|---|---|
| | Unit | A1-1 | A1-2 |
| Density | kg/m$^3$ | 930 | 990 |

(continued)

| (Table 1) Polypropylene-based resin composition A | | | |
|---|---|---|---|
| | Unit | A1-1 | A1-2 |
| $D_{sol}$-$A_{insol}$ | g | 0.12 | 0.11 |
| Carbon black amount | mass% | 0.4 | 0.7 |
| Ash content | mass% | 4.8 | 12.7 |
| Melting point $Tm_A$ | °C | 164 | 164 |
| Heat of fusion $H_A$ | J/g | 81 | 65 |
| Melt mass flow rate $MFR_A$ | g/10 min | 26 | 29 |
| Flexural modulus $M_A$ | MPa | 950 | 1090 |
| $M_A/Tm_A$ | MPa/°C | 5.8 | 6.6 |

The method of measuring the physical property values of the resin composition A shown in Table 1 is as follows.

[$D_{sol}$-$A_{insol}$ in resin composition A]

The amount of $D_{sol}$-$A_{insol}$ in the resin composition A, that is, the amount of a component that is soluble in n-decane and insoluble in acetone was determined by the following method. Specifically, first, as a sample, approximately 5 g of the resin composition A was accurately weighed. The sample was added into 200 ml of n-decane, and then heated and dissolved at 145°C for 30 minutes. Next, the resulting n-decane solution was cooled to 23°C over 2 hours and left at 23°C for 30 minutes. As a result, a component which was contained in the n-decane solution precipitated and was insoluble in n-decane was precipitated. Thereafter, the n-decane solution was filtered and the precipitate was separated by filtration to obtain an n-decane extract containing an n-decane-soluble fraction. This n-decane extract was added into acetone in an amount approximately 3 times the amount of the n-decane extract and left to stand at 23°C for 18 hours, thereby precipitating an acetone-insoluble fraction (i.e., $D_{sol}$-$A_{insol}$ in the resin composition A) in the n-decane extract. This precipitate was collected by filtration and dried, and then the mass of the precipitate was measured. The mass (unit: g) of the precipitate measured in this way was divided by the mass (unit: g) of the sample, and this value thus calculated was taken as the amount (unit: g) of $D_{sol}$-$A_{insol}$ per 1 g of the resin composition A contained in the resin composition A.

[Morphology of resin composition A1-1]

The morphology of resin composition A1-1 was observed by the following method. First, a cylindrical pellet made of the resin composition A1-1 was cut perpendicularly to the height direction of the pellet through its central part to prepare an observation sample in which a cross section of the central part of the pellet was exposed. Next, this observation sample was embedded in an epoxy resin, and subjected to electron staining with ruthenium tetroxide, and then a section including the central part of the pellet was prepared from the sample by using an ultramicrotome or the like. This section was placed on a grid of a transmission electron microscope (e.g., "JEM-1040 Flash" manufactured by JEOL Ltd.), and was observed at a magnification of 5,000x, and meanwhile a cross-sectional photograph (i.e., a TEM photograph) of the resin composition A1-1 was taken.

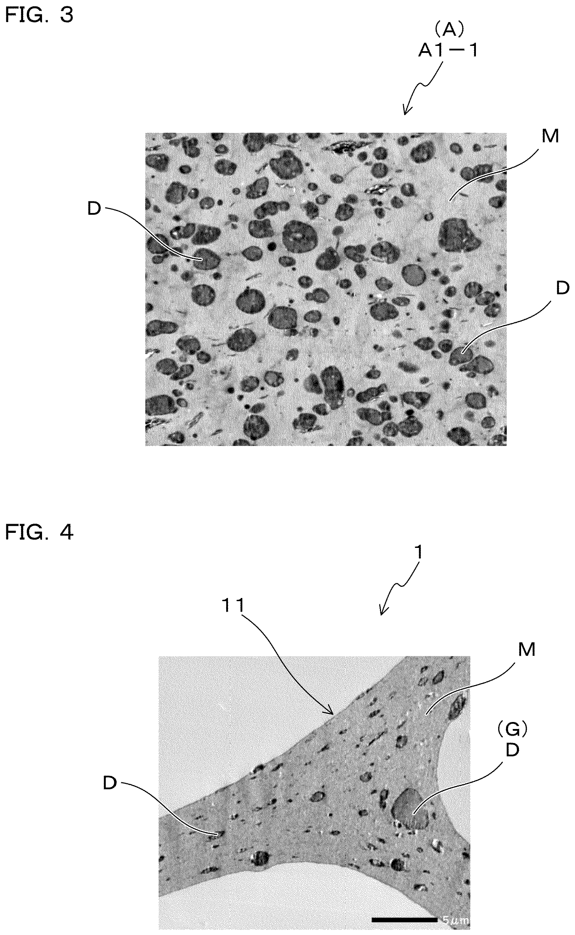

From the cross-sectional photograph, the morphology of the phase of the polypropylene-based resin and the phase of rubbery bodies containing the ethylene propylene-based rubber in the resin composition A1-1 were visually observed. Fig. 3 shows a cross-sectional photograph of the resin composition A 1-1. In Fig. 3, the domain D of the rubbery bodies containing the ethylene propylene-based rubber is shown in a relatively dark color tone, and the matrix M of the polypropylene-based resin is shown in a lighter color tone relative to the domain D.

In addition, the average diameter of the rubbery bodies containing the ethylene propylene-based rubber was calculated based on the TEM photograph. More specifically, the longest diameter and the shortest diameter of each of 50 domains randomly selected from among the domains (specifically, the rubbery bodies) appeared in the TEM photograph were measured. The arithmetic mean value of the longest diameters and the shortest diameters thus obtained was taken as the average diameter of the rubbery bodies containing the ethylene propylene-based rubber. As a result, the average diameter of the rubbery bodies containing the ethylene propylene-based rubber in the resin composition A1-1 was 1.2 $\mu$m.

[Ash content]

The ash content of the resin composition A was measured in accordance with the direct ashing method (method A) of JIS K7250-1:2006. Specifically, first, approximately 5 g of the resin composition A was accurately weighed, and then the resin composition A was placed in a crucible. The resin composition A in the crucible was heated for 1 hour in an electric furnace in which ambient temperature was set to 600°C to burn the resin composition A. After completion of the heating, the mass of the residue remaining in the crucible was measured. Then, the ratio of the mass of the residue to the mass of the resin composition A before heating was calculated and expressed as a percentage, and this value was taken as the ash content (unit: mass%) of the resin composition A.

[Melting point $Tm_A$ and heat of fusion $H_A$]

The melting point $Tm_A$ of the resin composition A was determined in accordance with JIS K7121-1987. Specifically, first, a test piece made of the resin composition A was conditioned in accordance with "(2) The case of measurement of melting temperature after a definite heat treatment" of "3. Conditioning of test piece" in JIS K7121-1987. The conditioned test piece was heated from 23°C to 230°C at a heating rate of 10°C/min to obtain a DSC curve. Note that the flow rate of nitrogen gas under the measurement environment was 30 mL per minute. Then, the vertex temperature of the melting peak appearing on the DSC curve was taken as the melting point $Tm_A$. Note that as a measuring apparatus, a heat flux differential scanning calorimeter (Manufactured by SII Nano Technology Inc., model number: DSC7020) was used.

In addition, the heat of fusion $H_A$ of the resin composition A was determined from the DSC curve obtained by performing differential scanning calorimetry according to JIS K 7122-1987. Specifically, on the DSC curve obtained in the measurement of the melting point $Tm_A$ described above, a straight line was drawn connecting a point corresponding to 80°C on the DSC curve and an end point on the higher temperature side of the melting peak having the highest vertex temperature. Then, the heat of fusion $H_A$ of the resin composition A was calculated based on the area of the region surrounded by the straight line determined in this way and the melting peak of the DSC curve.

[Melt mass flow rate $MFR_A$]

In accordance with JIS K7210-1:2014, the melt mass flow rate $MFR_A$ of the resin composition A was measured under the conditions of a temperature of 230°C and a load of 2.16 kg.

[Flexural modulus $M_A$]

The resin composition A was heat-pressed at 180°C to prepare a sheet having a thickness of 4 mm, and a test piece having a length of 80 mm× a width of 10 mm× a thickness of 4 mm was cut out from this sheet. The flexural modulus $M_A$ of this test piece was determined in accordance with JIS K7171:2008. Note that the radius R1 of an indenter and the radius R2 of a support base are both 5 mm, the inter-fulcrum distance is 64 mm, and the test speed is 2 mm/min.

(Polypropylene-based resin B)

Table 2 shows the properties and the like of the polypropylene-based resin B used in the production of expanded beads in the present embodiment. Note that each of the resins B used in this example is constituted by a non-recycled polypropylene-based resin. The resin B used in this example is either a propylene-ethylene random copolymer (B1-1 to B1-4) or homopropylene (B1-5). Note that in Table 2, "rPP" represents propylene-based random copolymer, and "hPP" represents homopropylene.

The method for measuring physical property values shown in Table 2 is the same as the method for measuring physical property values in the resin composition A described above. Note that the method of calculating the "Ethylene component content" of resin B in Table 2 is as follows.

The content of the ethylene component in the resin B was determined by a known method determined by an IR spectrum. Specifically, the content was determined by the method described in Polymer Analysis Handbook (Edited by Polymer Analysis Research Council, The Japan Society for Analytical Chemistry, publication date: January 1995, publishing company: Kinokuniya Co., Ltd., page numbers and item names: pp. 615-616 "11.2.3 2.3.4 Propylene/ethylene copolymer", pp. 618-619 "11.2.3 2.3.5 Propylene/butene copolymer"), that is, the method of quantifying the content from the relationship between the value obtained by correcting the absorbance of ethylene and butene with a predetermined coefficient and the thickness of the film-shaped test piece and the like.

More specifically, first, the resin B was heat-pressed in an environment of 180°C to form into a film shape, thereby preparing a plurality of test pieces having different thicknesses ranging from 0.1 to 0.3 mm. Next, the absorbances ($A_{722}$,

$A_{733}$) at 722 cm$^{-1}$ and 733 cm$^{-1}$ derived from ethylene and the absorbance ($A_{766}$) at 766 cm$^{-1}$ derived from butene were read by measuring the IR spectrum of each test piece. Next, for each test piece, the ethylene component content (unit: mass%) in the resin B was calculated using the following equations (3) to (5). The arithmetic mean value of the contents of the ethylene component obtained for all the test pieces was taken as the ethylene component content (unit: mass%) in the resin B.

$$(K'_{733})_c = 1/0.96\{(K'_{733})_a - 0.268(K'_{722})_a\} \ ... \ (3)$$

$$(K'_{722})_c = 1/0.96\{(K'_{722})_a - 0.150(K'_{733})_a\} \ ... \ (4)$$

$$\text{Ethylene component content} = 0.575\{(K'_{722})_c + (K'_{733})_c\} \ ... \ (5)$$

Note that $K'_a$ in the equations (3) to (5) is an apparent absorption coefficient ($K'_a = A/\rho t$) at each wave number, $K'_c$ is a corrected absorption coefficient, A is absorbance, $\rho$ is a density (unit: g/cm$^3$) of the resin, and t is a thickness (unit: cm) of the test piece having a film shape.

For each test piece, the butene component content (unit: mass%) in the resin B was calculated using the following equation (6). The arithmetic mean value of the contents of the butene components obtained for all the test pieces was taken as the butene component content (unit: mass%) in the resin B.

$$\text{Butene component content} = 12.3 \ (A_{766}/L) \ ... \ (6)$$

Note that in the equation (6), A is absorbance, and L is a thickness (unit: mm) of the test piece having a film shape.

[Table 2]

| (Table 2) Polypropylene-based resin B | | | | | | |
|---|---|---|---|---|---|---|
| | Unit | B1-1 | B1-2 | B1-3 | B1-4 | B1-5 |
| Type of polypropylene-based resin | - | rPP | rPP | rPP | rPP | hPP |
| Density | kg/m$^3$ | 900 | 900 | 900 | 900 | 900 |
| Ethylene component content | mass% | 2.8 | 1.1 | 3.4 | 0.6 | 0 |
| Butene component content | mass% | - | - | - | 9.7 | - |
| Ash content | mass% | 0 | 0 | 0 | 0 | 0 |
| Melting point $Tm_B$ | °C | 143 | 151 | 139 | 141 | 162 |
| Heat of fusion $H_B$ | J/g | 79 | 91 | 63 | 66 | 101 |
| Melt mass flow rate $MFR_B$ | g/10 min | 8 | 7 | 7 | 7 | 10 |
| Flexural modulus $M_B$ | MPa | 950 | 1200 | 850 | 910 | 1650 |

Next, the configuration and the production method of the expanded beads in the present embodiment will be described.

(Example 1-1)

The expanded beads of Example 1-1 have a foamed layer formed from a polypropylene-based resin composition. The resin composition constituting the foamed layer contains a polypropylene-based resin and rubbery bodies G which include the ethylene propylene-based rubber, with the rubbery bodies G dispersed in the polypropylene-based resin. In producing the expanded beads of Example 1-1, first, a resin composition A1-1, a resin B1-1, and a cell controlling agent were supplied into an extruder, and a molten mixture of the resin composition A and the resin B was formed in the extruder. Note that the mass ratio between the resin composition A1-1 and the resin B1-1 was a value shown in Table 3. In addition, zinc borate was used as the cell controlling agent. The addition amount of zinc borate was 0.05 mass% per 100 mass% of the sum of the resin composition A1-1 and the resin B1-1. Thereafter, the mixture in molten state was extruded into a strand shape from a small hole of a die provided downstream of the extruder. This extrudate in a strand shape was drawn, cooled, and then cut into an appropriate length with a pelletizer to obtain resin particles.

The resin particles thus obtained were expanded by a direct foaming method. Specifically, first, 1 kg of resin particles was put into a container having an internal volume of 5 L together with 3 L of water as an aqueous medium. Next, 0.3 parts by mass of a dispersant per 100 parts by mass of the resin particles, and as dispersion aids, 0.02 parts by mass of sodium alkylbenzene sulfonate and 0.01 parts by mass of aluminum sulfate were added into the container to disperse the resin particles in the aqueous medium. Kaolin was used as the dispersant.

Thereafter, carbon dioxide as a blowing agent was supplied into the sealed container while stirring the inside of the container, and the temperature in the container was raised to 155.5°C. The pressure in the container at this time was 2.1 MPa(G). Thereafter, the temperature in the container was adjusted to 156°C, and then this temperature was maintained for 15 minutes to impregnate the resin particles with the blowing agent. Thereafter, the container was opened and the contents were released into an atmosphere at an atmospheric pressure to foam the resin particles. From the above, expanded beads of Example 1-1 were obtained.

(Examples 1-2 to 1-4)

The expanded beads of Examples 1-2 to 1-4 have mostly the same configuration as the expanded beads of Example 1-1, except that the mass ratio between the resin composition A1-1 and the resin B1-1 was changed as shown in Table 3. The method for producing the expanded beads in these Examples is mostly the same as the method for producing the expanded beads in Example 1-2, except that the mass ratio between the resin composition A1-1 and the resin B1-1 supplied into the extruder was changed, and that the temperature in the container during foaming(expansion) was respectively changed to 152.5°C in Example 1-3, 161°C in Example 1-4, and 158.5°C in Example 1-1.

(Examples 1-5 to 1-7)

As shown in Table 4, the expanded beads of Examples 1-5 to 1-7 have mostly the same configuration as the expanded beads of Example 1-4, except that any one of the polypropylene-based resins B1-2 to B1-4 was used as the resin B instead of the polypropylene-based resin B1-1. The method for producing the expanded beads in these Examples is mostly the same as the method for producing the expanded beads in Example 4, except that the resin B supplied into the extruder was changed from the polypropylene-based resin B1-1 to the polypropylene-based resin B shown in Table 4.

(Comparative Example 1-1)

The foamed layer of the expanded beads of Comparative Example 1-1 does not contain the resin B and is formed of the resin composition A. The method for producing the expanded beads of Comparative Example 1-1 is mostly the same as the method for producing the expanded beads of Example 1-1, except that resin particles were produced using the resin composition A1-1 instead of the resin composition containing the resin composition A and the resin B and that the temperature in the container during foaming was changed to 164°C as shown in Table 5.

(Comparative Example 1-2)

As shown in Table 5, the expanded beads of Comparative Example 1-2 have mostly the same configuration as the expanded beads of Example 1-4, except that a polypropylene-based resin B1-5 was used as the resin B instead of the polypropylene-based resin B1-1. The method for producing the expanded beads of Comparative Example 1-2 is mostly the same as the method for producing the expanded beads in Example 1-4, except that the resin B supplied into the extruder was changed from the polypropylene-based resin B1-1 to the polypropylene-based resin B5, and that the temperature in the container during foaming was changed to 164°C.

(Comparative Example 1-3)

As shown in Table 5, the foamed layer of the expanded beads of Comparative Example 1-3 does not contain the resin composition A, and is formed of the resin B1-1 and the resin B1-5. The method for producing the expanded beads of Comparative Example 1-3 is mostly the same as the method for producing the expanded beads of Example 1-1, except that the resin particles were produced using a resin composition formed of the resin B1-1 and the resin B1-5 instead of a resin composition containing the resin composition A and the resin B as shown in Table 5.

(Example 1-8)

As shown in Table 6, the expanded beads of Example 1-8 have mostly the same configuration as the expanded beads of Example 1-1, except that the bulk density is 27 kg/m$^3$. The method for producing the expanded beads of Example 1-8 is mostly the same as the method for producing the expanded beads of Example 1-1, except that the temperature in the container during foaming was changed to 155.5°C and that the pressure in the container during foaming was changed to 2.8 MPa(G).

(Example 1-9)

As shown in Table 7, the expanded beads of Example 1-9 have mostly the same configuration as the expanded beads of Example 1-4, except that the resin composition A1-2 was used as the resin composition A instead of the resin composition A1-1. The method for producing the expanded beads in Example 1-9 is mostly the same as the method for producing the expanded beads in Example 1-4, except that the resin composition A supplied into the extruder was changed from the resin composition A1-1 to the resin composition A1-2.

(Reference Example 1-1)

The foamed layer of the expanded beads of Reference Example 1-1 does not contain the resin composition A but is formed of the resin B. The method for producing the expanded beads of Reference Example 1-1 is mostly the same as the method for producing the expanded beads of Example 1-1, except that the resin particles were produced by using resin B1-1 in place of the resin composition containing the resin composition A and the resin B, and that the temperature in the container during foaming was changed to 149.5°C.

(Reference Example 1-2)

The foamed layer of the expanded beads of Reference Example 1-2 does not contain the resin composition A but is formed of the resin B. The method for producing the expanded beads of Reference Example 1-2 is mostly the same as the method for producing the expanded beads of Reference Example 1-1, except that the temperature in the container during foaming was changed to 147°C and that the pressure in the container was changed to 4.0 MPa(G).

(Example 1-10)

The expanded beads of Example 1-10 include a foamed core layer formed of a polypropylene-based resin composition and a fusion-bonding layer covering the foamed core layer. The polypropylene-based resin composition constituting the foamed core layer contains a polypropylene-based resin and rubbery bodies G which contains the ethylene propylene-based rubber, with the rubbery bodies G dispersed in the polypropylene-based resin. In producing the expanded beads of Example 1-10, first, a coextrusion apparatus including a core layer forming extruder, a fusion-bonding layer forming extruder, and a coextrusion die connected to these two extruders is used, and a composite extruded from the coextrusion apparatus was cut by strand cutting method to obtain multilayer resin particles each having a fusion-bonding layer.

Specifically, the resin composition A1-1, the resin B1-1, a cell controlling agent, and carbon black were supplied into the core layer forming extruder, and a core layer forming molten mixture of the resin composition A1-1 and the resin B1-1 was formed in the extruder. Note that the blending ratio of the resin composition A1-1 and the resin B1-1 in the core layer forming molten mixture was the resin composition A1-1 : the resin B 1-1 = 15 : 85. Zinc borate was used as the cell controlling agent. The addition amount of zinc borate was 0.05 mass% per 100 mass% of the sum of the resin composition A1-1 and resin B1-1. The addition amount of carbon black was 2.8 mass% per 100 mass% of the sum of the resin composition A1-1 and the resin B1-1.

In addition, a polypropylene-based resin (specifically, a propylene-ethylene-butene random copolymer, melting point: 122°C, melt mass flow rate: 6 g/10 min) and carbon black were supplied into the fusion-bonding layer forming extruder, and a fusion-bonding layer forming molten mixture was formed in the extruder. Note that the addition amount of carbon black in the fusion-bonding layer forming molten mixture was 2.8 mass% per 100 mass% of the polypropylene-based resin.

These molten mixtures were merged in the die to form a composite including a cylindrical core layer in non-foamed state and a fusion-bonding layer in non-foamed state covering a side peripheral surface of the core layer. Then the molten mixtures were co-extruded from the die into a strand shape. This strand composite was drawn, cooled, and then cut into an appropriate length with a pelletizer to obtain columnar resin particles (i.e., the multilayer resin particles) having a core layer and a fusion-bonding layer covering an outer side surface of the core layer. The ratio of the fusion-bonding layer in the multilayer resin particles was 3 mass%.

Next, the multilayer resin particles were expanded by direct foaming method. Specifically, first, 100 kg of multilayer resin particles were put into a container having an internal volume of 400 L together with 220 L of water as an aqueous medium. Next, 0.3 parts by mass of a dispersant per 100 parts by mass of the multilayer resin particles, and as dispersion aid, 0.01 parts by mass of aluminum sulfate and 0.004 parts by mass of sodium alkylbenzene sulfonate were added into the container to disperse the multilayer resin particles in the aqueous medium. Kaolin was used as the dispersant.

Thereafter, carbon dioxide as a blowing agent was supplied into the sealed container while stirring the inside of the container, and the temperature in the container was raised to 158.2°C. At this time, the pressure in the container was 1.6 MPa(G). Thereafter, this temperature was maintained for 15 minutes to impregnate the multilayer resin particles with the blowing agent. Thereafter, the container was opened and the contents were released into an atmosphere at an atmospheric pressure to expand the multilayer resin particles. The expanded beads thus obtained were dried in an atmosphere at a temperature of 23°C and a relative humidity of 50% for 24 hours. From the above, first-step expanded beads including a foamed core layer made by foaming of the core layer and a fusion-bonding layer in non-foamed state covering the foamed core layer were obtained.

Next, the first-step expanded beads were placed in a pressurization tank as a pressure-resistant container, and the pressurization tank was sealed. In this state, the inside of the pressurization tank was pressurized with air as an inorganic gas, and the cells were impregnated with the air so that the pressure in the cells of the first-step expanded beads became 0.35 MPa(G). After the application of the internal pressure to the first-step expanded beads had been completed, the first-step expanded beads were taken out from the pressurization tank and placed in a metal drum. Thereafter, steam was supplied into the first-step expanded beads and heated under atmospheric pressure. From the above, the first-step expanded beads were further expanded to obtain expanded beads (i.e., second-step expanded beads). As described above, expanded beads of Example 1-10 were obtained. Note that the ratio of the fusion-bonding layer in the expanded beads was 3 mass%.

(Example 1-11)

The expanded beads of Example 1-11 each include a foamed core layer formed of a polypropylene-based resin composition and a fusion-bonding layer covering the foamed core layer. The polypropylene-based resin composition constituting the foamed core layer contains a polypropylene-based resin and rubbery bodies G which contains the ethylene propylene-based rubber, with the rubbery bodies G dispersed in the polypropylene-based resin. The expanded beads of Example 1-11 are tubular expanded beads each having a through-hole that penetrates its inside in the axial direction. In producing the expanded beads of Example 1-11, first, a coextrusion apparatus including a core layer forming extruder, a fusion-bonding layer forming extruder, and a coextrusion die connected to these two extruders was used and a composite extruded from the coextrusion apparatus was cut by strand cutting method to prepare multilayer resin particles each having a fusion-bonding layer. Note that the coextrusion die used in Example 1-11 is provided with a mechanism capable of forming a through-hole in the core layer of the multilayer resin particle.

Specifically, the resin composition A1-1, the resin B1-1, the cell controlling agent, and carbon black were supplied into a core layer forming extruder, and a core layer forming molten mixture of the resin composition A1-1 and the resin B1-1 was formed in the extruder. Note that the mass ratio between the resin composition A1-1 and the resin B1-1 in the core layer forming molten mixture was resin composition A1-1 : resin B1-1 = 17 : 83. Zinc borate was used as the cell controlling agent. The addition amount of zinc borate was 0.05 mass% per 100 mass% of the sum of the resin composition A1-1 and resin B1-1. The addition amount of carbon black was 2.8 mass% per 100 mass% of the sum of the resin composition A1-1 and the resin B1-1.

In addition, a polypropylene-based resin (specifically, a propylene-ethylene random copolymer, melting point: 133°C, melt mass flow rate: 24 g/10 min) and carbon black were supplied into a fusion-bonding layer forming extruder, and a fusion-bonding layer forming molten mixture was formed in the extruder. Note that the addition amount of carbon black in the fusion-bonding layer forming molten mixture was 2.8 mass% per 100 mass% of the polypropylene-based resin.

These molten mixtures were merged in the die to form a composite including a cylindrical core layer in non-foamed state and a fusion-bonding layer in non-foamed state covering a side peripheral surface of the core layer. Then the composite was co-extruded from the die into a strand shape. The strand-shaped composite was drawn, cooled, and then cut into an appropriate length with a pelletizer to obtain tubular multilayer resin particles each having a core layer having a through-hole that penetrates its inside in the axial direction and a fusion-bonding layer covering the outer side surface of the core layer. The ratio of the fusion-bonding layer in the multilayer resin particles was 5 mass%.

Next, the multilayer resin particles were expanded by direct foaming method. Specifically, first, 100 kg of multilayer resin particles were put into a container having an internal volume of 400 L together with 220 L of water as an aqueous medium. Next, 0.3 parts by mass of a dispersant per 100 parts by mass of the multilayer resin particles, and as dispersion aid, 0.01 parts by mass of aluminum sulfate and 0.004 parts by mass of sodium alkylbenzene sulfonate were added into the container to disperse the multilayer resin particles in the aqueous medium. Kaolin was used as the dispersant.

Thereafter, carbon dioxide as a blowing agent was supplied into the sealed container while stirring the inside of the container, and the temperature in the container was raised to 159.3°C. At this time, the pressure in the container during was 1.5 MPa(G). This temperature was maintained for 15 minutes to impregnate the multilayer resin particles with the blowing agent. Thereafter, the container was opened and the contents were released into an atmosphere at an atmospheric pressure to expand the multilayer resin particles. The expanded beads thus obtained were dried in an atmosphere at a temperature of 23°C and a relative humidity of 50% for 24 hours. From the above, tubular first-step expanded beads each including: a foamed core layer formed by foaming(expanding) a core layer and having a through-hole; and a fusion-bonding layer in non-foamed state covering the foamed core layer were obtained.

Next, the first-step expanded beads were placed in a pressurization tank as a pressure-resistant container, and the pressurization tank was sealed. In this state, the inside of the pressurization tank was pressurized with air as an inorganic gas, and the cells were impregnated with the air so that the pressure in the cells of the first-step expanded beads became 0.35 MPa(G). After the application of the internal pressure to the first-step expanded beads had been completed, the first-step expanded beads were taken out from the pressurization tank and placed in a metal drum. Thereafter, steam was supplied into the first-step expanded beads and heated under atmospheric pressure. From the above, the first-step expanded beads were further expanded to obtain expanded beads (i.e., second-step expanded beads). As described above, expanded beads of Example 1-11 were obtained. Note that the ratio of the fusion-bonding layer in the expanded beads was 5 mass%. The expanded beads each had a through-hole that penetrates its inside in the axial direction, the average pore diameter of the through-holes was 0.69 mm, and the ratio of the average pore diameter of the through-holes to the average outer diameter of the expanded beads was 0.20.

Note that the average pore diameter of the through-holes was determined as follows. First, 100 expanded beads were randomly selected, and these expanded beads were cut along a plane perpendicular to their axial direction at a position where the cross-sectional area became maximum to expose cut surfaces of the expanded beads. Next, a photograph of the cut surface of the expanded beads was taken, and image analysis was performed to measure the cross-sectional area (i.e., the opening area) of the through-hole in the cut surface. Then, the diameter of a virtual perfect circle having the same area as the cross-sectional area of the through-hole was calculated, and this value was taken as the pore diameter of the through-hole in each expanded bead. The above-mentioned operation was performed on 100 expanded beads, and the arithmetic mean value of the resultant pore diameters of the through-holes was taken as the average pore diameter of the through-holes of the expanded beads.

The average outer diameter of the expanded beads was determined as follows. First, 100 expanded beads were randomly selected, and these expanded beads were cut along a plane perpendicular to their axial direction at a position where the cross-sectional area became maximum to expose cut surfaces of the expanded beads. Next, a photograph of the cut surface of the expanded bead was taken, and image analysis was performed to measure the cross-sectional area (i.e., the area of the region surrounded by the outer peripheral edge of the expanded bead at the cut surface) of the expanded bead including the through-hole. Then, the diameter of the virtual perfect circle having the same area as the cross-sectional area of the expanded bead was calculated, and this value was taken as the outer diameter of each expanded bead. The above-mentioned operation was performed on 100 expanded beads, and the arithmetic mean value of the resultant outer diameters of the expanded beads was taken as the average outer diameter of the expanded beads.

Tables 3 to 7 show various properties of resin particles, expanded beads, and molded articles made by in-mold molding of expanded beads of Examples 1-1 to 1-9 and Comparative Examples 1-1 to 1-3 obtained by the method as described above.

Note that the expanded beads of Example 1-10 had a bulk density of 27 kg/m$^3$, the amount of $D_{sol}$-$A_{insol}$ in the expanded beads of 0.03 g per 1 g of the expanded beads, a melting point Tm of 148°C, the difference Tm-Tc between the melting point Tm and the crystallization temperature Tc of 35°C, and a heat of fusion at the high-temperature peak of 20 J/g. The moldable range of the expanded beads of Example 1-10 was from 0.27 to 0.31 MPa(G). The molded article of Example 1-10 had a density of 30 kg/m$^3$, a compressive strength at 5% of 220 kPa, a compressive strength at 50% of 420 kPa, and a compressive strength ratio of 0.52.

The expanded beads of Example 1-11 had a bulk density of 33 kg/m$^3$, the amount of $D_{sol}$-$A_{insol}$ in the expanded beads of 0.03 g per 1 g of the expanded beads, a melting point Tm of 148°C, the difference Tm-Tc between the melting point Tm and the crystallization temperature Tc of 35°C, and the heat of fusion at the high-temperature peak of 22 J/g. The moldable range of the expanded beads of Example 1-11 was from 0.30 to 0.34 MPa(G). The molded article of Example 1-11 had a density of 35 kg/m$^3$, a compressive strength at 5% of 140 kPa, a compressive strength at 50% of 270 kPa, and a compressive strength ratio of 0.52.

The expanded beads of Reference Example 1-1 did not contain rubbery bodies containing the ethylene propylene-based rubber. The expanded beads of Reference Example 1-1 had a bulk density of 45 kg/m$^3$, an average cell diameter of 110 μm, a closed cell content of 96%, a melting point Tm of 143°C, the difference Tm-Tc of 40°C, an ash content of 0 mass%, a melt mass flow rate of 9 g/10 min, a flexural modulus of 950 MPa, a vertex temperature Th of a high-temperature peak of 156°C, and a heat of fusion at a high-temperature peak of 16 J/g. The moldable range of the expanded beads of Reference Example 1-1 was from 0.28 to 0.32 MPa(G). The molded article of Reference Example 1-1 had a density of 50 kg/m$^3$, a closed cell content of 86%, a compressive strength at 5% of 210 kPa, a compressive strength at 50% of 425 kPa, and a compressive strength ratio of 0.49.

The expanded beads of Reference Example 1-2 did not contain rubbery bodies containing the ethylene propylene-based rubber. The expanded beads of Reference Example 1-2 had a bulk density of 27 kg/m$^3$, an average cell diameter of 150 $\mu$m, a closed cell content of 96%, a melting point Tm of 143°C, the difference Tm-Tc of 40°C, an ash content of 0 mass%, a melt mass flow rate of 9 g/10 min, a flexural modulus of 950 MPa, a vertex temperature Th at a high-temperature peak of 156°C, and a heat of fusion at a high-temperature peak of 16 J/g. The moldable range of the expanded beads of Reference Example 1-2 was from 0.28 to 0.32 MPa(G). The molded article of Reference Example 1-2 had a density of 30 kg/m$^3$, a closed cell content of 85%, a compressive strength at 5% of 95 kPa, a compressive strength at 50% of 240 kPa, and a compressive strength ratio of 0.40.

[Melting point Tm of expanded beads and melting point Tmr of resin particles]

The method of measuring the melting point Tm of the expanded beads or the melting point Tmr of the resin particles is the same as the method of measuring the melting point Tm$_A$ of the resin composition A described above, except that the expanded beads or the resin particles are respectively used instead of the resin composition A.

[Crystallization temperature Tc of expanded beads and crystallization temperature Tcr of resin particles]

In accordance with JIS K7121-1987, the crystallization temperature Tc of expanded beads was measured using a heat flux differential scanning calorimeter. More specifically, first, the temperature of the expanded beads was raised from 23°C to 230°C at a heating rate of 10°C/min, and then the temperature of 230°C was maintained for 10 minutes. Thereafter, the expanded beads were cooled from 230°C to 30°C at a cooling rate of 10°C/min to obtain a DSC curve. Note that the flow rate of nitrogen gas under the measurement environment was 30 mL per minute. The vertex temperature of the crystallization peak in this DSC curve was taken as the crystallization temperature Tc of the expanded beads. Note that when a plurality of crystallization peaks appeared on the DSC curve, the vertex temperature of the crystallization peak with the highest peak height was taken as the crystallization temperature Tc of the expanded beads.

The method of measuring the crystallization temperature Tcr of the resin particles is the same as the method of measuring the crystallization temperature Tc of the expanded beads described above, except that the resin particles are used instead of the expanded beads.

[Bulk density of expanded beads]

The expanded beads were left to stand for 24 hours or more in an environment of a relative humidity of 50%, a temperature of 23°C, and an atmospheric pressure of 1 atm to condition the expanded beads. The expanded beads thus obtained with a bulk volume of about 500 cm$^3$ were filled in a measuring cylinder, and the filling height of the expanded beads in the measuring cylinder was stabilized by lightly tapping a floor surface several times with the bottom face of the measuring cylinder. Thereafter, the exact bulk volume (unit: L) of the expanded beads was read from the scale of the measuring cylinder. Then, the bulk density (unit: kg/m$^3$) of the expanded beads was calculated by dividing the mass (unit: g) of the expanded beads in the measuring cylinder by the above-described bulk volume and then converting the units.

[Average cell diameter of expanded beads]

The expanded bead was cut into approximately two equal parts. Next, an enlarged photograph was obtained so that the exposed cut surface was entirely within the field of view. On the obtained enlarged photograph, four line segments from the outermost surface of the expanded bead to the opposite outermost surface through the central region were drawn so that the angles formed by the adjacent line segments were equal (i.e., an angle formed by the adjacent line segments became 45°). The total length of the four line segments thus obtained was divided by the total number of cells intersecting the line segments, and this value was taken as the cell diameter of each expanded bead.

The operation mentioned above was performed on randomly selected 10 or more expanded beads, and an arithmetic mean value of the cell diameters of the expanded beads obtained for each expanded bead was taken as the average cell diameter of the expanded beads.

[Closed cell content of expanded beads]

The closed cell content of the expanded beads was measured using an air comparison pycnometer in accordance with ASTM D2856-70 Procedure C. Specifically, first, conditioned expanded beads having a bulk volume of about 20 cm$^3$ were used as a measurement sample. The measurement sample was immersed in ethanol contained in a measuring cylinder. The apparent volume Va of the measurement sample was measured from the increase in a liquid level at this time. The measurement sample after measuring its apparent volume Va was sufficiently dried. Then, in accordance with Procedure C described in ASTM-D2856-70, the true volume value Vx of the measurement sample was measured with an air-comparison pycnometer ("Beckman Model1000 Air Comparison Pycnometer" available from Tokyo Science Co., Ltd.). Using these volume values Va and Vx, the closed cell content (unit: %) of the measurement sample was calculated based on the following equation (1). The operation mentioned above was performed five times with different measurement samples, and the arithmetic mean value (N = 5) of the closed cell contents of the five measurement samples was taken as the closed cell content (unit: %) of the expanded beads.

$$\text{Closed cell content} = (Vx - W/\rho) \times 100/(Va - W/\rho) \ldots (1)$$

Note that the meanings of the symbols in the equation (1) described above are as follows.

Vx: The true volume of the measurement sample as measured by the above method, which is the sum of the volume of the resin forming the expanded beads and the total cell volume of the closed cell portion in the expanded beads (unit: $cm^3$)

Va: The apparent volume (unit: $cm^3$) of the measurement sample measured based on the increase in the liquid level when the measurement sample is immersed in ethanol contained in a measuring cylinder

W: The mass of the measurement sample (unit: g)

$\rho$: The density of the resin constituting the expanded beads (unit: $g/cm^3$)

[$D_{sol}$-$A_{insol}$ in expanded beads and $D_{sol}$-$A_{insol}$ in resin particles]

The amount of $D_{sol}$-$A_{insol}$, that is, a component soluble in n-decane and insoluble in acetone, in expanded beads was determined by the following method. Specifically, first, as a sample, about 5 g of expanded beads were weighed accurately. The sample was added into 200 ml of n-decane, and then heated and dissolved at 145°C for 30 minutes. Next, the resulting n-decane solution was cooled to 23°C over 2 hours and left at 23°C for 30 minutes. As a result, an n-decane insoluble component in the n-decane solution precipitated. Thereafter, the n-decane solution was filtered and the precipitate was separated by filtration to obtain an n-decane extract containing an n-decane-soluble fraction. This n-decane extract was added to acetone in an amount approximately 3 times the amount of the n-decane extract and left to stand at 23°C for 18 hours, thereby precipitating an acetone-insoluble fraction (i.e., $D_{sol}$-$A_{insol}$ in the expanded beads) in the n-decane extract. This precipitate was collected by filtration and dried, and then the mass of the precipitate was measured. The mass (unit: g) of the precipitate thus measured was divided by the mass (unit: g) of the sample and thereby calculating the amount (unit: g) of $D_{sol}$-$A_{insol}$ per 1 g of the expanded beads contained in the expanded beads.

The method of measuring the amount of $D_{sol}$-$A_{insol}$ in the resin particles is the same as the method of measuring the amount of $D_{sol}$-$A_{insol}$ in the expanded beads described above, except that resin particles were used instead of the expanded beads and the amount per 1 g of the resin particles was calculated.

[Morphology of expanded beads and morphology of resin particles]

The morphology of the expanded beads was observed by the following method. First, the expanded bead was cut through its central part to prepare an observation sample in which a cross section of the central part of the expanded bead was exposed. Next, this observation sample was embedded in an epoxy resin, and subjected to electron staining with ruthenium tetroxide, and then a section containing the central part of the expanded bead was prepared from the sample by using an ultramicrotome or the like. This section was placed on a grid of a transmission electron microscope ("JEM-1040Flash" manufactured by JEOL Ltd.), and was observed at a magnification of 5,000x, and a cross-sectional photograph (i.e., a TEM photograph) of the expanded bead was taken.

From the cross-sectional photograph, the morphology of the phase of the polypropylene-based resin and the phase of rubbery bodies containing the ethylene propylene-based rubber in the cell membrane of the foamed layer was visually observed. As an example, Fig. 4 shows a cross-sectional photograph of the expanded bead of Example 1-4. As shown in Fig. 4, it was confirmed that the cell membrane 11 of the expanded bead 1 had a morphology in which the domains D of the rubbery bodies G containing the ethylene propylene-based rubber were dispersed in the matrix M of the polypropylene-based resin. Based on the cross-sectional photograph thus obtained, the average diameter of the rubbery bodies in the morphology of the expanded bead was calculated by the same method as the method of calculating the average diameter of the rubbery bodies in the morphology of the resin composition A.

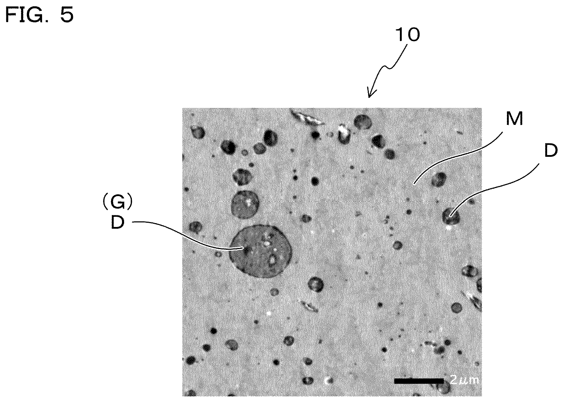

The method of observing the morphology of the resin particles is the same as the method of observing the morphology of the expanded beads described above, except that the resin particles are used instead of the expanded beads. As an example, Fig. 5 shows a cross-sectional photograph of the resin particles of Example 1-4. As shown in Fig. 5, it was confirmed that the resin particles 10 had a morphology in which the domains D of the rubbery bodies G containing the ethylene propylene-based rubber were dispersed in the matrix M of the polypropylene-based resin. Based on the cross-sectional photograph thus obtained, the average diameter of the rubbery bodies in the morphology of the resin particles was calculated by the same method as the method of calculating the average diameter of the rubbery bodies in the morphology of the resin composition A.

[Ash content of resin particles and of expanded beads]

The method of measuring the ash content of the resin particles or the ash content of the expanded beads is the same as the method of measuring the ash content of the resin composition A described above, except that the resin particles or the expanded beads are respectively used instead of the resin composition A.

[Melt mass flow rate of resin composition constituting expanded beads]

The expanded beads were heat-pressed at a temperature of 180°C for 3 minutes to perform a defoaming treatment of the expanded beads, thereby preparing a sheet formed of the resin composition constituting the expanded beads. Using a pellet sample obtained by cutting this sheet, a melt mass flow rate was measured under conditions of a temperature of 230°C and a load of 2.16 kg in accordance with JIS K7210-1:2014.

[Flexural modulus of resin composition constituting expanded beads]

The expanded beads were heat-pressed at 180°C to prepare a sheet having a thickness of 4 mm, and a test piece having a length of 80 mm × a width of 10 mm × a thickness of 4 mm was cut out from this sheet. The flexural modulus of this test piece was determined in accordance with JIS K7171:2008. Note that the radius R1 of an indenter and the radius R2 of a support base are both 5 mm, the inter-fulcrum distance is 64 mm, and the test speed is 2 mm/min.

[Resin intrinsic peak and high-temperature peak]

The vertex temperature of the high-temperature peak and the heat of fusion were determined from a DSC curve obtained by performing differential scanning calorimetry (DSC) in accordance with JIS K7122-1987. Specifically, first, about approximately 3 mg of expanded beads were used as a sample, and the sample was heated from 23°C to 230°C at a heating rate of 10°C/min and differential scanning calorimetry was performed to obtain a DSC curve. Note that the flow rate of nitrogen gas under the measurement environment was 30 mL per minute. Based on this DSC curve, the vertex temperature $T_l$ of the resin intrinsic peak $\Delta H1$ and the vertex temperature $T_h$ of the high-temperature peak $\Delta H2$ were determined. In the column "Vertex temperature difference $T_h$-$T_l$" of Tables 3 to 7, values of the vertex temperature $T_h$ of the high-temperature peak $\Delta H2$ minus the vertex temperature $T_l$ of the resin intrinsic peak $\Delta H1$ are listed.

Next, a straight line L1 connecting a point $\alpha$ corresponding to 80°C on the DSC curve and a point $\beta$ corresponding to the melting end temperature T of the expanded beads was drawn. Furthermore, a straight line L2 passing through the local maximal point $\gamma$ which exists between the resin intrinsic peak $\Delta H1$ and the high-temperature peak $\Delta H2$ was drawn in parallel with the vertical axis of the graph to divide the resin intrinsic peak $\Delta H1$ and the high-temperature peak $\Delta H2$.

Then, the heat of fusion of the resin intrinsic peak $\Delta H1$ was calculated based on the area surrounded by the portion forming the resin intrinsic peak $\Delta H1$ on the DSC curve, the straight line L1, and the straight line L2. In addition, the heat of fusion of the high-temperature peak $\Delta H2$ was calculated based on the area surrounded by the portion forming the high-temperature peak $\Delta H2$ on the DSC curve, the straight line L1, and the straight line L2.

The operation mentioned above was performed three times using different samples, and the arithmetic mean value of the heat of fusion of the resin intrinsic peak $\Delta H1$ obtained in each measurements was taken as the heat of fusion of the resin intrinsic peak $\Delta H1$ of the expanded beads, and the arithmetic mean value of the heat of fusion of the high-temperature peak $\Delta H2$ was taken as the heat of fusion of the high-temperature peak $\Delta H2$ of the expanded beads.

[Density of molded article]

In-mold molding was performed at the lowest molding pressure within the moldable range to thereby obtain an expanded beads molded article. The mass (unit: g) of the expanded beads molded article was divided by the volume (unit: L) determined from the outer dimension of the molded article followed by unit conversion to calculate the density (unit: $kg/m^3$) of the molded article.

[Moldable range]

In the evaluation of the moldable range, in-mold molding was performed while varying the molding pressure during main heating in increments of 0.01 MPa from 0.26 MPa(G) to 0.42 MPa(G) to produce a molded article, and the moldable range was determined based on the surface property, fusion bondability and recoverability of the resultant molded article.

A method for producing the molded article is as follows. First, the expanded beads were placed in a pressure-resistant container, then the inside of the pressure-resistant container was pressurized with air to impregnate the expanded beads with the air, thereby applying an internal pressure of 0.10 MPa(G) to the expanded beads. Next, the expanded beads having the internal pressure applied thereto were filled into a mold by a cracking filling method. In this example, a mold having a cavity capable of molding a flat plate-shaped molded article having a length of 250 mm, a width of 200 mm, and a thickness of 50 mm was used. In the cracking filling, the expanded beads were filled into the mold with a cracking gap of 5 mm (i.e., a cracking amount of 10%) in the thickness direction of the molded article, and then the mold was completely closed to compress the expanded beads in the mold mechanically.

Next, steam was supplied into the mold to perform in-mold molding. In the in-mold molding, first, preheating was performed by supplying steam into the mold for 5 seconds while keeping a drain valve of the mold open. Then, the drain valve was closed, and steam was supplied from one surface side of the mold until the pressure reached a pressure 0.08 MPa(G) lower than the molding pressure during main heating, thereby performing a first one side heating. Next, steam was supplied from the other surface side of the mold until the pressure reached a pressure 0.04 MPa(G) lower than the molding pressure during main heating, thereby performing a second one side heating. Thereafter, steam was supplied from both surfaces of the mold until the pressure reached the molding pressure during the main heating, thereby performing the main heating. After completion of the main heating, the pressure in the mold was released, and the molded article in the mold was cooled until a surface pressure due to the foaming force of the molded article reached 0.04 MPa(G).

After that, the molded article taken out from the mold was left to stand in an oven at 80°C for 12 hours, thereby performing an aging step. After the aging step, the molded article was left to stand for 24 hours under conditions of a relative humidity of 50%, 23°C, and 1 atm to condition the molded article. Based on the evaluation made on the surface property, fusion bondability and recoverability of the molded article after conditioned, a range of the molding pressure at which the molded article that cleared all items of the after-mentioned evaluation criteria was molded (i.e., a molding pressure at which an acceptable molded article could be obtained) was determined as the moldable range. The broader moldable range can be considered to be more advantageous to in-mold moldability. Moreover, the lower the pressure capable of molding enables an in-mold molding with the smaller amount of steam, and thus can be considered to be excellent in productivity.

The evaluation methods of surface property, fusion bondability, and recoverability in the evaluation of the moldable range are as follows.

•Surface property

A square of 100 mm × 100 mm was drawn at the central region of a skin surface on one side in the thickness direction of the molded article, and then a diagonal line was drawn from any one corner of this square. Then, the number of voids existing on the diagonal line, specifically the number of the gaps formed between the expanded bead and having a size of 1 mm × 1 mm or greater was counted. Then, the surface property was determined acceptable when the number of voids was 2 or less, and was determined unacceptable when the number of voids was 3 or more.

•Fusion bondability

The molded article was fractured so as to be approximately equally divided in the longitudinal direction. From among the expanded beads exposed on the fracture surface, 100 or more expanded beads randomly chosen were visually observed to determine whether expanded beads were fractured inside the particles (i.e., the expanded beads underwent material fracture) or at an interface between the expanded beads. Then, the ratio of the number of expanded beads fractured inside the particles to the total number of the observed expanded beads was calculated and expressed as a percentage (i.e., the material fracture ratio), and this value was taken as the fusion-bonding rate. Fusion bondability was determined to be acceptable if the fusion-bonding rate was 80% or more, and unacceptable if the fusion-bonding rate was less than 80%.

•Recoverability

In a plan view of a molded article viewed from the thickness direction, the thicknesses of the molded article at four positions 10 mm inward from vertexes of a face, which is surrounded by vertical sides of 250 mm and horizontal sides of 200 mm, toward the central region of the said face, and the thickness of the molded article at the central part of the said face were measured. Next, the ratio (unit: %) of the thickness at the thinnest portion to the thickness at the thickest portion among the measured portions was calculated. The recoverability was determined to be acceptable when the thickness ratio thus obtained was 95% or more, and unacceptable if the thickness ratio was less than 95%.

[Closed cell content of molded article]

In-mold molding was performed at the lowest molding pressure within the moldable range described above to obtain a molded article. A test specimen of 25 mm in length × 25 mm in width × 30 mm in height was cut out from the central part of the molded article, and the geometric volume Va (unit: cm$^3$) of the test specimen, that is, the product of the longitudinal dimension (unit: cm), the lateral dimension (unit: cm), and the height dimension (unit: cm) was calculated. Next, according to Procedure C described in ASTM-D2856-70, the true volume value Vx of the test specimen was measured with an air-comparison pycnometer (specifically, "Beckman Model1000 Air Comparison Pycnometer" manufactured by Tokyo-Science. Co, Ltd). Note that the true volume value Vx obtained by the air comparison pycnometer is the sum (unit: cm$^3$) of the volume of the resin constituting the measurement sample and the total cell volume of the closed cell portion in the measurement sample.

The closed cell content (unit: %) of the test specimen was calculated based on the following equation (2), using mass W (unit: g) of the test specimen obtained as described above, the density $\rho$ (unit: g/cm$^3$) of the resin constituting the expanded beads, the geometric volume Va of the test specimen obtained by the above-described method, and the true volume Vx of the test specimen.

$$\text{Closed cell content} = (Vx - W/\rho) \times 100/(Va - W/\rho) \ldots (2)$$

The operation described above was performed on five test specimens, and the closed cell content of each test specimen was calculated. Then, the arithmetic mean value of the closed cell contents of these five test specimens was taken as the closed cell content of the molded article.

[Compressive strength at 5% and compressive strength at 50% of molded article]

In-mold molding was performed at the lowest molding pressure within the moldable range described above to obtain a molded article. A rectangular parallelepiped test piece having a length of 50 mm, a width of 50 mm, and a thickness of 25 mm was sampled from the central part of the molded article. In accordance with the method specified in JIS K7220:2006, a compression test of the test piece was performed at a compression speed of 10 mm/min to obtain a stress-strain curve. Note that the compression test was performed in a laboratory at 23°C. The compressive stress at 5% of deformation and the compressive stress at 50% of deformation of the test piece were calculated based on this stress-strain curve, and these values were respectively taken as the compressive strength at 5% and the compressive strength at 50% of the molded article. In the column "Compressive strength at 50%/density" in Tables 3 to 7, the value (unit: kPa/(kg/m$^3$)) of the compressive strength at 50% divided by the density of the molded article was filled, and in the column "Compressive strength ratio", the ratio of the compressive strength at 5% to the compressive strength at 50%, that is, the value of the compressive strength at 5% divided by the compressive strength at 50% was filled.

[Table 3]

(Table 3)

| | | | Unit | Example 1-1 | Example 1-2 | Example 1-3 | Example 1-4 |
|---|---|---|---|---|---|---|---|
| Resin particles | Resin composition A | Type | - | A1-1 | Al-1 | A1-1 | A1-1 |
| | | Mass ratio | mass% | 15 | 5 | 50 | 30 |
| | Resin B | Type | - | B1-1 | B1-1 | B1-1 | B1-1 |
| | | Mass ratio | mass% | 85 | 95 | 50 | 70 |
| | Melting point difference $Tm_A$-$Tm_B$ | | °C | 21 | 21 | 21 | 21 |
| | MFR difference $MFR_A$-$MFR_B$ | | g/10 min | 18 | 18 | 18 | 18 |
| | Flexural modulus ratio $M_B$/$M_A$ | | - | 1.0 | 1.0 | 1.0 | 1.0 |
| | Melting Point Tmr | | °C | 148 | 145 | 158 | 153 |
| | Crystallization temperature Tcr | | °C | 113 | 109 | 124 | 116 |
| | Tmr-Tcr | | °C | 35 | 36 | 34 | 37 |
| | $D_{sol}$-$A_{insol}$ | | g | 0.03 | 0.02 | 0.07 | 0.04 |
| | Average diameter of domain | | $\mu$m | 0.8 | 0.6 | 1.1 | 1.0 |
| | Ash content | | mass% | 0.8 | 0.3 | 2.6 | 1.5 |
| Expanded beads | Bulk density | | kg/m$^3$ | 45 | 45 | 45 | 45 |
| | Average cell diameter | | $\mu$m | 60 | 80 | 50 | 55 |
| | Closed cell content | | % | 96 | 96 | 92 | 94 |
| | Melting point Tm | | °C | 148 | 145 | 158 | 153 |
| | Crystallization temperature Tc | | °C | 113 | 109 | 124 | 116 |
| | Tm-Tc | | °C | 35 | 36 | 34 | 37 |
| | $D_{sol}$-$A_{insol}$ | | g | 0.03 | 0.02 | 0.07 | 0.04 |
| | Average diameter of domain | | $\mu$m | 0.6 | 0.5 | 0.8 | 0.8 |
| | Ash content | | mass% | 0.8 | 0.3 | 2.6 | 1.5 |
| | Melt mass flow rate | | g/10 min | 11 | 10 | 18 | 13 |
| | Flexural modulus | | MPa | 950 | 950 | 950 | 950 |
| | High-temperature peak | Vertex temperature $T_h$ | °C | 163 | 158 | 168 | 167 |
| | | Heat of fusion | J/g | 20 | 16 | 26 | 25 |
| | Resin intrinsic peak | Vertex temperature $T_l$ | °C | 139 | 137 | 145 | 142 |
| | | Heat of fusion | J/g | 50 | 52 | 54 | 54 |
| | Vertex temperature difference $T_h$-$T_l$ | | °C | 24 | 21 | 23 | 25 |

(continued)

| | | Unit | Example 1-1 | Example 1-2 | Example 1-3 | Example 1-4 |
|---|---|---|---|---|---|---|
| Molded article | Moldable range | MPa(G) | 0.28 - 0.32 | 0.28 - 0.32 | 0.31 - 0.32 | 0.30 - 0.32 |
| | Density | kg/m$^3$ | 50 | 50 | 50 | 50 |
| | Closed cell content | % | 86 | 88 | 82 | 84 |
| | Compressive strength at 5% | kPa | 220 | 220 | 230 | 230 |
| | Compressive strength at 50% | kPa | 420 | 430 | 360 | 380 |
| | Compressive strength at 50%/density | kPa/(kg/m$^3$) | 3.4 | 8.6 | 7.2 | 7.6 |
| | Compressive strength ratio | - | 0.52 | 0.51 | 0.64 | 0.61 |

[Table 4]

(Table 4)

| | | | Unit | Example 1-5 | Example 1-6 | Example 1-7 |
|---|---|---|---|---|---|---|
| Resin particles | Resin composition A | Type | - | A1-1 | A1-1 | A1-1 |
| | | Mass ratio | mass% | 30 | 30 | 30 |
| | Resin B | Type | - | B1-2 | B1-3 | B1-4 |
| | | Mass ratio | mass% | 70 | 70 | 70 |
| | Melting point difference $Tm_A$-$Tm_B$ | | °C | 13 | 25 | 23 |
| | MFR difference $MFR_A$-$MFR_B$ | | g/10 min | 19 | 19 | 19 |
| | Flexural modulus ratio $M_B/M_A$ | | - | 1.3 | 0.89 | 0.96 |
| | Melting Point Tmr | | °C | 157 | 152 | 151 |
| | Crystallization temperature Tcr | | °C | 119 | 115 | 113 |
| | Tmr-Tcr | | °C | 38 | 37 | 38 |
| | $D_{sol}$-$A_{insol}$ | | g | 0.04 | 0.07 | 0.05 |
| | Average diameter of domain | | μm | 1.0 | 1.0 | 0.2 |
| | Ash content | | mass% | 1.5 | 1.5 | 1.5 |

(continued)

| | | | Unit | Example 1-5 | Example 1-6 | Example 1-7 |
|---|---|---|---|---|---|---|
| Expanded beads | | Bulk density | kg/m³ | 45 | 45 | 45 |
| | | Average cell diameter | μm | 65 | 45 | 65 |
| | | Closed cell content | % | 96 | 96 | 96 |
| | | Melting point Tm | °C | 157 | 152 | 151 |
| | | Crystallization temperature Tc | °C | 119 | 115 | 113 |
| | | Tm-Tc | °C | 38 | 37 | 38 |
| | | $D_{sol}$-$A_{insol}$ | g | 0.04 | 0.07 | 0.05 |
| | | Average diameter of domain | μm | 0.8 | 0.8 | 0.7 |
| | | Ash content | mass% | 1.5 | 1.5 | 1.5 |
| | | Melt mass flow rate | g/10 min | 12 | 11 | 12 |
| | | Flexural modulus | MPa | 1120 | 880 | 920 |
| | High-temperature peak | Vertex temperature $T_h$ | °C | 169 | 166 | 168 |
| | | Heat of fusion | J/g | 19 | 24 | 21 |
| | Resin intrinsic peak | Vertex temperature $T_l$ | °C | 152 | 137 | 139 |
| | | Heat of fusion | J/g | 61 | 38 | 50 |
| | | Vertex temperature difference $T_h$-$T_l$ | °C | 17 | 29 | 29 |
| Molded article | | Moldable range | MPa(G) | 0.34 - 0.36 | 0.30 - 0.32 | 0.30 - 0.32 |
| | | Density | kg/m³ | 50 | 50 | 50 |
| | | Closed cell content | % | 80 | 86 | 82 |
| | | Compressive strength at 5% | kPa | 250 | 195 | 225 |
| | | Compressive strength at 50% | kPa | 430 | 350 | 380 |
| | | Compressive strength at 50%/density | kPa/(kg/m³) | 8.6 | 7.0 | 7.6 |
| | | Compressive strength ratio | - | 0.58 | 0.56 | 0.59 |

[Table 5]

(Table 5)

| | | | Unit | Comparative Example 1-1 | Comparative Example 1-2 | Comparative Example 1-3 |
|---|---|---|---|---|---|---|
| Resin particles | Resin composition A | Type | - | A1-1 | A1-1 | - |
| | | Mass ratio | mass% | 100 | 30 | - |
| | Resin B | Type | - | - | B1-5 | B1-1 |
| | | Mass ratio | mass% | - | 70 | 85 |
| | | Type | - | - | - | B1-5 |
| | | Mass ratio | mass% | - | - | 15 |
| | Melting point difference $Tm_A$-$Tm_B$ | | °C | - | 2 | - |
| | MFR difference $MFR_A$-$MFR_B$ | | g/10 min | - | 16 | - |
| | Flexural modulus ratio $M_B/M_A$ | | - | - | 1.7 | - |
| | Melting Point Tmr | | °C | 164 | 163 | 149 |
| | Crystallization temperature Tcr | | °C | 124 | 119 | 111 |
| | Tmr-Tcr | | °C | 40 | 44 | 38 |
| | $D_{sol}$-$A_{insol}$ | | g | 0.12 | 0.04 | - |
| | Average diameter of domain | | μm | 1.2 | 0.4 | - |
| | Ash content | | mass% | 4.8 | 1.5 | 0 |
| Expanded beads | Bulk density | | kg/m³ | 45 | 45 | 45 |
| | Average cell diameter | | μm | 25 | 55 | 65 |
| | Closed cell content | | % | 75 | 93 | 96 |
| | Melting point Tm | | °C | 164 | 163 | 149 |
| | Crystallization temperature Tc | | °C | 124 | 119 | 111 |
| | Tm-Tc | | °C | 40 | 44 | 38 |
| | $D_{sol}$-$A_{insol}$ | | g | 0.12 | 0.04 | - |
| | Average diameter of domain | | μm | 1.0 | 0.8 | - |
| | Ash content | | mass% | 4.8 | 1.5 | 0.0 |
| | High-temperature | | g/10 min | 26 | 12 | 11 |
| | Flexural modulus | | MPa | 950 | 1350 | 1200 |
| | Resin intrinsic peak | Vertex temperature $T_l$ | °C | 172 | 172 | 164 |
| | | Heat of fusion | J/g | 35 | 35 | 22 |
| | Resin intrinsic peak | Vertex temperature $T_l$ | °C | 161 | 161 | 139 |
| | | Heat of fusion | J/g | 50 | 60 | 50 |
| | Vertex temperature difference $T_h$-$T_l$ | | °C | 11 | 11 | 25 |

(continued)

| | | Unit | Comparative Example 1-1 | Comparative Example 1-2 | Comparative Example 1-3 |
|---|---|---|---|---|---|
| Molded article | Moldable range | MPa(G) | None | None | 0.38 |
| | Density | kg/m$^3$ | - | - | 50 |
| | Closed cell content | % | - | - | 82 |
| | Compressive strength at 5% | kPa | - | - | 215 |
| | Compressive strength at 50% | kPa | - | - | 435 |
| | Compressive strength at 50%/density | kPa/(kg/m$^3$) | - | - | 8.7 |
| | Compressive strength ratio | - | - | - | 0.49 |

[Table 6]

(Table 6)

| | | | Unit | Example 1-8 |
|---|---|---|---|---|
| Resin particles | Resin composition A | Type | - | A1-1 |
| | | Mass ratio | mass% | 15 |
| | Resin B | Type | - | B1-1 |
| | | Mass ratio | mass% | 85 |
| | Melting point difference $Tm_A$-$Tm_B$ | | °C | 21 |
| | MFR difference $MFR_A$-$MFR_B$ | | g/10 min | 18 |
| | Flexural modulus ratio $M_B/M_A$ | | - | 1.0 |
| | Melting Point Tmr | | °C | 148 |
| | Crystallization temperature Tcr | | °C | 113 |
| | Tmr-Tcr | | °C | 35 |
| | $D_{sol}$-$A_{insol}$ | | g | 0.03 |
| | Average diameter of domain | | $\mu$m | 0.3 |
| | Ash content | | mass% | 0.8 |

(continued)

|  |  |  | Unit | Example 1-8 |
|---|---|---|---|---|
| Expanded beads | Bulk density | | kg/m³ | 27 |
| | Average cell diameter | | μm | 80 |
| | Closed cell content | | % | 95 |
| | Melting point Tm | | °C | 148 |
| | Crystallization temperature Tc | | °C | 113 |
| | Tm-Tc | | °C | 35 |
| | $D_{sol}$-$A_{insol}$ | | g | 0.03 |
| | Average diameter of domain | | μm | 0.5 |
| | Ash content | | mass% | 0.8 |
| | Melt mass flow rate | | g/10 min | 11 |
| | Flexural modulus | | MPa | 950 |
| | High-temperature peak | Vertex temperature $T_h$ | °C | 163 |
| | | Heat of fusion | J/g | 20 |
| | Resin intrinsic peak | Vertex temperature $T_l$ | °C | 139 |
| | | Heat of fusion | J/g | 50 |
| | Vertex temperature difference $T_h$-$T_l$ | | °C | 24 |
| Molded article | Moldable range | | MPa(G) | 0.28 - 0.30 |
| | Density | | kg/m³ | 30 |
| | Closed cell content | | % | 84 |
| | Compressive strength at 5% | | kPa | 105 |
| | Compressive strength at 50% | | kPa | 230 |
| | Compressive strength at 50%/density | | kPa/(kg/m³) | 7.7 |
| | Compressive strength ratio | | - | 0.46 |

[Table 7]

(Table 7)

| | | | Unit | Example 1-9 |
|---|---|---|---|---|
| Resin particles | Resin composition A | Type | - | A1-2 |
| | | Mass ratio | mass% | 30 |
| | Resin B | Type | - | B1-1 |
| | | Mass ratio | mass% | 70 |
| | Melting point difference $Tm_A$-$Tm_B$ | | °C | 21 |
| | MFR difference $MFR_A$-$MFR_B$ | | g/10 min | 18 |
| | Flexural modulus ratio $M_B/M_A$ | | - | 0.87 |
| | Melting Point Tmr | | °C | 153 |
| | Crystallization temperature Tcr | | °C | 117 |
| | Tmr-Tcr | | °C | 36 |
| | $D_{sol}$-$A_{insol}$ | | g | 0.05 |
| | Average diameter of domain | | μm | 0.3 |
| | Ash content | | mass% | 3.8 |
| Expanded beads | Bulk density | | kg/m³ | 45 |
| | Average cell diameter | | μm | 40 |
| | Closed cell content | | % | 94 |
| | Melting point Tm | | °C | 153 |
| | Crystallization temperature Tc | | °C | 117 |
| | Tm-Tc | | °C | 36 |
| | $D_{sol}$-$A_{insol}$ | | g | 0.05 |
| | Average diameter of domain | | μm | 0.7 |
| | Ash content | | mass% | 3.8 |
| | Melt mass flow rate | | g/10 min | 13 |
| | Flexural modulus | | MPa | 1000 |
| | High-temperature peak | Vertex temperature $T_h$ | °C | 169 |
| | | Heat of fusion | J/g | 22 |
| | Resin intrinsic peak | Vertex temperature $T_l$ | °C | 140 |
| | | Heat of fusion | J/g | 51 |
| | Vertex temperature difference $T_h$-$T_l$ | | °C | 29 |
| Molded article | Moldable range | | MPa(G) | 0.38 - 0.40 |
| | Density | | kg/m³ | 50 |
| | Closed cell content | | % | 80 |
| | Compressive strength at 5% | | kPa | 235 |
| | Compressive strength at 50% | | kPa | 360 |
| | Compressive strength at 50%/density | | kPa/(kg/m³) | 7.2 |
| | Compressive strength ratio | | - | 0.65 |

As shown in Tables 3 and 4, the polypropylene-based resin composition constituting the foamed layer of the expanded beads of Examples 1-1 to 1-7 contains a polypropylene-based resin and a rubbery body containing the ethylene propylene-based rubber, and the rubbery bodies are dispersed in the polypropylene-based resin. Furthermore, the melting points Tm of the expanded beads fall within the specific range mentioned above. Therefore, the expanded beads of Examples 1-1 to 1-7 have good in-mold moldability. In addition, since the amount of $D_{sol}$-$A_{insol}$ in the expanded beads of Examples 1-1 to 1-7 and the difference Tm-Tc between the melting point Tm and the crystallization temperature Tc are both within the specific ranges mentioned above, the molded articles formed of these expanded beads have a low rate of increase in compressive stress with increasing compressive strain, and have excellent shock absorption property.

On the other hand, as shown in Table 5, the melting point Tm of the expanded beads of Comparative Example 1-1 is out of the specific range mentioned above. Therefore, the expanded beads of Comparative Example 1-1 were incapable of forming a good molded article.

The melting point Tm of the expanded beads of Comparative Example 1-2 is out of the specific range mentioned above. Therefore, the expanded beads of Comparative Example 1-2 were incapable of forming a good molded article.

The expanded beads of Comparative Example 1-3 include no rubbery bodies containing the ethylene propylene-based rubber. The expanded beads of Comparative Example 1-3 have a narrower range of molding pressure at which a good molded article was available as compared with the expanded beads of Examples. In addition, the molded article made of expanded beads of Comparative Example 1-3 has a compressive strength ratio lower than the compressive strength ratio of the molded article made of expanded beads of Examples, and has a high rate of increase in compressive stress with increasing compressive strain.

In addition, from the comparison between Examples 1-1 to 1-7 and Reference Example 1-1, and the comparison between Example 1-8 and Reference Example 1-2, it can be understood that the expanded beads containing the rubbery bodies including the ethylene propylene-based rubber can reduce the rate of increase in compressive stress with increasing compressive strain of the molded article as compared with the expanded beads not containing rubbery bodies.

Also, as shown in Table 7, it can be understood that such an effect can also be obtained in the expanded beads of Example 1-9, in which the foamed layer contains the polypropylene-based resin composition A derived from an automobile member and containing the ethylene propylene-based rubber.

Furthermore, as shown in Example 1-10 and Example 1-11, it can be understood that such an effect can also be obtained in expanded beads having a fusion-bonding layer and expanded beads having a through-hole.

<Embodiment 2>

(Polypropylene-based resin composition A)

Table 8 shows the properties and the like of the polypropylene-based resin composition A used in the production of the expanded beads of the present embodiment. The resin composition A2-1 shown in Table 8 is recycled polypropylene (more specifically, the resin composition A2-1 is "PLC-A02" produced by Planic Co., Ltd.), whose main component is the polypropylene-based resin composition a1 recovered from ASR. The shape of the resin composition A2-1 is a columnar pellet, the average length of the pellet in the height direction (the average length in the extrusion direction during the production of the pellet) is 3 mm, the pellet diameter is 3 mm, and the average mass of the pellet is 16 mg. The resin composition A2-1 contains an inorganic substance whose main component is talc. When the morphology of the resin composition A2-1 used in the present example was observed by the method described later, the resin composition A2-1 exhibited a morphology with a matrix of polypropylene and domains of rubbery bodies containing the ethylene propylene-based rubber.

[Table 8]

| (Table 8) Polypropylene-based resin composition A | | |
|---|---|---|
| | Unit | A2-1 |
| Density | kg/m$^3$ | 930 |
| Ethylene component content | mass% | 26 |
| Ash content | mass% | 5 |
| Melting point Tm$_A$ | °C | 164 |
| Melt mass flow rate MFR$_A$ | g/10 min | 26 |
| Flexural modulus M$_A$ | MPa | 950 |
| n-Decane soluble fraction at 23°C | mass% | 12 |
| $D_{sol}$-$A_{insol}$ | g | 0.12 |

The methods for measuring the physical property values of the polypropylene-based resin composition A shown in Table 8 are the same as the methods for measuring the physical property values of the polypropylene-based resin composition A in Embodiment 1.

(Polypropylene-based resin B)

Table 9 shows the properties and the like of the polypropylene-based resin B used in the production of the expanded beads of the present embodiment.

[Table 9]

| (Table 9) Polypropylene-based resin B | | | | | | | |
|---|---|---|---|---|---|---|---|
| | Unit | B2-1 | B2-2 | B2-3 | B2-4 | B2-5 | B2-6 |
| Type of polypropylene-based resin | - | rPP | rPP | rPP | rPP | hPP | hPP |
| Density | kg/m$^3$ | 900 | 900 | 900 | 900 | 900 | 900 |
| Ethylene component content | mass% | 2.8 | 1.1 | 3.4 | 0.6 | 0 | 0 |
| Butene component content | mass% | - | - | - | 9.7 | - | - |
| Ash content | mass% | 0 | 0 | 0 | 0 | 0 | 0 |
| Melting point Tm$_B$ | °C | 143 | 151 | 139 | 141 | 162 | 162 |
| Melt mass flow rate MFR$_B$ | g/10 min | 8 | 7 | 7 | 7 | 10 | 45 |
| Flexural modulus | MPa | 950 | 1200 | 850 | 910 | 1650 | 1650 |

The methods for measuring the physical property values of the polypropylenebased resin B shown in Table 9 are the same as the methods for measuring the physical property values of the polypropylene-based resin B in Embodiment 1.
Next, the configuration and the production method of the expanded beads of the present embodiment will be described.

(Example 2-1)

The resin composition A2-1, the polypropylene-based resin B2-1, and a cell controlling agent were supplied into an extruder at a mass ratio shown in Table 10, and a mixture in molten state containing the resin composition A2-1 and the resin B2-1 was formed in the extruder. Note that zinc borate was used as the cell controlling agent. The addition amount of zinc borate was 500 ppm by mass with respect to the sum of the resin composition A2-1 and the resin B2-1.
Thereafter, the mixture in molten state was extruded into a strand shape from a small hole of a die provided downstream of the extruder. This extrudate in a strand shape was drawn, cooled, and then cut into an appropriate length with a pelletizer to obtain resin particles.
The resin particles thus obtained were expanded by a direct foaming method. Specifically, first, 1 kg of resin particles was put into a container having an internal volume of 5 L together with 3 L of water as an aqueous medium. Next, 0.3 parts by mass of a dispersant per 100 parts by mass of the resin particles, and as dispersion aids, 0.02 parts by mass of sodium alkylbenzene sulfonate and 0.01 parts by mass of aluminum sulfate were added into the container to disperse the resin particles in the aqueous medium. Kaolin was used as the dispersant.
Thereafter, carbon dioxide as a blowing agent was supplied into the sealed container while stirring the inside of the container, and the temperature in the container was raised to 156.2°C. The pressure in the container at this time was 2.1 MPa(G). Thereafter, the temperature in the container was maintained for 15 minutes to impregnate the resin particles with the blowing agent. Thereafter, the container was opened and the contents were released to an atmosphere at an atmospheric pressure to expand the resin particles. The expanded beads were dried for 24 hours in an atmosphere at a temperature of 23°C and a relative humidity of 50%. From the above, expanded beads of Example 2-1 were obtained.

(Examples 2-2 to 2-3)

The methods for producing the expanded beads of Examples 2-2 to 2-3 are mostly the same as the method for producing the expanded beads of Example 2-1, except that the mass ratios between the resin composition A and the resin B and the foaming conditions were changed as shown in Table 10.

(Examples 2-4 to 2-5)

The methods for producing the expanded beads of Examples 2-4 to 2-5 are mostly the same as the method for producing the expanded beads of Example 2-1, except that the type of the resin B, the mass ratios between the resin composition A and the resin B, and the foaming conditions were changed as shown in Tables 10 and 11.

(Example 2-6)

The method for producing the expanded beads of Example 2-6 is mostly the same as the method for producing the expanded beads of Example 2-1, except that the mass ratio between the resin composition A and the resin B and the foaming conditions were changed as shown in Table 11.

(Example 2-7)

The method for producing the expanded beads of Example 2-7 is mostly the same as the method for producing the expanded beads of Example 2-3, except that the type of Resin B and the foaming conditions were changed as shown in Table 11.

(Example 2-8)

The method for producing the expanded beads of Example 2-8 is mostly the same as the method for producing the expanded beads of Example 2-1, except that the foaming conditions were changed as shown in Table 11.

(Comparative Examples 2-1 to 2-2)

As shown in Table 12, the expanded beads of Comparative Example 2-1 and of Comparative Example 2-2 do not contain the resin B, and are formed of the resin composition A2-1. The methods for producing the expanded beads of these Comparative Examples are mostly the same as the method for producing the expanded beads of Example 2-1, except that the resin B was not used and only the resin composition A2-1 was used, and that the foaming conditions were changed as shown in Table 12.

(Comparative Example 2-3)

The method for producing the expanded beads of Comparative Example 2-3 is mostly the same as the method for producing the expanded beads of Example 2-3, except that the type of Resin B and the foaming conditions were changed as shown in Table 12.

(Reference Example 2-1)

The method for producing the expanded beads of Reference Example 2-1 is mostly the same as the method for producing the expanded beads of Example 2-3, except that a polypropylene-based resin B2-6 not containing the ethylene propylene-based rubber was used instead of the resin composition A2-1 and that the foaming conditions were changed as shown in Table 12.

The resin particles thus obtained, the expanded beads, and a molded article obtained by in-mold molding of the expanded beads were used to evaluate each evaluation item shown in Tables 10 to 12. Among these evaluation items, evaluation methods for items that were not evaluated in Embodiment 1 are described below. Note that among the evaluation items evaluated in the present embodiment and subsequent embodiments, the evaluation method for an evaluation item that is the same as an evaluation item evaluated in the already described embodiment is the same as the evaluation method in the already described embodiment.

[Ash content of resin particles and of expanded beads]

The methods of measuring the ash content of the resin particles and the ash content of the expanded beads are the same as the method of measuring the ash content of the resin composition A described above, except that the resin particles or the expanded beads are used instead of the resin composition A.

[Apparent density of expanded beads]

The expanded beads were left to stand for 1 day in an environment of a relative humidity of 50%, a temperature of 23°C, and an atmospheric pressure of 1 atm to condition the expanded beads. The mass (unit: g) of the expanded beads was measured, and then the expanded beads were immersed in water at 23°C contained in a measuring cylinder with a wire mesh, and the volume (unit: L) of the expanded beads was determined from the increase in the water level. Thereafter, the apparent density (unit: $kg/m^3$) of the expanded beads was calculated by dividing the mass of the expanded beads by the volume of the expanded beads and converting the units.

[Vertex temperature, peak height, and full width at half maximum of endothermic peak]

The vertex temperature Ta, the peak height ha, the full width at half maximum wa of the first endothermic peak Pa, and the vertex temperature Tb, the peak height hb, and the full width at half maximum wb of the second endothermic peak Pb were measured by the above-described methods. In Tables 10 to 12, the value of the ratio hb/ha of the peak height hb of the second endothermic peak Pb to the peak height ha of the first endothermic peak Pa calculated based on the height of each endothermic peak, the difference Tb-Ta between the vertex temperatures calculated based on the vertex temperature of each endothermic peak, and the full width at half maximum of each endothermic peak are listed.

[Heat of fusion of endothermic peak]

First, a DSC curve was obtained by performing differential scanning calorimetry under the same conditions as those in the measurement of the vertex temperature of each endothermic peak and the like. Next, as shown in Fig. 1, a straight line L1 was drawn, which connects a point $\alpha$ corresponding to 80°C on the DSC curve and a point $\beta$ corresponding to the melting end temperature T of the expanded beads.

After drawing the straight line L1, a straight line L2 passing through a local maximum point $\gamma$ which exists between the first endothermic peak Pa and the second endothermic peak Pb was drawn in parallel with the vertical axis of the graph to divide the first endothermic peak Pa and the second endothermic peak Pb. Then, the heat of fusion of each endothermic peak was calculated based on the area of the portion surrounded by the straight line L1, the straight line L2 and the portion forming each endothermic peak on the DSC curve. Note that in Tables 10 to 12, the heat of fusion of each endothermic peak, as well as the ratio Qa/Qb of the heats of fusion and the sum Qa+Qb of the heats of fusion calculated based on the values of the heat of fusion of each endothermic peak are listed.

[Melting point, melting end temperature, and full width at half maximum of melting peak of expanded beads]

A heat flux differential scanning calorimeter (Manufactured by SII Nano Technology Inc., model number: DSC7020) was used, and the expanded beads were heated from 23°C to 200°C at a heating rate of 10°C/min. Thereafter, the expanded beads were cooled from 200°C to 23°C at a cooling rate of 10°C/min. After the completion of cooling, the expanded beads were heated again from 23°C to 200°C at a heating rate of 10°C/min (i.e., second heating), and a DSC curve was obtained. Then, the vertex temperature of the melting peak appearing on the DSC curve in the second heating was taken as the melting point of the expanded beads, and the temperature at the end point on the higher temperature side of the melting peak, that is, the temperature at the intersection between the melting peak and the baseline on the higher temperature side than the melting peak on the second DSC curve was taken as the melting end temperature. Note that the melting point of the expanded beads measured in this manner is equivalent to the melting point Tm of the expanded beads measured by the measurement method of Embodiment 1.

Furthermore, the full width at half maximum of the melting peak on the second DSC curve was calculated by the method same as the method of measuring the full width at half maximum wa of the first endothermic peak Pa.

[Moldable range, minimum molding pressure]

In the evaluation of the moldable range and the minimum molding pressure, an expanded beads molded article was produced by performing in-mold molding while varying the molding pressure during main heating in increments of 0.01 MPa from 0.26 to 0.46 MPa(G). The minimum molding pressure and the moldable range were determined based on the surface property, fusion bondability and recoverability of the resultant molded article. Note that the specific method for producing the expanded beads molded article is the same as that in Embodiment 1.

Based on the evaluation made on the surface property, fusion bondability and recoverability of the molded article after conditioned, a range of the molding pressure at which the molded article that cleared all items of the after-mentioned evaluation criteria was molded (i.e., a molding pressure at which an acceptable molded article could be obtained) was determined as the moldable range, and the lowest molding pressure within the moldable range was taken as the minimum molding pressure. Note that the method of evaluating the surface property, fusion bondability, and recoverability of the expanded beads molded article is the same as that in Embodiment 1.

Incidentally, in Comparative Examples 2-1 to 2-3 shown in Table 12, no acceptable product could be obtained within the range of the molding pressure mentioned above. Therefore, "None" was entered in the column "Moldable range" and a symbol "-" was entered in the column "Minimum molding pressure" in these tables. For these Comparative Examples, no other evaluation was performed on molded articles. Therefore, a symbol "-" was entered in each evaluation item of the molded article in Comparative Examples 2-1 to 2-3.

[Balance between molding pressure and rigidity]

The balance between molding pressure and rigidity was evaluated based on a value of the compressive strength at 50% divided by the density. The rigidity of the polypropylene-based resin expanded beads molded article tends to increase with increasing density of the molded article. The rigidity of the polypropylene-based resin expanded beads molded article tends to increase with increasing molding pressure. Therefore, the value of compressive strength at 50%/density is used as an index of the balance, considering an influence by the density of the molded article, and it can be determined that the balance between the molding pressure and the rigidity is good when the value of compressive strength at 50%/density is higher than a value expected from the molding pressure.

In this example, a value (unit: $kPa \cdot m^3/kg$) calculated based on the following equation (7) was taken as the value expected from the molding pressure, and the balance between the molding pressure and the rigidity was evaluated based on the comparison result between this value and the value of compressive strength at 50%/density. Note that in this example, the molding pressure (unit: kPa) in the following equation (7) was a molding pressure at which a molded article of which the value of compressive strength at 50%/density was measured was molded, that is, a minimum molding pressure. The minimum molding pressure in the following equation (7) is given as an absolute pressure, and the unit of the minimum molding pressure is "kPa".

$$0.025 \times (\text{molding pressure}) - 2.75 \dots (7)$$

The meanings of the symbols listed in the column "Balance between molding pressure and rigidity" in Tables 10 to 12 are as follows.

Excellent: The value of compressive strength at 50%/density is the value of the equation (7) plus 1.0 or more.
Good: The value of compressive strength at 50%/density is greater than or equal to the value of the equation (7) and less than the value of the equation (7) plus 1.0.
Poor: The value of compressive strength at 50%/density is less than the value of the equation (7).

In the evaluation of the balance between the molding pressure and the rigidity, in the case of "Excellent" or "Good", that is, the symbol listed when the value of compressive strength at 50%/density was equal to or more than the value of the equation (7), the balance is determined to be acceptable because the rigidity appropriate to the molding pressure was obtained and in the case of "Poor", that is, the symbol listed when the value of compressive strength at 50%/density was less than the value of the equation (7), the balance is determined to be unacceptable because the rigidity was insufficient to the molding pressure..

[Table 10]

(Table 10)

| | | | | Example 2-1 | Example 2-2 | Example 2-3 | Example 2-4 |
|---|---|---|---|---|---|---|---|
| Resin particles | Resin composition A | Type | | A2-1 | A2-1 | A2-1 | A2-1 |
| | | Blending amount | parts by mass | 15 | 5 | 30 | 30 |
| | Resin B | Type | | B2-1 | B2-1 | B2-1 | B2-2 |
| | | Blending amount | parts by mass | 85 | 95 | 70 | 70 |
| | Melting point difference $Tm_A$-$Tm_B$ | | °C | 21 | 21 | 21 | 13 |
| | MFR difference $MFR_A$-$MFR_B$ | | g/10 min | 18 | 18 | 18 | 19 |
| | $D_{sol}$-$A_{insol}$ | | g | 0.03 | 0.02 | 0.04 | 0.04 |
| | Ash content | | mass% | 0.8 | 0.3 | 1.5 | 1.5 |
| Foaming conditions | Foaming temperature | | °C | 156.2 | 152.6 | 158.2 | 161.9 |
| | Pressure in container | | MPa | 2.1 | 2.2 | 1.9 | 1.6 |
| | Retention time | | minutes | 15 | 15 | 15 | 15 |

(continued)

| | | | | Example 2-1 | Example 2-2 | Example 2-3 | Example 2-4 |
|---|---|---|---|---|---|---|---|
| Expanded beads | Bulk density | | kg/m$^3$ | 45 | 45 | 45 | 45 |
| | Apparent density | | kg/m$^3$ | 72 | 72 | 72 | 72 |
| | Average cell diameter | | $\mu$m | 60 | 80 | 55 | 65 |
| | Closed cell content | | % | 96 | 96 | 94 | 95 |
| | $D_{sol}$-$A_{insol}$ | | g | 0.03 | 0.02 | 0.04 | 0.04 |
| | Ash content | | mass% | 0.8 | 0.3 | 1.5 | 1.5 |
| | First endothermic peak | Vertex temperature Ta | °C | 139 | 137 | 142 | 152 |
| | | Heat of fusion Qa | J/g | 50 | 52 | 54 | 61 |
| | | Full width at half maximum wa | °C | 24.7 | 20.8 | 23.7 | 17.3 |
| | Second endothermic peak | Vertex temperature Tb | °C | 163 | 158 | 167 | 169 |
| | | Heat of fusion Qb | J/g | 20 | 16 | 25 | 20 |
| | | Full width at half maximum wb | °C | 3.8 | 3.4 | 3.5 | 4.1 |
| | Vertex temperature difference Tb-Ta | | °C | 24 | 21 | 25 | 17 |
| | Peak height ratio hb/ha | | - | 2.3 | 1.6 | 1.9 | 1.4 |
| | Ratio of heat of fusion Qa/Qb | | - | 2.5 | 3.3 | 2.2 | 3.1 |
| | Sum of heat of fusion Qa+Qb | | J/g | 70 | 68 | 79 | 81 |
| | Melting peak in second DSC curve | Melting point | °C | 148 | 145 | 153 | 157 |
| | | Melting end temperature | °C | 162 | 158 | 165 | 163 |
| | | Full width at half maximum | °C | 21 | 16 | 22 | 12 |

(continued)

| | | | | Example 2-1 | Example 2-2 | Example 2-3 | Example 2-4 |
|---|---|---|---|---|---|---|---|
| Expanded beads molded article | Density | | kg/m³ | 50 | 50 | 50 | 50 |
| | Moldable range | | MPa(G) | 0.28 - 0.32 | 0.28 - 0.32 | 0.30 - 0.32 | 0.34 - 0.36 |
| | Minimum molding pressure | Gauge pressure | MPa(G) | 0.28 | 0.28 | 0.30 | 0.34 |
| | | Absolute pressure | kPa | 380 | 380 | 400 | 440 |
| | Closed cell content | | % | 86 | 88 | 85 | 85 |
| | Compressive strength at 50% | | kPa | 420 | 430 | 380 | 430 |
| | Compressive strength at 50%/density | | kPa/(kg/m³) | 8.4 | 8.6 | 7.6 | 8.6 |
| | Value of Equation (10) | | kPa/(kg/m³) | 6.8 | 6.8 | 7.3 | 8.3 |
| | Balance between minimum molding pressure and rigidity | | - | Excellent | Excellent | Good | Good |

[Table 11]

(Table 11)

| | | | | Example 2-5 | Example 2-6 | Example 2-7 | Example 2-8 |
|---|---|---|---|---|---|---|---|
| Resin particles | Resin composition A | Type | | A2-1 | A2-1 | A2-1 | A2-1 |
| | | Blending amount | parts by mass | 30 | 50 | 30 | 15 |
| | Resin B | Type | | B2-4 | B2-1 | B2-3 | B2-1 |
| | | Blending amount | parts by mass | 70 | 50 | 70 | 85 |
| | Melting point difference $Tm_A$-$Tm_B$ | | °C | 23 | 21 | 25 | 21 |
| | MFR difference $MFR_A$-$MFR_B$ | | g/10 min | 19 | 18 | 19 | 18 |
| | $D_{sol}$-$A_{insol}$ | | g | 0.04 | 0.07 | 0.04 | 0.03 |
| | Ash content | | mass% | 1.5 | 2.6 | 1.5 | 0.8 |
| Foaming conditions | Foaming temperature | | °C | 160.0 | 160.7 | 158.0 | 153.8 |
| | Pressure in container | | MPa | 1.9 | 2.5 | 1.9 | 2.6 |
| | Retention time | | minutes | 15 | 15 | 15 | 15 |

(continued)

| | | | | Example 2-5 | Example 2-6 | Example 2-7 | Example 2-8 |
|---|---|---|---|---|---|---|---|
| Expanded beads | Bulk density | | kg/m³ | 45 | 45 | 45 | 45 |
| | Apparent density | | kg/m³ | 72 | 72 | 72 | 72 |
| | Average cell diameter | | μm | 55 | 50 | 45 | 50 |
| | Closed cell content | | % | 95 | 92 | 95 | 96 |
| | $D_{sol}$-$A_{insol}$ | | g | 0.04 | 0.07 | 0.04 | 0.03 |
| | Ash content | | mass% | 1.5 | 2.6 | 1.5 | 0.8 |
| | First endothermic peak | Vertex temperature Ta | °C | 139 | 145 | 137 | 138 |
| | | Heat of Qa | J/g | 50 | 54 | 38 | 44 |
| | | Full width at half maximum wa | °C | 24.7 | 26.4 | 28.8 | 27.0 |
| | Second endothermic peak | Vertex temperature Tb | °C | 168 | 168 | 166 | 162 |
| | | Heat of fusion Qb | J/g | 21 | 26 | 22 | 26 |
| | | Full width at half maximum wb | °C | 3.5 | 4.1 | 4.0 | 3.6 |
| | Vertex temperature difference Tb-Ta | | °C | 28 | 23 | 29 | 24 |
| | Peak height ratio hb/ha | | - | 1.9 | 2.9 | 3.0 | 3.0 |
| | Ratio of heat of fusion Qa/Qb | | - | 2.4 | 2.1 | 1.7 | 1.7 |
| | Sum of heat of fusion Qa+Qb | | J/g | 71 | 80 | 60 | 70 |
| | Melting peak in second DSC curve | Melting point | °C | 151 | 158 | 152 | 148 |
| | | Melting end temperature | °C | 163 | 164 | 164 | 162 |
| | | Full width at half maximum | °C | 22 | 21 | 27 | 21 |
| Expanded beads molded article | Density | | kg/m³ | 50 | 50 | 50 | 50 |
| | Moldable range | | MPa(G) | 0.28 - 0.30 | 0.31 - 0.32 | 0.30 - 0.32 | 0.42 - 0.44 |
| | Minimum molding pressure | Gauge pressure | MPa(G) | 0.28 | 0.31 | 0.30 | 0.42 |
| | | Absolute pressure | kPa | 380 | 410 | 400 | 520 |
| | Closed cell content | | % | 85 | 82 | 82 | 85 |
| | Compressive strength at 50% | | kPa | 380 | 360 | 350 | 440 |
| | Compressive strength at 50%/density | | kPa/(kg/m³) | 7.6 | 7.2 | 7.0 | 8.8 |
| | Value of Equation (10) | | kPa/(kg/m³) | 6.8 | 7.5 | 7.3 | 10.3 |
| | Balance between minimum molding pressure and rigidity | | - | Good | Poor | Poor | Poor |

[Table 12]

(Table 12)

|  |  |  |  | Comparative Example 2-1 | Comparative Example 2-2 | Comparative Example 2-3 | Reference Example 2-1 |
|---|---|---|---|---|---|---|---|
| Resin particles | Resin composition A | Type | - | A2-1 | A2-1 | A2-1 | B2-6 |
|  |  | Blending amount | parts by mass | 100 | 100 | 30 | 30 |
|  | Resin B | Type | - | - | - | B2-5 | B2-1 |
|  |  | Blending amount | parts by mass | - | - | 70 | 70 |
|  | Melting point difference $Tm_A$-$Tm_B$ | | °C | - | - | 2 | 19 |
|  | MFR difference $MFR_A$-$MFR_B$ | | g/10 min | - | - | 16 | 37 |
|  | $D_{sol}$-$A_{insol}$ | | g | - | - | 0.04 | - |
|  | Ash content | | mass% | 0.5 | 0.5 | 1.5 | 0.0 |
| Foaming conditions | Foaming temperature | | °C | 163.5 | 164.5 | 163.3 | 161.5 |
|  | Pressure in container | | MPa | 3.0 | 2.5 | 2.5 | 1.8 |
|  | Retention time | | minutes | 15 | 15 | 15 | 15 |

(continued)

| | | | | Comparative Example 2-1 | Comparative Example 2-2 | Comparative Example 2-3 | Reference Example 2-1 |
|---|---|---|---|---|---|---|---|
| Expanded beads | | Bulk density | kg/m$^3$ | 45 | 45 | 45 | 45 |
| | | Apparent density | kg/m$^3$ | 72 | 72 | 72 | 72 |
| | | Average cell diameter | μm | 25 | 29 | 55 | 70 |
| | | Closed cell content | % | 90 | 75 | 93 | 95 |
| | | $D_{sol}$-$A_{insol}$ | g | - | - | 0.04 | - |
| | | Ash content | mass% | 0.5 | 0.5 | 1.5 | 0.0 |
| | First endothermic peak | Vertex temperature Ta | °C | 161 | 162 | 161 | 142 |
| | | Heat of fusion Qa | J/g | 50 | 62 | 60 | 65 |
| | | Full width at half maximum wa | °C | 14.9 | 15.7 | 24.3 | 24.0 |
| | Second endothermic peak | Vertex temperature Tb | °C | 172 | 172 | 172 | 169 |
| | | Heat of fusion Qb | J/g | 35 | 21 | 35 | 24 |
| | | Full width at half maximum wb | °C | 4.3 | 3.3 | 4.3 | 3.5 |
| | Vertex temperature difference Tb-Ta | | °C | 11 | 10 | 11 | 27 |
| | Peak height ratio hb/ha | | - | 3.3 | 1.8 | 3.3 | 3.5 |
| | Ratio of heat of fusion Qa/Qb | | - | 1.4 | 3.0 | 1.7 | 2.7 |
| | Sum of heat of fusion Qa+Qb | | J/g | 85 | 83 | 95 | 89 |
| | Melting peak in second DSC curve | Melting | °C | 164 | 164 | 163 | 154 |
| | | Melting end temperature | °C | 166 | 166 | 165 | 166 |
| | | Full width at half maximum | °C | 6 | 6 | 6 | 21 |

(continued)

| | | | Comparative Example 2-1 | Comparative Example 2-2 | Comparative Example 2-3 | Reference Example 2-1 |
|---|---|---|---|---|---|---|
| Expanded beads molded article | Density | kg/m³ | - | - | - | 50 |
| | Moldable range | MPa(G) | None | None | None | 0.38 - 0.40 |
| | Minimum molding pressure | Gauge pressure | MPa(G) | - | - | - | 0.38 |
| | | Absolute pressure | kPa | - | - | - | 480 |
| | Closed cell content | % | - | - | - | 84 |
| | Compressive strength at 50% | kPa | - | - | - | 530 |
| | Compressive strength at 50%/density | kPa/(kg/m³) | - | - | - | 10.6 |
| | Value of Equation (10) | kPa/(kg/m³) | - | - | - | 9.3 |
| | Balance between minimum molding pressure and rigidity | - | - | - | - | Excellent |

As shown in Tables 10 and 11, the polypropylene-based resin composition constituting the foamed layer of the expanded beads of Examples 2-1 to 2-8 contains the polypropylene-based resin and the rubbery bodies containing the ethylene propylene-based rubber, and the rubbery bodies are dispersed in the polypropylene-based resin. The melting points of the expanded beads fall within the specific range mentioned above. Therefore, the expanded beads of Examples 2-1 to 2-8 have good in-mold moldability.

Among the expanded beads of Examples, the closed cell content of the expanded beads of Examples 2-1 to 2-5 is 85% or more. These expanded beads have the vertex temperature Tb of the second endothermic peak Pb of 158°C or higher, the difference Tb-Ta between the vertex temperature Tb of the second endothermic peak Pb and the vertex temperature Ta of the first endothermic peak Pa of 15°C or more and 30°C or less, and the ratio hb/ha of the peak height hb of the second endothermic peak Pb to the peak height ha of the first endothermic peak Pa of 1.2 or more and 2.8 or less. Therefore, these expanded beads have good in-mold moldability and are excellent in the balance of rigidity to molding pressure. From the results of Examples 2-1 to 2-5, it can be understood that these remarkable effects can be exhibited even when a polypropylene-based resin composition having a high melting point and containing the ethylene propylene-based rubber derived from a post-consumer material is contained in the foamed layer.

In particular, the expanded beads of Examples 2-1 and 2-2 are more excellent in the balance between the molding pressure and the rigidity of the molded article than the expanded beads of Examples 2-3 to 2-5. Furthermore, the expanded beads of Examples 2-1 and 2-2 are more excellent in the in-mold moldability and have wider moldable ranges than the expanded beads of Examples 2-3 to 2-5.

On the other hand, as shown in Table 12, the expanded beads of Comparative Example 2-1 and Comparative Example 2-2 include no rubbery bodies containing the ethylene propylene-based rubber. Therefore, the expanded beads of these Comparative Examples were incapable of providing a good molded article.

The melting point of the expanded beads of Comparative Example 2-3 is out of the specific range mentioned above. Therefore, the expanded beads of Comparative Example 2-3 were incapable of forming a good molded article.

Reference Example 2-1 is expanded beads formed of a polypropylene-based resin composition containing homopolypropylene as a main component and containing no ethylene propylene-based rubber. In the expanded beads of Reference Example 2-1, even though the peak height ratio hb/ha was higher than that of Examples 2-1 to 2-5, the balance of rigidity to molding pressure was good. From this, it can be understood that the effect of improving the balance of rigidity to molding pressure, which is brought about by setting the peak height ratio hb/ha within the above-mentioned specific range, is specific to expanded beads including the ethylene propylene-based rubber.

<Embodiment 3>

(Polypropylene-based resin composition A)

Table 13 shows the properties and the like of the polypropylene-based resin composition A used in the production of the expanded beads of the present embodiment. The polypropylene-based resin composition A3-1 shown in Table 13 is recycled polypropylene (more specifically, the resin composition A3-1 is "PLC-A02" produced by Planic Co., Ltd.) whose main component is polypropylene-based resin composition a1 recovered from ASR. The shape of the resin composition A3-1 is a columnar pellet, the average length of the pellet in the height direction (the average length in the extrusion direction during the production of the pellet) is 3 mm, the pellet diameter is 3 mm, and the average mass of the pellet is 16 mg. The polypropylene-based resin composition A3-1 contains an inorganic substance whose main component is talc. When the morphology of the polypropylene-based resin composition A3-1 used in the present example was observed by the method described later, the polypropylene-based resin composition A3-1 showed a morphology with a matrix of a polypropylene-based resin and domains of rubbery bodies containing the ethylene propylene-based rubber.

[Table 13]

| (Table 13) Polypropylene-based resin composition A | | | | |
|---|---|---|---|---|
| | Unit | A3-1 | A3-2 | A3-3 |
| Density | $kg/m^3$ | 930 | 930 | 1050 |
| Ethylene component content | mass% | 26 | 26 | 26 |
| Carbon black amount | mass% | 0.4 | 0.4 | 0.4 |
| Ash content | mass% | 4.8 | 4.8 | 20 |
| Melting point $Tm_A$ | °C | 164 | 164 | 164 |
| Melt flow rate $MFR_A$ | g/10 min | 26 | 15 | 26 |
| Flexural modulus $M_A$ | MPa | 950 | 1000 | 1000 |
| $M_A/Tm_A$ | MPa/°C | 5.8 | 6.1 | 6.1 |

The methods for measuring the physical property values of the polypropylene-based resin composition A shown in Table 13 are the same as the methods for measuring the physical property values of the polypropylene-based resin composition A in Embodiment 1.

(Polypropylene-based resin B)

Table 14 shows the properties and the like of the polypropylene-based resin B used in the production of the expanded beads of the present embodiment.

[Table 14]

| (Table 14) Polypropylene-based resin B | | | | | | |
|---|---|---|---|---|---|---|
| | Unit | B3-1 | B3-2 | B3-3 | B3-4 | B3-5 |
| Type of polypropylene-based resin | - | rPP | rPP | rPP | rPP | hPP |
| Density | $kg/m^3$ | 900 | 900 | 900 | 900 | 900 |
| Ethylene component content | mass% | 2.8 | 1.1 | 3.4 | 0.6 | 0 |
| Butene component content | mass% | - | - | - | 9.7 | - |
| Ash content | mass% | 0 | 0 | 0 | 0 | 0 |
| Melting point $Tm_B$ | °C | 143 | 151 | 139 | 141 | 162 |
| Melt flow rate $MFR_B$ | g/10 min | 8 | 7 | 7 | 7 | 10 |
| Flexural modulus $M_B$ | MPa | 950 | 1200 | 850 | 910 | 1650 |

The methods for measuring the physical property values of the polypropylene-based resin B shown in Table 14 are the same as the methods for measuring the physical property values of the polypropylene-based resin B in Embodiment 1.

Next, the configuration and the production method of the expanded beads of the present embodiment will be described.

(Example 3-1)

The resin composition A3-1, the resin B3-1, and a cell controlling agent were supplied into an extruder at a mass ratio shown in Table 15, and a mixture in molten state containing the resin composition A3-1 and the resin B3-1 was formed in the extruder. Note that zinc borate was used as the cell controlling agent. The addition amount of zinc borate was 500 ppm by mass with respect to the sum of the resin composition A3-1 and the resin B3-1.

Thereafter, the mixture in molten state was extruded into a strand shape from a small hole of a die provided downstream of the extruder. This extrudate in a strand shape was drawn, cooled, and then cut into an appropriate length with a pelletizer to obtain resin particles.

The resin particles thus obtained were expanded by direct foaming method. Specifically, first, 1 kg of resin particles were put into a container having an internal volume of 5 L together with 3 L of water as an aqueous medium. Next, 0.3 parts by mass of a dispersant per 100 parts by mass of the resin particles, and as dispersion aids, 0.02 parts by mass of sodium alkylbenzene sulfonate and 0.01 parts by mass of aluminum sulfate were added into the container to disperse the resin particles in the aqueous medium. Kaolin was used as the dispersant.

Thereafter, carbon dioxide as a blowing agent was supplied into the sealed container while stirring the inside of the container, and the temperature in the container was raised to 155.5°C. The pressure in the container at this time was 2.1 MPa(G). Thereafter, the temperature in the container was adjusted to 156°C, and then this temperature was maintained for 15 minutes to impregnate the resin particles with the blowing agent. Thereafter, the container was opened and the contents were released to an atmosphere at an atmospheric pressure to expand the resin particles. The expanded beads were dried for 24 hours in an atmosphere at a temperature of 23°C and a relative humidity of 50%. From the above, expanded beads of Example 3-1 were obtained.

(Example 3-2)

The method for producing the expanded beads of Example 3-2 is mostly the same as the method for producing the expanded beads of Example 3-1, except that the mass ratio between the resin composition A3-1 and that the resin B3-1 was changed as shown in Table 15 and the temperature in the container during foaming was changed to 152.5°C.

(Example 3-3)

The method for producing the expanded beads of Example 3-3 is mostly the same as the method for producing the expanded beads of Example 3-1, except that the mass ratio between the resin composition A3-1 and the resin B3-1 was changed as shown in Table 15 and that the temperature in the container during foaming was changed to 161°C.

(Example 3-4)

The method for producing the expanded beads of Example 3-4 is mostly the same as the method for producing the expanded beads of Example 3-1, except that the mass ratio between the resin composition A3-1 and the resin B3-1 was changed as shown in Table 15 and that the temperature in the container during foaming was changed to 158.5°C.

(Example 3-5)

The method for producing the expanded beads of Example 3-5 is mostly the same as the method for producing the expanded beads of Example 3-1, except that the type of the resin B was changed as shown in Table 15, that the mass ratio between the resin composition A and the resin B was changed as shown in Table 15, and that the temperature in the container during foaming was changed to 158.5°C.

(Example 3-6)

The method for producing the expanded beads of Example 3-6 is mostly the same as the method for producing the expanded beads of Example 3-1, except that the type of the resin B was changed as shown in Table 15, that the mass ratio between the resin composition A and the resin B was changed as shown in Table 15, and that the temperature in the container during foaming was changed to 158.5°C.

(Example 3-7)

The method for producing the expanded beads of Example 3-7 is mostly the same as the method for producing the expanded beads of Example 3-1 except that the type of the resin B was changed as shown in Table 16, that the mass ratio between the resin composition A and the resin B was changed as shown in Table 16, and that the temperature in the container during foaming was changed to 158.5°C.

(Example 3-8)

The method for producing the expanded beads of Example 3-8 is mostly the same as the method for producing the expanded beads of Example 3-1, except that the type of the resin composition A was changed as shown in Table 16, that the mass ratio between the resin composition A and the resin B was changed as shown in Table 16, and that the temperature in the container during foaming was changed to 158.5°C.

(Example 3-9)

The method for producing the expanded beads of Example 3-9 is mostly the same as the method for producing the expanded beads of Example 3-1, except that the type of the resin composition A was changed as shown in Table 16, that the mass ratio between the resin composition A and the resin B was changed as shown in Table 16, and that the temperature in the container during foaming was changed to 158.5°C.

(Example 3-10)

The method for producing the expanded beads of Example 3-10 is mostly the same as the method for producing the expanded beads of Example 3-1, except that the temperature in the container during foaming was changed to 155.5°C and the pressure in the container was changed to 2.8 MPa(G).

(Comparative Example 3-1)

The expanded beads of Comparative Example 3-1 contain no resin B and are formed of the resin composition A3-1. The method for producing the expanded beads of Comparative Example 3-1 is mostly the same as the method for producing the expanded beads of Example 3-1, except that the resin B was not used and the resin composition A3-1 was used, and that the temperature in the container during foaming was changed to 164°C.

(Comparative Example 3-2)

The method for producing the expanded beads of Comparative Example 3-2 is mostly the same as the method for producing the expanded beads of Example 3-1, except that the type of the resin B was changed as shown in Table 16, that the mass ratio between the resin composition A and the resin B was changed as shown in Table 16, and that the temperature in the container during foaming was changed to 164°C.

(Reference Example 3-1)

The expanded beads of Reference Example 3-1 contain no resin composition A, and are formed of the resin B3-1. The method for producing the expanded beads of Reference Example 3-1 is mostly the same as the method for producing the expanded beads of Example 3-1, except that the resin composition A was not used and only the resin B3-1 was used, and that the temperature in the container during foaming was changed to 149.5°C.

The resin particles thus obtained, the expanded beads, and a molded article made by in-mold molding of the expanded beads were used to evaluate each evaluation item shown in Tables 15 to 16. Among these evaluation items, evaluation methods for evaluation items that have not been evaluated in the already-described embodiments are described below.

[Melting point $T_r$ of expanded bead]

A heat flux differential scanning calorimeter (Manufactured by SII Nano Technology Inc., model number: DSC7020) was used, and the expanded beads were heated from 30°C to 230°C at a heating rate of 10°C/min. Thereafter, the expanded beads were cooled from 230°C to 23°C at a cooling rate of 10°C/min. After the completion of cooling, the expanded beads were heated again from 23°C to 230°C at a heating rate of 10°C/min (i.e., second heating) to obtain a DSC curve. Then, the vertex temperature of the melting peak appeared on the DSC curve in the second heating was taken as the melting point $T_r$ of the expanded beads. Note that the melting point $T_r$ of the expanded beads measured in this manner is equivalent to the melting point Tm of the expanded beads measured by the measurement method of Embodiment 1.

[Expandable range]

In the method for producing expanded beads described above, the temperature during foaming was varied in increments of 0.5°C within the range from 150°C to 165°C and thereby foaming the resin particles. At this time, an equilibrium vapor pressure in the container was 2.1 MPa(G).

Thereafter, the bulk density and state of the expanded beads obtained by foaming at each foaming temperature were evaluated. Then, the foaming temperature, at which the bulk density was 60 kg/m$^3$ or less, the expanded beads had no clear wrinkles, and almost no shrinkage of the expanded beads was confirmed, was determined to be the expandable temperature, and the lowest temperature of the expandable temperatures was taken as the lower limit of the expandable range, and the highest temperature was taken as the upper limit of the expandable range. The broader the range from the lower limit to the upper limit of the foaming temperature range within which a good product can be produced, the better the expandability of the resin particles during foaming. The broader range is favorable.

[Moldable range]

In the evaluation of the moldable range, an expanded beads molded article was produced by performing in-mold molding while varying the molding pressure during main heating in increments of 0.01 MPa from 0.26 MPa(G) to 0.38 MPa(G). The moldable range was determined based on the surface property, fusion bondability and recoverability of the resultant molded article. Note that the specific method for producing the expanded beads molded article is the same as that in Embodiment 1.

Based on the evaluation made on the surface property, fusion bondability and recoverability of the molded article after conditioned, a range of the molding pressure at which the molded article that cleared all items of the after-mentioned evaluation criteria was molded (i.e., a molding pressure at which an acceptable molded article could be obtained) was determined as the moldable range. Note that the method of evaluating the surface property, fusion bondability, and recoverability of the expanded beads molded article is the same as that in Embodiment 1.

[Table 15]

(Table 15)

| | | | Unit | Example 3-1 | Example 3-2 | **Example** 3-3 | Example 3-4 | Example 3-5 | Example 3-6 |
|---|---|---|---|---|---|---|---|---|---|
| Resin particles | Resin composition A | Type | - | A3-1 | A3-1 | A3-1 | A3-1 | A3-1 | A3-1 |
| | | Mass ratio | mass% | 15 | 5 | 50 | 30 | 30 | 30 |
| | Resin B | Type | - | B3-1 | B3-1 | B3-1 | B3-1 | B3-2 | B3-3 |
| | | Mass ratio | mass% | 85 | 95 | 50 | 70 | 70 | 70 |
| | Melting point difference $Tm_A$-$Tm_B$ | | °C | 21 | 21 | 21 | 21 | 13 | 25 |
| | MFR difference $MFR_A$-$MFR_B$ | | g/10 min | 18 | 18 | 18 | 18 | 19 | 19 |
| | Flexural modulus difference $M_B$-$M_A$ | | MPa | 0 | 0 | 0 | 0 | 250 | -100 |
| | Ash content | | mass% | 0.8 | 0.3 | 2.6 | 1.5 | 1.5 | 1.5 |
| Expanded beads | Bulk density | | kg/m$^3$ | 45 | 45 | 45 | 45 | 45 | 45 |
| | Average cell diameter | | μm | 60 | 80 | 50 | 55 | 65 | 45 |
| | Closed cell content | | % | 96 | 96 | 92 | 94 | 96 | 96 |
| | Ash content | | mass% | 0.8 | 0.3 | 2.6 | 1.5 | 1.5 | 1.5 |
| | Melting point $T_r$ | | °C | 148 | 145 | 158 | 153 | 157 | 152 |
| | High-temperature peak | Vertex temperature $T_h$ | °C | 163 | 158 | 168 | 167 | 169 | 166 |
| | | Heat of fusion | J/g | 20 | 16 | 26 | 25 | 19 | 24 |
| | Resin intrinsic peak | Vertex temperature $T_l$ | °C | 139 | 137 | 145 | 142 | 152 | 137 |
| | | Heat of fusion | J/g | 50 | 52 | 54 | 54 | 61 | 38 |
| | Vertex temperature difference $T_h$-$T_l$ | | °C | 24 | 21 | 23 | 25 | 17 | 29 |
| | Expandable range | | °C | 155.0 - 157.5 | 151.5 - 153.5 | 160.5 - 161.5 | 158.0 - 159.5 | 160.5 - 162.0 | 158.0 - 159.5 |
| Molded article | Density | | kg/m$^3$ | 50 | 50 | 50 | 50 | 50 | 50 |
| | Moldable range | | MPa(G) | 0.28 - 0.32 | 0.28 - 0.32 | 0.31 - 0.32 | 0.30 - 0.32 | 0.34 - 0.36 | 0.30 - 0.32 |
| | Closed cell content | | % | 86 | 88 | 82 | 84 | 80 | 86 |
| | Compressive strength at 50% | | kPa | 420 | 430 | 360 | 380 | 430 | 350 |

[Table 16]

(Table 16)

| | | | Unit | Example 3-7 | Example 3-8 | Example 3-9 | Example 3-10 | Comparative Example 3-1 | Comparative Example 3-2 | Reference Example 3-1 |
|---|---|---|---|---|---|---|---|---|---|---|
| Resin particles | Resin composition A | Type | - | A3-1 | A3-2 | A3-3 | A3-1 | A3-1 | A3-1 | - |
| | | Mass ratio | mass% | 30 | 30 | 30 | 15 | 100 | 30 | - |
| | Resin B | Type | - | B3-4 | B3-1 | B3-1 | B3-1 | - | B3-5 | B3-1 |
| | | Mass ratio | mass% | 70 | 70 | 70 | 85 | - | 70 | 100 |
| | Melting point difference $Tm_A - Tm_B$ | | °C | 23 | 21 | 21 | 21 | - | 2 | - |
| | MFR difference $MFR_A - MFR_B$ | | g/10 min | 19 | 7 | 18 | 18 | - | 16 | - |
| | Flexural modulus difference $M_B - M_A$ | | MPa | -40 | -50 | -50 | 0 | - | 700 | - |
| | Ash content | | mass% | 1.5 | 1.5 | 6.1 | 0.8 | 4.8 | 1.5 | 0 |
| Expanded beads | Bulk density | | kg/m³ | 45 | 45 | 45 | 27 | 45 | 45 | 45 |
| | Average cell diameter | | μm | 65 | 65 | 45 | 80 | 25 | 55 | 110 |
| | Closed cell content | | % | 96 | 94 | 90 | 95 | 75 | 93 | 96 |
| | Ash content | | mass% | 1.5 | 1.5 | 6.1 | 0.8 | 0.5 | 1.5 | 0 |
| | Melting point Tr | | °C | 151 | 153 | 153 | 148 | 164 | 163 | 143 |
| | High-temperature peak | Vertex temperature $T_h$ | °C | 168 | 167 | 167 | 163 | 172 | 172 | 156 |
| | | Heat of fusion | J/g | 21 | 25 | 25 | 20 | 35 | 35 | 16 |
| | Resin intrinsic peak | Vertex temperature $T_l$ | °C | 139 | 142 | 142 | 139 | 161 | 161 | 137 |
| | | Heat of fusion | J/g | 50 | 54 | 54 | 50 | 50 | 60 | 59 |
| | Vertex temperature difference $T_h - T_l$ | | °C | 29 | 25 | 25 | 24 | 11 | 11 | 19 |
| | Expandable range | | °C | 158.0 - 160.0 | 151.5 - 153.5 | 151.5 - 153.5 | 155.0 - 157.5 | - | - | 149.5 - 150.5 |

EP 4 578 901 A1

64

| | | Unit | Example 3-7 | Example 3-8 | Example 3-9 | Example 3-10 | Comparative Example 3-1 | Comparative Example 3-2 | Reference Example 3-1 |
|---|---|---|---|---|---|---|---|---|---|
| Molded article | Density | kg/m$^3$ | 50 | 50 | 50 | 30 | 56 | 50 | 50 |
| | Moldable range | MPa(G) | 0.30 - 0.32 | 0.35 - 0.36 | 0.34 | 0.28 - 0.30 | None | None | 0.28 - 0.32 |
| | Closed cell content | % | 82 | 82 | 80 | 84 | - | - | 86 |
| | Compressive strength at 50% | kPa | 380 | 380 | 380 | 245 | - | - | 430 |

As shown in Tables 15 and 16, the polypropylene-based resin composition constituting the foamed layer in the expanded beads of Examples 3-1 to 3-10 contains a polypropylene-based resin and rubbery bodies containing the ethylene propylene-based rubber, and the rubbery bodies are dispersed in the polypropylene-based resin. Furthermore, the melting point $T_r$ of the expanded beads fall within the specific range mentioned above. Therefore, the expanded beads of Examples 3-1 to 3-10 have good in-mold moldability.

The molded articles that were obtained from the expanded beads produced by foaming the resin particles of Examples 3-1 to 3-10 exhibited good compression properties. Furthermore, a mottled pattern of relatively pale black (gray) and white was patterned to the molded article, thus the molded article resulted in a molded article having an excellent designability.

Among them, in particular, the expanded beads of Example 3-1 and Example 3-2, although containing the polypropylene-based resin composition a1 derived from ASR, have good in-mold moldability comparable to that of Reference Example 3-1 shown in Table 16, that is, the polypropylene-based resin expanded beads formed of a non-recycled polypropylene-based resin.

On the other hand, as shown in Table 16, the expanded beads of Comparative Example 3-1 contain no rubbery bodies including the ethylene propylene-based rubber, and the melting point $T_r$ of the expanded beads is out of the specific range mentioned above. Therefore, the expanded beads of Comparative Example 3-1 were incapable of providing a good molded article.

Furthermore, the melting point $T_r$ of the expanded beads of Comparative Example 3-2 is out of the specific range mentioned above. Therefore, the expanded beads of Comparative Example 3-2 were incapable of forming a good molded article.

<Embodiment 4>

(Polypropylene-based resin composition A)

Table 17 shows the properties and the like of the polypropylene-based resin composition A used in the production of the expanded beads of the present embodiment. The resin composition A4-1 shown in Table 17 is "PLC-A02" produced by Planic Co., Ltd., and the resin composition A4-2 is "ELVBP-10" produced by Isono Co., Ltd. The resin compositions A4-1 and A4-2 are both derived from post-consumer materials and are recycled polypropylene containing an ethylene propylene-based rubber. More specifically, the main component of the resin composition A4-1 is the polypropylene-based resin composition a1 recovered from ASR, and the resin composition A4-2 is the polypropylene-based resin composition a recovered from parts (more specifically, bumpers) of end-of-life automobiles.

The resin composition A4-1 and the resin composition A4-2 each are cylindrical pellets, and the average length of the pellets in the height direction (average length in the extrusion direction during the production of the pellet) is 3 mm, the pellet diameter is 3 mm, and the average mass of the pellets is 16 mg. In addition, the resin composition A4-1 and the resin composition A4-2 each contain an inorganic substance whose main component is talc. When the morphologies of the resin composition A4-1 and the resin composition A4-2 used in the present example were observed by the method described later, the resin composition A4-1 and the resin composition A4-2 each exhibited a morphology with a matrix of polypropylene-based resin and domains of rubbery bodies containing the ethylene propylene-based rubber.

[Table 17]

| (Table 17) Polypropylene-based resin composition A | | | |
|---|---|---|---|
| | Unit | A4-1 | A4-2 |
| Density | kg/m$^3$ | 930 | 990 |
| Carbon black amount | mass% | 0.4 | 0.7 |
| Ash content | mass% | 4.8 | 12.7 |
| Decane soluble fraction at 23°C | mass% | 12 | 11 |
| $D_{sol}$-$A_{insol}$ | g | 0.12 | 0.11 |
| Melting point $Tm_A$ | °C | 164 | 164 |
| Heat of fusion $H_A$ | J/g | 81 | 65 |
| Melt mass flow rate $MFR_A$ | g/10 min | 26 | 29 |
| Flexural modulus $M_A$ | MPa | 950 | 1090 |

(continued)

| (Table 17) Polypropylene-based resin composition A | | | |
|---|---|---|---|
| | Unit | A4-1 | A4-2 |
| $M_A/Tm_A$ | MPa/°C | 5.8 | 6.6 |

The methods of measuring the physical property values of the polypropylene-based resin composition A shown in Table 17 are the same as the methods of measuring the physical property values of the polypropylene-based resin composition A in Embodiment 1. Note that in the column "Decane-soluble fraction at 23°C" in Table 17, the values obtained by converting the amount of $D_{sol}$-$A_{insol}$ contained in resin composition A per 1 g of resin composition A into a percentage (unit: mass%) with respect to the mass of resin composition A were listed.

(Polypropylene-based resin B)

Table 18 shows the properties and the like of the polypropylene-based resin B used in the production of the expanded beads of the present embodiment.

[Table 18]

| (Table 18) Polypropylene-based resin B | | | | | |
|---|---|---|---|---|---|
| | Unit | B4-1 | B4-2 | B4-3 | B4-4 |
| Type of polypropylene-based resin | - | rPP | rPP | rPP | hPP |
| Density | kg/m³ | 900 | 900 | 900 | 900 |
| Ethylene component content | mass% | 1.1 | 2.0 | 3.4 | 0.0 |
| Ash content | mass% | 0 | 0 | 0 | 0 |
| Melting point $Tm_B$ | °C | 151 | 147 | 139 | 162 |
| Heat of fusion $H_B$ | J/g | 91 | 77 | 63 | 101 |
| Melt mass flow rate $MFR_B$ | g/10 min | 7 | 7 | 7 | 10 |
| Flexural modulus $M_B$ | MPa | 1200 | 1070 | 850 | 1650 |

The methods of measuring the physical property values of the polypropylene-based resin B shown in Table 18 are the same as the methods of measuring the physical property values of the polypropylene-based resin B in Embodiment 1.
Next, the configuration and producing method of the expanded beads of the present embodiment will be described.

(Example 4-1)

The resin composition A4-1, the resin B4-1, and a cell controlling agent were supplied into an extruder at a mass ratio shown in Table 19, and a mixture in molten state containing the resin composition A4-1 and the resin B4-1 was formed in the extruder. Note that zinc borate was used as the cell controlling agent. The addition amount of zinc borate was 500 ppm by mass with respect to the sum of the resin composition A4-1 and the resin B4-1.
Thereafter, the mixture in molten state was extruded into a strand shape from a small hole of a die provided downstream of the extruder. This extrudate in a strand shape was drawn, cooled, and then cut into an appropriate length with a pelletizer to obtain resin particles.
The resin particles thus obtained were expanded by direct foaming method. Specifically, first, 1 kg of resin particles were put into a container having an internal volume of 5 L together with 3 L of water as an aqueous medium. Next, 0.3 parts by mass of a dispersant per 100 parts by mass of the resin particles, and as dispersion aids, 0.02 parts by mass of sodium alkylbenzene sulfonate and 0.01 parts by mass of aluminum sulfate were added into the container to disperse in the aqueous medium. Kaolin was used as the dispersant.
Thereafter, carbon dioxide as a blowing agent was supplied into the sealed container while stirring the inside of the container, and the temperature in the container was raised to 155.5°C. The pressure in the container at this time was 2.1 MPa(G). Thereafter, the temperature in the container was adjusted to 156°C, and then this temperature was maintained for 15 minutes to impregnate the resin particles with the blowing agent. Thereafter, the container was opened and the contents were released to an atmosphere at an atmospheric pressure, thereby foaming the resin particles to obtain first-step expanded beads. These first-step expanded beads were dried for 24 hours in an atmosphere at a temperature of 23°C and a relative humidity of 50%.

Next, the first-step expanded beads were filled in a pressure-resistant container, and air was injected into the pressure-resistant container to thereby raise the pressure in the pressure-resistant container from the atmospheric pressure to 0.6 MPa(G) spending 24 hours. This pressure was maintained for 24 hours to impregnate the cells with air. Thereafter, the first-step expanded beads were taken out from the pressure-resistant container and were filled in a second-step expanding apparatus, then steam having a pressure of 0.15 MPa(G) was supplied to thereby further expand the first-step expanded beads. In this way, expanded beads of Example 4-1 were obtained.

(Example 4-2)

The method for producing the expanded beads of Example 4-2 is mostly the same as the method for producing the expanded beads of Example 4-1, except that the mass ratio between the resin composition A4-1 and the resin B4-1 was changed as shown in Table 19.

(Example 4-3)

The method for producing the expanded beads of Example 4-3 is mostly the same as the method for producing the expanded beads of Example 4-1, except that, as shown in Table 19, a polypropylene-based resin B4-2 was used as the resin B instead of the polypropylene-based resin B4-1.

(Example 4-4)

The method for producing the expanded beads of Example 4-4 is mostly the same as the method for producing the expanded beads of Example 4-1, except that, as shown in Table 19, a resin composition A4-2 was used as the resin composition A instead of the resin composition A4-1.

(Example 4-5)

The expanded beads of Example 4-5 are first-step expanded beads obtained mostly in the same manner as the method for producing the expanded beads of Example 4-1. The bulk density of the expanded beads of Example 4-5 is 45 kg/m$^3$.

(Comparative Example 4-1)

The expanded beads of Comparative Example 4-1 contain no resin B and are formed of the resin composition A4-1. The method for producing the expanded beads of Comparative Example 4-1 is mostly the same as the method for producing the expanded beads of Example 4-1, except that the resin B was not used and the resin composition A4-1 was used.

(Reference Example 4-1)

The expanded beads of Reference Example 4-1 contain no resin composition A, and are formed of the resin B4-1. The method for producing the expanded beads of Reference Example 4-1 is mostly the same as the method for producing the expanded beads of Example 4-1, except that the resin composition A was not used and only the resin B4-1 was used.

The resin particles thus obtained, expanded beads, and a molded article made by in-mold molding of the expanded beads were used to evaluate each evaluation item shown in Table 19. Among these evaluation items, evaluation methods of items that have not been evaluated in the already-described embodiments are shown below.

[Melting point $Tm_R$, flexural modulus $M_R$, melt mass flow rate $MFR_R$, and heat of fusion $H_R$ of polypropylene-based resin composition R constituting foamed layer]

The methods for measuring the melting point $Tm_R$, the flexural modulus $M_R$, the melt mass flow rate $MFR_R$, and the heat of fusion $H_R$ of the polypropylene-based resin composition R constituting the foamed layer are the same as the methods for measuring the melting point $Tm_A$, the flexural modulus $M_A$, the melt mass flow rate $MFR_A$, and the heat of fusion $H_A$ of the resin composition A described above, except that expanded beads are used instead of the resin composition A. That is, the melting point $Tm_R$, the flexural modulus $M_R$, and the melt mass flow rate $MFR_R$ of the polypropylene-based resin composition R listed in Table 19 are physical property values corresponding to the melting point Tm of the expanded beads, the flexural modulus and the melt mass flow rate of the polypropylene-based resin composition constituting the expanded beads in Embodiment 1, respectively.

Note that in the measurement of the flexural modulus $M_R$ of the polypropylene-based resin composition R, expanded beads were heat-pressed at 180°C to prepare a sheet having a thickness of 4 mm, and a test piece having a length of 80 mm $\times$ a width of 10 mm $\times$ a thickness of 4 mm cut out from the sheet was used to perform the measurement of the flexural modulus $M_R$.

In the measurement of the melt mass flow rate $MFR_R$ of the polypropylene-based resin composition R, first, the expanded beads were heat-pressed for 3 minutes at a temperature of 180°C and thereby performing defoaming treatment of the expanded beads to prepare a resin sheet made from a mixed resin constituting the expanded beads. A pellet sample obtained by cutting the resin sheet was used to perform the measurement of the melt mass flow rate $MFR_R$.

[Moldable range]

In the evaluation of the moldable range, an expanded beads molded article was produced by performing in-mold molding while varying the molding pressure during main heating in increments of 0.01 MPa from 0.32 MPa(G) to 0.44 MPa(G). The moldable range was then determined based on the surface property, fusion bondability and recoverability of the resultant molded article. Note that the specific method for producing the expanded beads molded article is the same as that in Embodiment 1.

Based on the evaluation made on the surface property, fusion bondability and recoverability of the molded article after conditioned, a range of the molding pressure at which the molded article that cleared all items of the after-mentioned evaluation criteria was molded (i.e., a molding pressure at which an acceptable molded article could be obtained) was determined as the moldable range. Note that the method of evaluating the surface property, fusion bondability, and recoverability of the expanded beads molded article is the same as that in Embodiment 1.

[Table 19]

(Table 19)

| | | | Unit | Example 4-1 | Example 4-2 | Example 4-3 | Example 4-4 | Example 4-5 | Comparative Example 4-1 | Comparative Example 4-2 | Reference Example 4-1 |
|---|---|---|---|---|---|---|---|---|---|---|---|
| Resin particles | Resin composition A | Type | - | A4-1 | A4-1 | A4-1 | A4-2 | A4-1 | A4-1 | A4-1 | - |
| | | Mass ratio | mass% | 35 | 50 | 35 | 35 | 35 | 100 | 35 | - |
| | Resin B | Type | - | B4-1 | B4-1 | B4-2 | B4-1 | B4-1 | - | B4-3 | B4-1 |
| | | Mass ratio | mass% | 65 | 50 | 65 | 65 | 65 | - | 65 | 100 |
| | Melting point difference $Tm_A$-$Tm_B$ | | °C | 13 | 13 | 17 | 13 | 13 | - | 25 | - |
| | Flexural modulus ratio $M_B/M_A$ | | - | 1.3 | 1.3 | 1.2 | 1.0 | 1.3 | - | 0.9 | - |
| | Sum of heat of fusion $H_A$+$H_B$ | | J/g | 172 | 172 | 158 | 156 | 172 | - | 144 | - |
| | Ratio of heat of fusion $H_B/H_A$ | | - | 1.12 | 1.12 | 0.95 | 0.88 | 1.12 | - | 0.78 | - |
| | MFR difference $MFR_A$-$MFR_B$ | | g/10 min | 19 | 19 | 19 | 22 | 19 | - | 19 | - |
| | Ash content | | mass% | 1.7 | 2.4 | 1.7 | 4.2 | 1.7 | 4.8 | 1.5 | 0 |
| Expanded beads | Bulk density | | kg/m$^3$ | 27 | 27 | 27 | 27 | 45 | 27 | 27 | 27 |
| | Average cell diameter | | μm | 50 | 40 | 50 | 50 | 65 | 30 | 45 | 110 |
| | Closed cell content | | % | 95 | 94 | 96 | 94 | 96 | 89 | 96 | 96 |
| | Ash content | | mass% | 1.7 | 2.4 | 1.7 | 4.2 | 1.7 | 4.8 | 1.5 | - |
| | $D_{sol}$-$A_{insol}$ | | g | 0.05 | 0.07 | 0.05 | 0.05 | 0.05 | 0.12 | 0.05 | - |
| | Decane soluble fraction at 23°C | | mass% | 5 | 7 | 5 | 5 | 5 | 12 | 5 | - |
| | Melting point $Tm_R$ | | °C | 159 | 162 | 157 | 159 | 159 | 164 | 157 | 151 |
| | Flexural modulus $M_R$ | | MPa | 1100 | 1050 | 990 | 1100 | 1100 | 950 | 850 | 1200 |
| | Melt mass flow rate $MFR_R$ | | g/10 min | 13 | 16 | 13 | 13 | 13 | 26 | 13 | 7 |
| | Heat of fusion $H_R$ | | J/g | 92 | 93 | 80 | 92 | 92 | 85 | 75 | 91 |
| | High-temperature peak | Vertex temperature $T_h$ | °C | 172 | 172 | 171 | 172 | 172 | 172 | 166 | 166 |
| | | Heat of fusion | J/g | 25 | 27 | 26 | 25 | 25 | 25 | 25 | 19 |

(continued)

| | | Unit | Example 4-1 | Example 4-2 | Example 4-3 | Example 4-4 | Example 4-5 | Comparative Example 4-1 | Comparative Example 4-2 | Reference Example 4-1 |
|---|---|---|---|---|---|---|---|---|---|---|
| Molded article | Density | kg/m³ | 30 | 30 | 30 | 30 | 50 | 30 | 30 | 30 |
| | Moldable range | MPa(G) | 0.36 - 0.40 | 0.38 - 0.42 | 0.36 - 0.40 | 0.38 - 0.42 | 0.38 - 0.42 | None | None | 0.38 - 0.42 |
| | Closed cell content | % | 85 | 84 | 86 | 85 | 80 | - | - | 86 |
| | Compressive strength at 50% | kPa | 236 | 228 | 228 | 230 | 430 | - | - | 297 |
| | Compressive strength at 50%/density | kPa/(kg/m³) | 7.9 | 7.6 | 7.6 | 7.7 | 8.6 | - | - | 9.9 |

71

As shown in Table 19, the polypropylene-based resin composition constituting the foamed layer of the expanded beads of Examples 4-1 to 4-5 contains a polypropylene-based resin and rubbery bodies containing the ethylene propylene-based rubber, and the rubbery bodies are dispersed in the polypropylene-based resin. The melting points $Tm_R$ of the polypropylene-based resin composition R constituting the foamed layer fall within the specific range mentioned above. Therefore, the expanded beads of Examples 4-1 to 4-5 have good in-mold moldability.

The resin composition A used in these examples is a polypropylene-based resin composition derived from a post-consumer material. The resin composition A has a melting point $Tm_A$ of 160°C or higher and a flexural modulus $M_A$ of 800 MPa or more and 1200 MPa or less. The resin B has a melting point $Tm_B$ of lower than 160°C, a flexural modulus $M_B$ of 900 MPa or more and 1400 MPa or less, and the ratio $M_B/M_A$ of the flexural modulus $M_B$ to the flexural modulus $M_A$ of 1 or more. The resin particles in Examples 4-1 to 4-5 are formed of a melt-kneaded product obtained by mixing such resin composition A and resin B at a mass ratio of the resin composition A : the resin B = 10 : 90 to 70 : 30. Therefore, expanded beads made by expanding such resin particles exhibited good compression properties.

On the other hand, the expanded beads of Comparative Example 4-1 include no rubbery bodies containing the ethylene propylene-based rubber, and the melting point $Tm_R$ of the polypropylene-based resin composition R is out of the specific range mentioned above. Therefore, the expanded beads of Comparative Example 4-1 were incapable of providing a good molded article.

<Embodiment 5>

(Polypropylene-based resin composition I, polypropylene-based resin B)

In the present embodiment, impact polypropylene as the polypropylene-based resin composition I and a propylene-based random copolymer as the polypropylene-based resin B were used to produce expanded beads. The impact polypropylene and the propylene-based random copolymer used in the present embodiment are as follows.

•Impact polypropylene

(1) Abbreviation "ICP1": polypropylene "PLC-A02" produced by Planic, weight average molecular weight (Mw) of 220,000, number average molecular weight (Mn) of 24,000, ethylene component of 26 mass%.
(2) Abbreviation "ICP2": block polypropylene "MK112" produced by Idemitsu Kosan Co., Ltd.
(3) Abbreviation "ICP3": block polypropylene "J762HP" produced by Prime Polymer Co., Ltd.
(4) Abbreviation "ICP4": decomposition raw material of ICP2 (which is obtained by adding 0.2 parts by mass of PERHEXA 25B produced by NOF CORPORATION into ICP2, followed by melt kneading once in an extruder and pelletization)
(5) Abbreviation "ICP5": block polypropylene "CPP050RP" produced by REEF Technology Co., Ltd., weight average molecular weight (Mw) of 265,000, number average molecular weight (Mn) of 46,000.

•Propylene-based random copolymer

(1) Abbreviation "r-PP1": random polypropylene produced by Prime Polymer Co., Ltd. (ethylene content: 2.5 mass%)
(2) Abbreviation "r-PP2": Ethylene-propylene-butene random copolymer resin (ethylene content: 0.9 mass%, butene content: 9.6 mass%), produced by Sinopec Shanghai Petrochemical Company Limited.

Table 20 shows the properties and the like of the impact polypropylene and the propylene-based random copolymer used in the production of the expanded beads of the present embodiment.

[Table 20]

(Table 20)

| | | Polypropylene-based resin composition I | | | | | Polypropylene-based resin B | |
|---|---|---|---|---|---|---|---|---|
| | | ICP1 | ICP2 | ICP3 | ICP4 | ICP5 | r-PP1 | r-PP2 |
| Manufacturer | | Planic | Idemitsu Kosan | Prime Polymer | - | REEF | Prime Polymer | Shanghai Petrochemical |
| Type | - | Impact PP | Impact PP | Impact PP | Impact PP | Impact PP | Random PP | Random PP |
| Melting point | °C | 164 | 159 | 164 | 159 | 164 | 142 | 140 |
| Heat of fusion | J/g | 85 | 89 | 89 | 89 | 86 | 65 | 72 |
| MFR | g/10 min | 24.5 | 2 | 13 | 100 | 4.1 | 7.7 | 7.5 |
| Flexural modulus | MPa | 1085 | 1150 | 1150 | 1140 | 1190 | 950 | 750 |
| CB amount | mass% | 0.4 | 0 | 0 | 0 | 0.3 | 0 | 0 |
| Ash content | mass% | 4.8 | 0 | 0 | 0 | 0.8 | 0 | 0 |

The methods of measuring physical property values shown in Table 20 are the same as the methods of measuring physical property values of the polypropylene-based resin composition A in Embodiment 1. Note that in Tables 20 and 21, carbon black is abbreviated as "CB". Also, in Table 21, the melting point of the impact polypropylene is abbreviated as $Tm_I$, the melting point of the propylene-based random copolymer is abbreviated as $Tm_B$, the melt mass flow rate of the impact polypropylene is abbreviated as $MFR_I$, and the melt mass flow rate of the propylene-based random copolymer is abbreviated as $MFR_B$.

Next, the configuration and producing method of the expanded beads of the present embodiment will be described.

(Examples 5-1 to 5-5, Comparative Examples 5-1 to 5-3, Reference Examples 5-1 and 5-2)

The impact polypropylene and the propylene-based random copolymer shown in Table 21 were supplied into an extruder at a blending ratio shown in Table 21. Furthermore, a cell controlling agent was supplied into the extruder, and a mixture in molten state containing the impact polypropylene and the propylene-based random copolymer was formed in the extruder. Note that zinc borate was used as the cell controlling agent. The addition amount of zinc borate was 1000 ppm by mass with respect to the sum of the impact polypropylene and the propylene-based random copolymer. In Example 5-4, Comparative Example 5-1, Comparative Example 5-2, Reference Example 5-1, and Reference Example 5-2, a talc masterbatch and/or a carbon black masterbatch with a base material of r-PP1 was added into the extruder to achieve the CB content and the ash content listed in Table 21.

Thereafter, the mixture in molten state was extruded into a strand shape from a small hole of a die provided downstream of the extruder. This extrudate in a strand shape was drawn, cooled, and then cut into an appropriate length with a pelletizer to obtain resin particles. The mass of the resin particles was approximately 1.0 mg.

The resin particles thus obtained were expanded by direct foaming method. Specifically, first, 1 kg of resin particles were put into an autoclave having an internal volume of 5 L together with 3 L of water as an aqueous medium. Next, 3 g of kaolin as a dispersant, and as dispersion aids, 0.04 g of sodium alkylbenzene sulfonate and 0.1 g of aluminum sulfate were added into the autoclave to disperse the resin particles in the aqueous medium.

Thereafter, carbon dioxide as a blowing agent was supplied into the autoclave while stirring the contents of the autoclave, and the temperature in the container was raised to the foaming temperature shown in Table 21. Note that the foaming temperature is a temperature at which the apparent density is minimum while the foaming pressure (back pressure in the autoclave) is fixed to 2.1 MPa and good in-mold moldability is maintained when dispersion medium release expansion is performed.

Thereafter, the temperature in the autoclave was maintained for 15 minutes, and thereby the blowing agent was impregnated into the resin particles, and the heat of fusion of the high-temperature peak was adjusted. Thereafter, the inside of the autoclave was pressurized with carbon dioxide, and the contents of the autoclave were released to an atmosphere at an atmospheric pressure while maintaining the foaming pressure shown in Table 21, whereby the resin particles were expanded. From the above, expanded beads of Examples 5-1 to 5-5, of Comparative Examples 5-1 to 5-3, and of Reference Examples 5-1 to 5-2 were obtained.

The resin particles thus obtained, expanded beads, and a molded article obtained by in-mold molding of the expanded beads were used to evaluate each evaluation item shown in Table 21. Among these evaluation items, evaluation methods for items that were not evaluated in Embodiment 1 are described below. Note that among the evaluation items shown in Table 21, the evaluation methods of the items that are the same as the items evaluated in Embodiment 1 are the same as the evaluation methods in Embodiment 1.

[Ash content and carbon black amount of polypropylene-based resin composition constituting the core layer]

The ash content of the polypropylene-based resin composition constituting the core layer was measured by the following method using a thermogravimetric analyzer ("TG/DTA7200" manufactured by Hitachi High-Tech Corporation) with a platinum sample pan (K-Y50-035 PTΦ5 × 5PAN).

First, 14 to 16 mg of resin particles or mini-pellets were prepared as a sample. The platinum sample pan containing no sample was placed on each of a reference balance and a measurement balance and zero point adjustment was carried out. Next, a precisely weighed sample was put on the platinum sample pan on the measurement balance. Thereafter, the sample was heated under a nitrogen atmosphere while continuously recording the weight with the balance, and a temperature of 40°C was maintained for 5 minutes. Thereafter, the sample was heated from 40°C to 500°C at a heating rate of 10°C/min and an organic component contained in the sample was thermally decomposed, thereby obtaining a residue made of inorganic components containing carbon black. The weight of this residue (hereinafter, this weight is referred to as "residue weight 1".) was measured.

Subsequently, the residue was heated from 500°C to 900°C under an air atmosphere and carbon black in the residue was oxidized and removed. Then, the weight of the residue after removal of the carbon black (hereinafter, this weight is referred to as "residue weight 2".) was measured. Using the weight of the sample, the residue weight 1 (unit: mg), and the residue weight 2 (unit: mg) obtained as described above, the CB amount (unit: wt%) was calculated based on the following equation (8), and the ash content (unit: wt%) was calculated using the equation (9). In the column "CB amount/ash content" in Table 21, the ratio of the CB amount to the ash content was listed.

$$\text{CB amount} = (\text{residue weight 1 - residue weight 2}) \div \text{weight of sample} \times 100 \text{ ...}$$

$$(8)$$

$$\text{Ash content} = \text{residue weight 2} \div \text{weight of sample} \times 100 \text{ ... (9)}$$

[Apparent density/Foaming pressure]

In the column "Apparent density/ foaming pressure" in Table 21, values of the apparent density of the expanded beads divided by the foaming pressure are listed. In this embodiment, the expandability of the expanded beads was evaluated based on the value of apparent density/foaming pressure. The expandability of expanded beads was evaluated on the basis of whether expanded beads having an apparent density of 80 kg/m³ or less and a closed cell content of 80% or more could be stably produced at a foaming pressure (back pressure in the sealed container during foaming) fixed constant (specifically, 2.1 MPa) during the production of the expanded beads. More specifically, it was determined that the smaller the ratio represented by the apparent density/foaming pressure of the expanded beads, the better the expandability.

[Lower limit fusion-bonding pressure, lower limit molding pressure, moldable range]

In the evaluation of the lower limit fusion-bonding pressure, the lower limit molding pressure, and the moldable range, a molded article was produced by performing in-mold molding while varying the molding pressure during main heating in increments of 0.01 MPa from 0.20 MPa(G) to 0.44 MPa(G), and the moldable range was determined based on the surface property, fusion bondability and recoverability of the resultant molded article.

A method for producing the molded article is as follows. First, expanded beads were filled in a mold by a cracking filling method. In this example, a mold having a rectangular parallelepiped molding cavity having an inner dimension of 300 mm in the longitudinal direction × 250 mm in the lateral direction × 50 mm in the thickness direction was used. The expanded beads were filled in the molding cavity in a state in which the mold was opened by 5 mm in the thickness direction (i.e., a cracking gap of 5 mm) from a state in which the mold was completely closed. After the completion of the filling, the mold was completely closed (i.e., the cracking amount of 10%). Thereafter, steam at any molding pressure within the above-mentioned range was supplied into the molding cavity to heat the expanded beads, and the expanded beads were secondarily expanded and fusion bonded to obtain an expanded beads molded article. The mold was cooled with water until the surface pressure of the expanded beads molded article in the mold reached 0.04 MPa(G), then the mold was opened and the expanded beads molded article was taken out from the mold. The resultant expanded beads molded article was aged for 12 hours in an atmosphere at atmospheric pressure and a temperature of 80°C.

Based on the evaluation made on the surface property, fusion bondability and recoverability of the molded article after conditioned, a range of the molding pressure at which the molded article that cleared all items of the after-mentioned evaluation criteria was molded (i.e., a molding pressure at which an acceptable molded article could be obtained) was determined as the moldable range. It can be determined that the wider the moldable range, the more excellent the in-mold moldability. In the moldable range, the highest molding pressure was taken as the upper limit molding pressure, and the lowest molding pressure was taken as the lower limit molding pressure. Furthermore, the lowest molding pressure within the molding pressures at which the fusion bondability was acceptable based on the evaluation criteria described later was taken as the lower limit fusion-bonding pressure. In addition, when there is no moldable range, molding is determined to be impossible, and a symbol "-" was entered in the column "Moldable range" in Table 21.

•Fusion bondability

The expanded beads molded article was fractured by bending, and the total number (C1) of the expanded beads present on the fracture surface and the number (C2) of the expanded beads fractured inside the expanded beads at the fracture surface were counted. Then, the ratio of the number C2 of the expanded beads fractured inside the expanded beads to the total number C1 of the expanded beads was calculated and expressed as a percentage, (i.e., C2/C1 × 100), and this value was taken as the material fracture ratio (unit: %). The above operation was performed five times, and the arithmetic mean value of the material fracture ratios of five times was calculated. Then, the fusion bondability was determined acceptable when the arithmetic mean value of the material fracture ratios was 90% or more.

•Surface appearance

A square of 100 mm × 100 mm was drawn at the central region of a skin surface on one side in the thickness direction of the expanded beads molded article, and a diagonal line was drawn from any one corner of the square. Then, the number of voids existing on the diagonal line, specifically the number of the gaps formed between the expanded bead and having a size of 1 mm × 1 mm or greater was counted. Then, the surface appearance was determined acceptable when the number of voids was less than 5 and there was no unevenness on the surface.

•Recoverability

In a plan view of the molded article viewed from the thickness direction, the thicknesses of the molded article at four positions (hereinafter, referred to as "corner") 10 mm inward from vertexes of a face, which is surrounded by vertical sides of 300 mm and horizontal sides of 250 mm, toward the central region of the said face, and the thickness of the molded article at the central part of the said face were each measured. Next, the ratio (unit: %) of the thickness of the central part to the thickness of the thickest corner among the four corners was calculated. The recoverability was determined acceptable when the thickness ratio thus obtained was 99% or more.

[Surface state at upper limit molding pressure]

In-mold molding was performed at the upper limit molding pressure within the moldable range described above to obtain a molded article. The surface state of the molded article was visually observed. In the evaluation of the surface state at the upper limit molding pressure, the state was determined to be good when the molded article had good surface appearance and no wrinkles on the surface. In addition, the state was determined to be wrinkled when five or more portions where wrinkles (recessed portions having a concave groove shape) were partially present in the expanded bead portion forming the surface of the molded article. Note that as described later, since there was no molding pressure to obtain a good molded article in Comparative Example 5-3, evaluation on the surface state at the upper limit molding pressure was not performed. Therefore, a symbol "-" was entered in the column "Surface state at upper limit molding pressure" in Comparative Example 5-3.

[Shrinkage ratio]

In-mold molding was performed at the lower limit molding pressure within the moldable range described above to obtain a molded article. This molded article was aged for 12 hours in an atmosphere at 80°C, then slowly cooled, and further aged for 6 hours in an atmosphere at 23°C to prepare a test specimen. Then, the length of the long side, that is, the longest side of the test specimen was measured. Using the length L (unit: mm) of the long side of the test specimen obtained as described above and the length Lm (unit: mm) of the long side of the molding cavity in the mold, the shrinkage ratio (unit: %) of the test specimen was calculated based on the following equation (12).

$$\text{Shrinkage ratio} = (Lm - L)/Lm \times 100 \ ... \ (12)$$

The above operation was performed on three test specimens, and the arithmetic mean value of the shrinkage ratios of the three test specimens was taken as the shrinkage ratio (unit: %) of the molded article. Note that since there was no molding pressure to obtain a good molded article in Comparative Example 5-3, the shrinkage ratio of the molded article was calculated using a molded article obtained by performing in-mold molding at a molding pressure of 0.44 MPa(G).

[Molded article density]

In-mold molding was performed at the lowest molding pressure within the moldable range mentioned above to obtain an expanded beads molded article. The mass (unit: g) of the expanded beads molded article was divided by the volume (unit: L) determined from the outer dimension of the molded article followed by unit conversion to calculate the density (unit: kg/m$^3$) of the molded article. Note that since there was no molding pressure to obtain a good molded article in Comparative Example 5-3, the shrinkage ratio of the molded article was calculated using a molded article obtained by performing in-mold molding at a molding pressure of 0.44 MPa(G).

[Closed cell content of molded article]

In-mold molding was performed at the lower limit molding pressure within the moldable range described above to obtain a molded article. The resultant molded article was left to stand for 10 days in a thermostatic chamber under conditions of an atmospheric pressure, a relative humidity of 50% and 23°C to be aged. Next, a sample of 25 × 25 × 30 mm was cut out from the said molded article. Using this sample, the closed cell content of the molded article was measured by the same method as the closed cell content of the expanded beads described above. Note that since there was no molding pressure to obtain a good molded article in Comparative Example 5-3, the closed cell content was not measured. Therefore, a symbol "-" was entered in the column "Closed cell content" of the molded article in Comparative Example 5-3.

[Table 21]

(Table 21)

| | | | Unit | Example 5-1 | Example 5-2 | Example 5-3 | Example 5-4 | Example 5-5 | Comparative Example 5-1 | Comparative Example 5-2 | Comparative Example 5-3 | Reference Example 5-1 | Reference Example 5-2 |
|---|---|---|---|---|---|---|---|---|---|---|---|---|---|
| Resin particles | Resin B | Type | - | r-PP1 | r-PP1 | r-PP1 | r-PP1 | r-PP2 | r-PP1 | r-PP1 | - | r-PP1 | r-PP1 |
| | | Blending ratio | mass% | 85 | 95 | 80 | 85 | 75 | 100 | 100 | - | 85 | 85 |
| | Resin composition I | Type | - | ICP1 | ICP1 | ICP1 | ICP3 | ICP5 | - | - | ICP1 | ICP2 | ICP4 |
| | | Blending ratio | mass% | 15 | 5 | 20 | 15 | 25 | - | - | 100 | 15 | 15 |
| | Difference in melting point $Tm_I$-$Tm_B$ | | °C | 21 | 21 | 21 | 23 | 24 | - | - | - | 17 | 23 |
| | MFR ratio $MFR_I$/$MFR_B$ | | - | 3.2 | 3.2 | 3.2 | 1.7 | 1.8 | - | - | - | 0.3 | 13.0 |
| | MFR | | g/10 min | 11.9 | 10.4 | 13.4 | 10.2 | 6.6 | 9.7 | 9.7 | 24.6 | 8.5 | 23.2 |
| | CB amount | | mass% | 0.06 | 0.02 | 0.08 | 0.06 | 0.07 | 0.06 | 0.06 | 0.40 | 0.06 | 0.06 |
| | Ash content | | mass% | 0.72 | 0.24 | 0.96 | 0.72 | 0.21 | 0.72 | 0.72 | 4.80 | 0.72 | 0.72 |
| | CB amount/ash content | | - | 0.08 | 0.08 | 0.08 | 0.08 | 0.31 | 0.08 | 0.08 | 0.08 | 0.08 | 0.08 |
| Expanded beads | Foaming temperature | | °C | 157 | 152 | 158 | 156 | 161 | 150 | 152 | 168 | 157 | 157 |
| | Foaming pressure | | MPa | 2.1 | 2.1 | 2.1 | 2.1 | 2.1 | 2.1 | 2.1 | 2.1 | 2.1 | 2.1 |
| | Heat of fusion at high-temperature | | J/g | 21 | 16 | 22 | 21 | 21 | 16 | 11 | 28 | 18 | 19 |
| | Apparent density | | kg/m$^3$ | 69 | 76 | 68 | 68 | 75 | 94 | 70 | 72 | 87 | 53 |
| | Apparent density/ Foaming pressure | | (kg/m$^3$)/ MPa | 33 | 36 | 33 | 32 | 36 | 45 | 33 | 34 | 42 | 25 |
| | Closed cell content | | % | 95 | 95 | 94 | 94 | 94 | 96 | 95 | 80 | 81 | 95 |

EP 4 578 901 A1

(continued)

| | | Unit | Example 5-1 | Example 5-2 | Example 5-3 | Example 5-4 | Example 5-5 | Comparative Example 5-1 | Comparative Example 5-2 | Comparative Example 5-3 | Reference Example 5-1 | Reference Example 5-2 |
|---|---|---|---|---|---|---|---|---|---|---|---|---|
| Molded article | Lower limit fusion-bonding pressure | MPa(G) | 0.26 | 0.26 | 0.26 | 0.28 | 0.26 | 0.28 | 0.20 | 0.44 < | 0.30 | 0.22 |
| | Lower limit molding pressure | MPa(G) | 0.30 | 0.30 | 0.30 | 0.30 | 0.32 | 0.28 | 0.20 | - | 0.30 | 0.24 |
| | Moldable range | MPa | 0.05 | 0.05 | 0.04 | 0.05 | 0.05 | 0.04 | 0.01 | - | 0.01 | 0.02 |
| | Surface state at upper limit molding pressure | - | Good | Good | Good | Good | Good | Good | Wrinkled | - | Wrinkled | Wrinkled |
| | Shrinkage ratio | % | 2 | 2 | 2 | 2 | 2 | 2 | 3 | 10 | 3 | 3 |
| | Molded article density | kg/m³ | 48 | 52 | 47 | 47 | 52 | 64 | 48 | 42 | 60 | 20 |
| | Closed cell content | % | 88 | 88 | 85 | 87 | 88 | 88 | 86 | - | 65 | 74 |

As shown in Table 21, in the method for producing expanded beads of Examples 5-1 to 5-5, the core layer is formed of a molten mixture of an impact polypropylene containing the ethylene propylene-based rubber and having a melting point $Tm_I$ of 160°C or higher, and a propylene-based random copolymer having a melting point $Tm_B$ of 125°C or higher and lower than 160°C. The mass ratio between the impact polypropylene and the propylene-based random copolymer in the core layer is the impact polypropylene : the propylene-based random copolymer = 2: 98 to 70 : 30. Therefore, the expanded beads of these Examples have excellent in-mold moldability. Examples 5-1 to 5-5 were capable of the producing of expanded beads at a higher foaming temperature as compared with Comparative Example 5-1 not containing impact polypropylene. Furthermore, the apparent density of the expanded beads and the apparent density of the molded article of Examples 5-1 to 5-5 were lower than those of Comparative Example 5-1, and the expandability was improved.

Comparative Example 5-2 is formed of the same propylene-based random copolymer as that in Comparative Example 5-1, and the resin particles are expanded at a higher foaming temperature than in Comparative Example 5-1. As a result, although the expandability was improved and expanded beads having a small apparent density could be obtained, the in-mold moldability of the expanded beads deteriorated, the shrinkage of the resultant expanded beads molded article was increased, and wrinkles appeared on the surface.

The resin particles of Comparative Example 5-3 have a core layer formed of impact polypropylene and containing no propylene-based random copolymer. In Comparative Example 5-3, although the foaming temperature could be increased, the in-mold moldability of the resultant expanded beads deteriorated, and a good molded article could not be obtained even when the molding pressure was changed.

The resin particles of Reference Example 5-1 contain impact polypropylene having a relatively low melting point. The resin particles of Reference Example 5-1 exhibited inferior expandability compared to the resin particles of Examples 5-1 to 5-5. The expanded beads of Reference Example 5-1 exhibited inferior in-mold moldability compared to the expanded beads of Examples 5-1 to 5-5.

The resin particles of Reference Example 5-2 contain impact polypropylene having a relatively low melting point. The expanded beads of Reference Example 5-2 exhibited inferior in-mold moldability compared to the expanded beads of Examples 5-1 to 5-5.

Although the specific aspects of the expanded beads and the method for producing the same according to the present invention have been described above based on Examples, the specific aspects of the expanded beads and the method for producing the same according to the present invention are not limited to the aspects of Examples, and the configuration can be appropriately changed as long as the gist of the invention is not impaired.

For example, from another point of view, the expanded bead and the molded article according to Embodiment 1 can be comprehended as inventions of the expanded bead according to the following [1-1] to [1-4] and an invention of the molded article according to the following [1-5].

[1-1] A polypropylene-based resin expanded bead including a foamed layer constituted by a polypropylene-based resin composition,

wherein the polypropylene-based resin composition constituting the foamed layer contains a polypropylene-based resin and rubbery bodies containing an ethylene propylene-based rubber,
the rubbery bodies are dispersed in the polypropylene-based resin,
an amount of an acetone-insoluble fraction contained in an n-decane extract of the expanded bead is 0.02 g or more and 0.10 g or less per 1 g of the expanded beads,
a melting point Tm of the expanded bead is 140°C or higher and 162°C or lower, and
a difference Tm-Tc between the melting point Tm of the expanded bead and a crystallization temperature Tc of the expanded bead is 38°C or less.

[1-2] The polypropylene-based resin expanded bead according to [1-1], wherein an average diameter of the rubbery bodies is 0.1 $\mu$m or more and 2 $\mu$m or less.
[1-3] The polypropylene-based resin expanded bead according to [1-1] or [1-2], wherein the polypropylene-based resin composition constituting the foamed layer contains: a polypropylene-based resin derived from recycled polypropylene; and an ethylene propylene-based rubber.
[1-4] The polypropylene-based resin expanded bead according to any one of [1-1] to [1-3], wherein a flexural modulus of the polypropylene-based resin composition constituting the foamed layer is 800 MPa or more and 1300 MPa or less.
[1-5] A polypropylene-based resin expanded beads molded article made by in-mold molding of the polypropylene-based resin expanded beads according to any one of [1-1] to [1-4].

The aspects shown in [1-1] to [1-5] can provide polypropylene-based resin expanded beads capable of molding an expanded beads molded article having good in-mold moldability and a low rate of increase in compressive stress with increasing compressive strain, and a polypropylene-based resin expanded beads molded article made by in-mold molding of the expanded beads. When the polypropylene-based resin expanded beads molded article is used for applications such as vehicle members, the molded article desirably has good shock absorption performance. Since the aspects shown in [1-1] to [1-5] can obtain a molded article having a low rate of increase in compressive stress with increasing strain when compressive strain is applied, a molded article having good shock absorption performance can be provided.

In addition, from another point of view, the expanded bead according to Embodiment 2 can be comprehended as inventions of the expanded bead according to the following [2-1] to [2-10].

[2-1] A polypropylene-based resin expanded bead including a foamed layer constituted by a polypropylene-based resin composition,

wherein the polypropylene-based resin composition contains an ethylene propylene-based rubber,
the expanded bead has a crystal structure such that a first endothermic peak Pa having a largest peak area and a second endothermic peak Pb next to the first endothermic peak Pa on a higher temperature side of the first endothermic peak Pa appear on a DSC curve obtained when the expanded bead is heated from 23°C to 200°C at a heating rate of 10°C/min,
a closed cell content of the expanded beads is 85% or more,
a vertex temperature Tb of the second endothermic peak Pb is 158°C or higher,
a difference Tb-Ta between the vertex temperature Tb of the second endothermic peak Pb and a vertex temperature Ta of the first endothermic peak Pa is 15°C or more and 30°C or less, and
a ratio hb/ha of a peak height hb of the second endothermic peak Pb to a peak height ha of the first endothermic peak Pa is 1.2 or more and 2.8 or less.

[2-2] The polypropylene-based resin expanded bead according to [2-1], wherein the polypropylene-based resin composition is a molten mixture of a polypropylene-based resin B and a polypropylene-based resin composition I containing an ethylene propylene-based rubber.

[2-3] The polypropylene-based resin expanded bead according to [2-2], wherein the polypropylene-based resin composition I has a morphology with a matrix of a polypropylene-based resin and domains of rubbery bodies containing the ethylene propylene-based rubber, and the polypropylene-based resin B is a copolymer of propylene with ethylene and/or butene.

[2-4] The polypropylene-based resin expanded bead according to [2-2] or [2-3], wherein a mass ratio between the polypropylene-based resin composition I and the polypropylene-based resin B is the resin composition I : the resin B = 3 : 97 to 40 : 60.

[2-5] The polypropylene-based resin expanded bead according to any one of [2-2] to [2-4], wherein the polypropylene-based resin composition I is derived from a post-consumer material.

[2-6] The polypropylene-based resin expanded bead according to any one of [2-2] to [2-5], wherein a flexural modulus of the polypropylene-based resin B is 900 MPa or more and 1500 MPa or less.

[2-7] The polypropylene-based resin expanded bead according to any one of [2-1] to [2-6], wherein a melting end temperature is 160°C or higher in a second DSC curve obtained when the expanded bead is heated from 23°C to 200°C at a heating rate of 10°C/min, then cooled to 23°C at a cooling rate of 10°C/min, and again heated from 23°C to 200°C at a heating rate of 10°C/min.

[2-8] The polypropylene-based resin expanded bead according to any one of [2-1] to [2-7], wherein a full width at half maximum of the first endothermic peak Pa is 15°C or more and less than 25°C.

[2-9] The polypropylene-based resin expanded bead according to any one of [2-1] to [2-8], wherein an average cell diameter of the expanded beads is 40 $\mu$m or more and 100 $\mu$m or less.

[2-10] The polypropylene-based resin expanded bead according to any one of [2-1] to [2-9], wherein an apparent density of the expanded beads is 10 kg/m$^3$ or more and 80 kg/m$^{3.}$

The aspects shown in [2-1] to [2-10] can provide polypropylene-based resin expanded beads having good in-mold moldability and a good balance of rigidity to in-mold molding pressure even when the expanded beads are formed of the polypropylene-based resin composition containing the ethylene propylene-based rubber.

In addition, from another point of view, the method for producing expanded beads according to Embodiment 3 and the resin composition A used as a raw material for the expanded beads can be comprehended as inventions of the method for producing expanded beads according to the following [3-1] to [3-5] and inventions of the resin raw material for expanded beads according to the following [3-6] to [3-9], respectively.

[3-1] A method for producing expanded beads, in which resin particles constituted by a polypropylene-based resin composition and impregnated with a blowing agent, which are dispersed in an aqueous medium in a container, are released together with the aqueous medium from the container to an atmosphere of lower pressure than a pressure in the container, thereby foaming the resin particles to obtain expanded beads,

wherein the resin particles are formed of a molten mixture of a polypropylene-based resin composition A containing a polypropylene-based resin composition a derived from an automobile member and having a melting point of 160°C or higher and a polypropylene-based resin B having a melting point of 130°C or higher, and a mass ratio between the polypropylene-based resin composition A and the polypropylene-based resin B in the resin particles is the polypropylene-based resin composition A : the polypropylene-based resin B = 3 : 97 to 60 : 40.

[3-2] The method for producing expanded beads according to [3-1], wherein a difference $Tm_A$-$Tm_B$ between a melting point $Tm_A$ of the polypropylene-based resin composition A and a melting point $Tm_B$ of the polypropylene-based resin B is 10°C or more and 30°C or less.

[3-3] The method for producing expanded beads according to [3-1] or [3-2], wherein the melt flow rate of the polypropylene-based resin composition A is 10 g/10 min or more and 40 g/10 min or less as measured at a temperature of 230°C under a load of 2.16 kg.

[3-4] The method for producing expanded beads according to any one of [3-1] to [3-3], wherein an ash content of the polypropylene-based resin composition A is 1 mass% or more and 25 mass% or less.

[3-5] The method for producing expanded beads according to any one of [3-1] to [3-4], wherein the polypropylene-based resin composition A exhibits a morphology with a matrix of a polypropylene-based resin and domains of rubber-like bodies containing an ethylene propylene-based rubber, and has a flexural modulus of 800 MPa or more and 1200 MPa or less.

[3-6] A resin raw material for expanded beads, which is used for producing expanded beads,

wherein the resin raw material is a polypropylene-based resin composition containing a polypropylene-based resin composition a derived from an automobile member, and
a melting point of the polypropylene-based resin composition is 160°C or higher.

[3-7] The resin raw material for expanded beads according to [3-6], wherein a melt flow rate of the resin raw material is 10 g/10 min or more and 40 g/10 min or less, as measured at a temperature of 230°C under a load of 2.16 kg.

[3-8] The resin raw material for expanded beads according to [3-6] or [3-7], wherein an ash content of the resin raw material is 1 mass% or more and 25 mass% or less.

[3-9] The resin raw material for expanded beads according to any one of [3-6] to [3-8], wherein the resin raw material exhibits a morphology with a matrix of a polypropylene-based resin and domains of rubbery bodies containing an ethylene propylene-based rubber, and a flexural modulus of the resin raw material is 800 MPa or more and 1200 MPa or less.

The aspects shown in [3-1] to [3-9] can be provide a method for producing expanded beads capable of effectively utilizing a resin component derived from an automobile member and capable of producing expanded beads having good in-mold moldability, and a resin raw material for expanded beads used in the method for producing expanded beads.
In addition, from another point of view, the expanded bead and the method for producing the same according to Embodiment 4 can be comprehended as inventions of the method for producing expanded beads according to the following [4-1] to [4-7] and inventions of expanded bead according to the following [4-8] to [4-10].

[4-1] A method for producing expanded beads, in which polypropylene-based resin particles are expanded to obtain expanded beads,

wherein the resin particles are formed of a molten mixture of a polypropylene-based resin composition A containing a polypropylene-based resin composition derived from a post-consumer material and having a melting point $Tm_A$ of 160°C or higher and a flexural modulus $M_A$ of 800 MPa or more and 1200 MPa or less, and a polypropylene-based resin B having a melting point $Tm_B$ of less than 160°C and a flexural modulus $M_B$ of 900 MPa or more and 1400 MPa or less,

a ratio $M_B/M_A$ of the flexural modulus $M_B$ to the flexural modulus $M_A$ is 1 or more, and
a mass ratio between the polypropylene-based resin composition A and the polypropylene-based resin B in the resin particles is the polypropylene-based resin composition A : the polypropylene-based resin B = 10 : 90 to 70 : 30.

[4-2] The method for producing expanded beads according to [4-1], wherein the resin particles are constituted by a polypropylene-based resin composition r having a melting point $Tm_r$ of 150°C or higher and 162°C or lower and a flexural modulus $M_r$ of 900 MPa or higher and 1300 MPa or lower.

[4-3] The method for producing expanded beads according to [4-1] or [4-2], wherein a difference $Tm_A$-$Tm_B$ between a melting point $Tm_A$ of the polypropylene-based resin composition A and a melting point $Tm_B$ of the polypropylene-based resin B is 5°C or more and 20°C or less.

[4-4] The method for producing expanded beads according to any one of [4-1] to [4-3], wherein a melt mass flow rate of the polypropylene-based resin composition A is 10 g/10 min or more and 40 g/10 min or less as measured at a temperature of 230°C under a load of 2.16 kg.

[4-5] The method for producing expanded beads according to any one of [4-1] to [4-4], wherein the polypropylene-based resin composition A exhibits a morphology with a matrix of a polypropylene-based resin and domains of rubbery bodies containing an ethylene propylene-based rubber.

[4-6] The method for producing expanded beads according to any one of [4-1] to [4-5], wherein a bulk density of the expanded beads is 10 kg/m$^3$ or more and 200 kg/m$^3$ or less.

[4-7] The method for producing expanded beads according to any one of [4-1] to [4-6], wherein a closed cell content of the expanded beads is 90% or more.

[4-8] An expanded bead constituted by a polypropylene-based resin composition R containing a polypropylene-based resin composition derived from a post-consumer material, and having a melting point $Tm_R$ of 150°C or higher and 162°C or lower, and a flexural modulus $M_R$ of 900 MPa or more and 1300 MPa or less.

[4-9] The expanded bead according to [4-8], wherein a bulk density of the expanded beads is 10 kg/m$^3$ or more and 200 kg/m$^3$ or less.

[4-10] The expanded bead according to [4-8] or [4-9], wherein a closed cell content of the expanded beads is 90% or more.

The aspects shown in [4-1] to [4-10] can provide expanded beads that make it possible to effectively utilize a resin component derived from a post-consumer material, have a good in-mold moldability, and make it possible to obtain an expanded beads molded article having excellent compressive strength, and a method for producing the expanded beads.

In addition, from another point of view, the method for producing expanded beads according to Embodiment 5 can be comprehended as inventions of the method for producing expanded beads according to the following [5-1] to [5-4] .

[5-1] A method for producing polypropylene-based resin expanded beads, in which polypropylene-based resin particles containing a blowing agent, which are dispersed in a dispersion medium in a sealed container, are released together with the dispersion medium from the sealed container to a region at a pressure lower than a pressure in the container to foam the polypropylene-based resin particles,

wherein a polypropylene-based resin composition constituting the polypropylene-based resin particles is a molten mixture obtained by kneading at least one kind of propylene-based random copolymers selected from the group consisting of an ethylene-propylene random copolymer and an ethylene-propylene-butene random copolymer, and impact polypropylene having a morphology with a matrix of a polypropylene-based resin and domains of rubbery bodies containing an ethylene propylene-based rubber,
a mass ratio between a blending amount of the propylene-based random copolymer and a blending amount of the impact polypropylene satisfies a relationship of the propylene-based random copolymer : the impact polypropylene = 55 : 45 to 98 : 2,
a melting point d (unit: °C) of the propylene-based random copolymer and a melting point c (unit: °C) of the impact polypropylene satisfy expressions (I) and (II) set forth below:

$$150 \ (°C) < c < 170 \ (°C) \ ... \ (I)$$

$$5 \ (°C) \leq c\text{-}d \leq 35 \ (°C) \ ... \ (II),$$

and
a melt mass flow rate f (unit: g/10 min) of the polypropylene-based random copolymer as measured under conditions of a temperature of 230°C and a load of 2.16 kg and a melt mass flow rate e (unit: g/10 min) of the impact polypropylene as measured under conditions of a temperature of 230°C and a load of 2.16 kg satisfy the expressions (III), (IV) and (V) set forth below:

$$3 \ (\text{g/10 min}) \leq e \ ... \ (\text{III})$$

$$0.3 \leq e/f \leq 8 \ ... \ (\text{IV})$$

$$3 \ (\text{g/10 min}) \leq f \leq 10 \ (\text{g/10 min}) \ ... \ (\text{V}).$$

[5-2] The method for producing polypropylene-based resin expanded beads according to [5-1], wherein a melt mass flow rate of the polypropylene-based resin composition constituting the expanded beads is 5 g/10 min or more and 20 g/10 min or less as measured under conditions of a temperature of 230°C and a load of 2.16 kg.

[5-3] The method for producing polypropylene-based resin expanded beads according to [5-1] or [5-2], wherein a flexural modulus of the impact polypropylene is 800 MPa or more and 1200 MPa or less.

[5-4] The method for producing polypropylene-based resin expanded beads according to any one of [5-1] to [5-3], wherein a ratio $M_I/M_B$ of a flexural modulus $M_I$ of the impact polypropylene to a flexural modulus $M_B$ of the propylene-based random copolymer is more than 1 and 2 or less.

The aspects shown in [5-1] to [5-4] can provide a method for producing expanded beads excellent in expandability when expanded beads are produced from resin particles, and also excellent in moldability when the resultant expanded beads are used for in-mold molding.

**Claims**

1. A polypropylene-based resin expanded bead including a foamed layer constituted by a polypropylene-based resin composition,

   wherein the polypropylene-based resin composition contains a polypropylene-based resin and rubbery bodies containing an ethylene propylene-based rubber,
   the rubbery bodies are dispersed in the polypropylene-based resin, and
   a melting point Tm of the expanded bead is 130°C or higher and 162°C or lower.

2. The polypropylene-based resin expanded bead according to claim 1, wherein an amount of an acetone-insoluble fraction contained in an n-decane extract of the expanded bead is 0.02 g or more and 0.10 g or less per 1 g of the expanded beads,

   a melting point Tm of the expanded bead is 140°C or higher and 162°C or lower, and
   a difference Tm-Tc between the melting point Tm of the expanded bead and a crystallization temperature Tc of the expanded bead is 38°C or less.

3. The polypropylene-based resin expanded bead according to claim 1 or 2, wherein the rubbery bodies have an average diameter of 0.1 $\mu$m or more and 2 $\mu$m or less.

4. The polypropylene-based resin expanded bead according to any one of claims 1 to 3, wherein the polypropylene-based resin composition constituting the foamed layer contains: a polypropylene-based resin derived from recycled polypropylene; and an ethylene propylene-based rubber.

5. The polypropylene-based resin expanded bead according to any one of claims 1 to 4, wherein the polypropylene-based resin composition constituting the foamed layer has a flexural modulus of 800 MPa or more and 1300 MPa or less.

6. The polypropylene-based resin expanded bead according to any one of claims 1 to 5, wherein the expanded bead has a crystal structure such that a first endothermic peak Pa having a largest peak area and a second endothermic peak Pb next to the first endothermic peak Pa on a higher temperature side of the first endothermic peak Pa appear on a DSC curve obtained when the expanded bead is heated from 23°C to 200°C at a heating rate of 10°C/min,

a closed cell content of the expanded bead is 85% or more,
a vertex temperature Tb of the second endothermic peak Pb is 158°C or higher,
a difference Tb-Ta between the vertex temperature Tb of the second endothermic peak Pb and a vertex temperature Ta of the first endothermic peak Pa is 15°C or more and 30°C or less, and
a ratio hb/ha of a peak height hb of the second endothermic peak Pb to a peak height ha of the first endothermic peak Pa is 1.2 or more and 2.8 or less.

7. A method for producing polypropylene-based resin expanded beads, in which polypropylene-based resin particles each having a core layer are expanded to obtain polypropylene-based resin expanded beads each having a foamed layer,

wherein the core layer is formed of a molten mixture of a polypropylene-based resin composition containing an ethylene propylene-based rubber and having a melting point of 160°C or higher and a polypropylene-based resin having a melting point of 125°C or higher and lower than 160°C, and
a mass ratio between the polypropylene-based resin composition and the polypropylene-based resin in the core layer is the polypropylene-based resin composition : the polypropylene-based resin = 2 : 98 to 70 : 30.

8. The method for producing polypropylene-based resin expanded beads according to claim 7, wherein the polypropylene-based resin has a melting point of 130°C or higher and lower than 160°C.

9. The method for producing polypropylene-based resin expanded beads according to claim 7 or 8, wherein the polypropylene-based resin composition is impact polypropylene.

10. The method for producing polypropylene-based resin expanded beads according to any one of claims 7 to 9, wherein a difference $Tm_I - Tm_B$ between a melting point $Tm_I$ of the polypropylene-based resin composition and a melting point $Tm_B$ of the polypropylene-based resin is 5°C or more and 35°C or less.

11. The method for producing polypropylene-based resin expanded beads according to any one of claims 7 to 10, wherein the polypropylene-based resin composition has a melt mass flow rate $MFR_I$ of 3 g/10 min or more and 40 g/10 min or less as measured under conditions of a temperature of 230°C and a load of 2.16 kg.

12. The method for producing polypropylene-based resin expanded beads according to any one of claims 7 to 11, wherein the polypropylene-based resin composition has a flexural modulus of 800 MPa or more and 1200 MPa or less.

13. The method for producing polypropylene-based resin expanded beads according to any one of claims 7 to 12, wherein the polypropylene-based resin composition contains: a polypropylene-based resin derived from recycled polypropylene; and an ethylene propylene-based rubber.

14. The method for producing polypropylene-based resin expanded beads according to any one of claims 7 to 13, wherein the resin particles impregnated with a blowing agent, which are dispersed in an aqueous medium in a container, are released together with the aqueous medium from the container to an atmosphere of a lower pressure than a pressure in the container, thereby foaming the resin particles to obtain the expanded beads.

15. The method for producing polypropylene-based resin expanded beads according to any one of claims 7 to 14, wherein a difference $Tm_I - Tm_B$ between a melting point $Tm_I$ of the polypropylene-based resin composition and a melting point $Tm_B$ of the polypropylene-based resin is 5°C or more and 35°C or less,

a melt mass flow rate $MFR_I$ of the polypropylene-based resin composition is 3 g/10 min or more as measured under conditions of a temperature of 230°C and a load of 2.16 kg,
a melt mass flow rate $MFR_B$ of the polypropylene-based resin is 3 g/10 min or more and 10 g/10 min or less as measured under conditions of a temperature of 230°C and a load of 2.16 kg, and
a ratio $MFR_I/MFR_B$ of the melt mass flow rate $MFR_I$ of the polypropylene-based resin composition to the melt mass flow rate $MFR_B$ of the polypropylene-based resin is 0.3 or more and 8 or less.

FIG. 1

FIG. 2

FIG. 3

FIG. 4

FIG. 5

EP 4 578 901 A1

## INTERNATIONAL SEARCH REPORT

| International application No. |
|---|
| **PCT/JP2023/036097** |

**A. CLASSIFICATION OF SUBJECT MATTER**

*C08J 9/16*(2006.01)i; *C08J 9/18*(2006.01)i
FI: C08J9/16 CES; C08J9/18 CES

According to International Patent Classification (IPC) or to both national classification and IPC

**B. FIELDS SEARCHED**

Minimum documentation searched (classification system followed by classification symbols)

C08J9/16; C08J9/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-126914 A (KANEKA CORP) 11 June 2009 (2009-06-11) claims, examples | 1 |
| X | JP 2005-23302 A (JSP CORP) 27 January 2005 (2005-01-27) claims, paragraphs [0002], [0017]-[0033], [0043]-[0057], [0076], [0092]-[0096], examples | 1, 3-4, 6 |
| Y | | 2, 5, 7-15 |
| Y | JP 2005-325179 A (JSP CORP) 24 November 2005 (2005-11-24) claims, paragraphs [0074]-[0075], examples | 2, 5, 7-15 |
| Y | WO 2016/060162 A1 (KANEKA CORP) 21 April 2016 (2016-04-21) claims, paragraph [0011], examples | 7-15 |
| Y | JP 2017-19980 A (JSP CORP) 26 January 2017 (2017-01-26) claims, paragraph [0031], examples | 5, 9, 12 |
| Y | WO 2010/050509 A1 (PRIME POLYMER CO., LTD.) 06 May 2010 (2010-05-06) claims, examples | 9 |

☑ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 November 2023** | **12 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/036097**

### C.    DOCUMENTS CONSIDERED TO BE RELEVANT

| Category* | Citation of document, with indication, where appropriate, of the relevant passages | Relevant to claim No. |
|---|---|---|
| Y | JP 2020-152781 A (PRIME POLYMER CO., LTD.) 24 September 2020 (2020-09-24) claims, paragraphs [0020]-[0055], examples | 9 |

Form PCT/ISA/210 (second sheet) (January 2015)

### INTERNATIONAL SEARCH REPORT
**Information on patent family members**

International application No.

**PCT/JP2023/036097**

| Patent document cited in search report | | | Publication date (day/month/year) | Patent family member(s) | Publication date (day/month/year) |
|---|---|---|---|---|---|
| JP | 2009-126914 | A | 11 June 2009 | (Family: none) | |
| JP | 2005-23302 | A | 27 January 2005 | US 2004/0254254 A1 claims, paragraphs [0005], [0024]-[0033], [0058]-[0067], [0071]-[0074], examples | |
| JP | 2005-325179 | A | 24 November 2005 | (Family: none) | |
| WO | 2016/060162 | A1 | 21 April 2016 | US 2017/0218158 A1 claims, paragraph [0034], examples | |
| JP | 2017-19980 | A | 26 January 2017 | US 2018/0215891 A1 claims, paragraph [0107], examples | |
| WO | 2010/050509 | A1 | 06 May 2010 | US 2011/0206922 A1 claims, examples | |
| JP | 2020-152781 | A | 24 September 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018122299 A
- JP 6609877 B
- JP 6627142 B
- JP 6762071 B
- JP 3711472 B
- JP 2004058032 A
- JP 2008178846 A

**Non-patent literature cited in the description**

- 11.2.3 2.3.4 Propylene/ethylene copolymer. Polymer Analysis Handbook. Kinokuniya Co., Ltd., January 1995, 615-616
- 11.2.3 2.3.5 Propylene/butene copolymer. Kinokuniya Co Ltd, 1995, 618-619